# EUROPEAN PATENT APPLICATION

(11) **EP 4 780 083 A1**
(43) Date of publication of application: **22.07.2026**
(21) Application number: 23951723.8
(22) Date of filing: 11.09.2023
(51) Int. Cl.: H04W 52/02

(54) **RECEIVER WAKE-UP METHOD, APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: RGTH
(86) International application number: PCT/CN2023/118057
(87) International publication number: WO 2025/054776

(57) **Abstract**

The present application relates to the field of energy saving, and discloses a receiver wake-up method, an apparatus, a device, a medium, and a program product. The method is executed by an electronic device, the electronic device has a first receiver and a main transceiver, and the working energy consumption of the first receiver is less than that of the main transceiver. The method comprises: receiving a first energy saving signal, wherein the first energy saving signal is used for indicating whether to wake up a first receiver, and receiving a second energy saving signal, wherein the second energy saving signal is used for indicating whether to wake up a main transceiver. According to the method, by receiving the first energy saving signal and the second energy saving signal, when it indicates that the first receiver is to be waked up before the main transceiver is to be waked up, compared with methods in which first receivers are always kept awake, the method reduces the power consumption of the electronic device.

## Description

### TECHNICAL FIELD

The present application relates to the field of power saving, and in particular, to a wake-up method for a receiver, an apparatus, a device, a medium, and a program product.

### BACKGROUND

With the continuous evolution of wireless communication technology, Internet of Things (IoT) technology is being applied to all aspects of production and life.

Different scenarios impose different requirements on the power consumption and size of IoT devices, so electronic devices used in IoT often face the challenge of excessive power consumption during communication.

### SUMMARY

The present application provides a wake-up method for a receiver, an apparatus, a device, a medium, and a program product, with the technical solution including at least the following aspects.

According to one aspect of embodiments of the present application, a wake-up method for a receiver is provided. The method is performed by an electronic device, the electronic device having a first receiver and a main transceiver, with operating power consumption of the first receiver lower than operating power consumption of the main transceiver. The method includes:
receiving a first power-saving signal, the first power-saving signal being used to indicate whether to wake up the first receiver; and
receiving a second power-saving signal, the second power-saving signal being used to indicate whether to wake up the main transceiver.

According to another aspect of the embodiments of the present application, a wake-up method for a receiver is provided. The method is performed by an electronic device, the electronic device having a first receiver. The method includes:
receiving a first power-saving signal, the first power-saving signal being used to indicate whether to wake up the first receiver.

According to yet another aspect of the embodiments of the present application, an information transmission method is provided. The method is performed by an electronic device, and the electronic device having a first receiver and a main transceiver, with operating power consumption of the first receiver lower than operating power consumption of the main transceiver. The method includes:
in response to a case where the first receiver is in a wake-up state, receiving, through the first receiver, first information;
where the first information is used for communication between the electronic device and a wireless network.

According to still yet another aspect of the embodiments of the present application, a wake-up method for a receiver is provided. The method is performed by a network device. The method includes:
transmitting a first power-saving signal, the first power-saving signal being used to indicate whether to wake up a first receiver; and
transmitting a second power-saving signal, the second power-saving signal being used to indicate whether to wake up a main transceiver.
where an electronic device has the first receiver and the main transceiver, with operating power consumption of the first receiver lower than operating power consumption of the main transceiver.

According to still yet another aspect of the embodiments of the present application, a wake-up method for a receiver is provided. The method is performed by a network device. The method includes:
transmitting a first power-saving signal, the first power-saving signal being used to indicate whether to wake up a first receiver;
where an electronic device has the first receiver.

According to still yet another aspect of the embodiments of the present application, an information transmission method is provided. The method is performed by a network device. The method includes:
in response to a case where a first receiver is in a wake-up state, transmitting first information to the first receiver;
where an electronic device has the first receiver and a main transceiver, with operating power consumption of the first receiver lower than operating power consumption of the main transceiver, and the first information is used for communication between the electronic device and a wireless network.

According to still yet another aspect of the embodiments of the present application, an electronic apparatus is provided. The apparatus has a first receiver and a main transceiver, with operating power consumption of the first receiver lower than operating power consumption of the main transceiver. The apparatus includes:
a first receiving module, configured to receive a first power-saving signal, the first power-saving signal being used to indicate whether to wake up the first receiver; and
a second receiving module, configured to receive a second power-saving signal, the second power-saving signal being used to indicate whether to wake up the main transceiver.

According to still yet another aspect of the embodiments of the present application, an electronic apparatus is provided. The apparatus has a first receiver. The apparatus includes:
a first receiving module, configured to receive a first power-saving signal, the first power-saving signal being used to indicate whether to wake up the first receiver.

According to still yet another aspect of the embodiments of the present application, an electronic apparatus is provided. The apparatus has a first receiver and a main transceiver, with operating power consumption of the first receiver lower than operating power consumption of the main transceiver. The apparatus includes:
a first receiving module, configured to, in response to a case where the first receiver is in a wake-up state, receive first information through the first receiver;
where the first information is used for communication between the electronic apparatus and a wireless network.

According to still yet another aspect of the embodiments of the present application, a network apparatus is provided. The apparatus includes:
a first transmitting module, configured to transmit a first power-saving signal, the first power-saving signal being used to indicate whether to wake up a first receiver; and
a second transmitting module, configured to transmit a second power-saving signal, the second power-saving signal being used to indicate whether to wake up a main transceiver.
where an electronic apparatus has the first receiver and the main transceiver, with operating power consumption of the first receiver lower than operating power consumption of the main transceiver.

According to still yet another aspect of the embodiments of the present application, a network apparatus is provided. The apparatus includes:
a first transmitting module, configured to transmit a first power-saving signal, the first power-saving signal being used to indicate whether to wake up a first receiver;
where an electronic apparatus has the first receiver.

According to still yet another aspect of the embodiments of the present application, a network apparatus is provided. The apparatus includes:
a first transmitting module, configured to, in response to a case where a first receiver is in a wake-up state, transmit first information to the first receiver;
where an electronic apparatus has the first receiver and a main transceiver, with operating power consumption of the first receiver lower than operating power consumption of the main transceiver, and the first information is used for communication between the electronic apparatus and a wireless network.

According to still yet another aspect of the embodiments of the present application, an electronic device is provided. The electronic device includes:
a processor;
a transceiver connected to the processor; and
a memory for storing executable instructions for the processor;
where the processor is configured to load and execute the executable instructions to implement the wake-up method for the receiver or the information transmission method as described in the various aspects above.

According to still yet another aspect of the embodiments of the present application, a network device is provided. The network device includes:
a processor;
a transceiver connected to the processor; and
a memory for storing executable instructions for the processor;
where the processor is configured to load and execute the executable instructions to implement the wake-up method for the receiver or the information transmission method as described in the various aspects above.

According to still yet another aspect of the embodiments of the present application, a chip is provided, the chip including a programmable logic circuit and/or program instructions. The chip, when running, is configured to implement the wake-up method for the receiver or the information transmission method as described in the various aspects above.

According to still yet another aspect of the embodiments of the present application, a computer-readable storage medium is provided, the computer-readable storage medium having stored at least one program. The at least one program is loaded and executed by a processor to implement the wake-up method for the receiver or the information transmission method as described in the various aspects above.

According to still yet another aspect of the embodiments of the present application, a computer program product or computer program is provided, the computer program product or computer program including computer instructions stored in a computer-readable storage medium. A processor retrieves the computer instructions from the computer-readable storage medium, and the processor executes the computer instructions to implement the wake-up method for the receiver or the information transmission method as described in the various aspects above.

The technical solutions provided in the embodiments of the present application may encompass the following beneficial effects that:
in a case where it is indicated to wake up the first receiver first and then wake up the main transceiver, the power consumption of the electronic device is reduced by receiving a first power-saving signal, the first power-saving signal being used to indicate whether to wake up a first receiver, and receiving a second power-saving signal, the second power-saving signal being used to indicate whether to wake up a main transceiver, compared to always maintaining the first receiver in a wake-up state.

### BRIEF DESCRIPTION OF THE DRAWINGS

To more clearly illustrate the technical solutions in the embodiments of the present application, the accompanying drawings used in the description of the embodiments will be briefly introduced below. Obviously, the accompanying drawings described below are only some embodiments of the present application. For those skilled in the art, other drawings can be obtained based on these drawings without creative effort.
FIG. 1 illustrates a schematic diagram of a zero-power communication system provided in the related technology;
FIG. 2 illustrates a schematic diagram of radio frequency energy harvesting provided in the related technology;
FIG. 3 illustrates a schematic diagram of a backscatter communication process provided in the related technology;
FIG. 4 illustrates a schematic diagram of resistive load modulation provided in the related technology;
FIG. 5 illustrates a schematic diagram of encoding methods provided in the related technology;
FIG. 6 illustrates a schematic diagram of a communication process of a zero-power IoT device provided in an exemplary embodiment of the present application;
FIG. 7 illustrates a schematic diagram of a receiver system provided in the related technology;
FIG. 8 illustrates a flowchart of a wake-up method for a receiver provided in an exemplary embodiment of the present application;
FIG. 9 illustrates a schematic diagram of receiving a first power-saving signal provided in an exemplary embodiment of the present application;
FIG. 10 illustrates a flowchart of a wake-up method for a receiver provided in an exemplary embodiment of the present application;
FIG. 11 illustrates a flowchart of a turn-off method for a receiver provided in an exemplary embodiment of the present application;
FIG. 12 illustrates a flowchart of a turn-off method for a receiver provided in an exemplary embodiment of the present application;
FIG. 13 illustrates a flowchart of a wake-up method for a receiver provided in an exemplary embodiment of the present application;
FIG. 14 illustrates a flowchart of a wake-up method for a receiver provided in an exemplary embodiment of the present application;
FIG. 15 illustrates a flowchart of a wake-up method for a receiver provided in an exemplary embodiment of the present application;
FIG. 16 illustrates a flowchart of a wake-up method for a receiver provided in an exemplary embodiment of the present application;
FIG. 17 illustrates a flowchart of a wake-up method for a receiver provided in an exemplary embodiment of the present application;
FIG. 18 illustrates a flowchart of a wake-up method for a receiver provided in an exemplary embodiment of the present application;
FIG. 19 illustrates a flowchart of an information transmission method provided in an exemplary embodiment of the present application;
FIG. 20 illustrates a flowchart of an information transmission method provided in an exemplary embodiment of the present application;
FIG. 21 illustrates a flowchart of an information transmission method provided in an exemplary embodiment of the present application;
FIG. 22 illustrates a flowchart of an information transmission method provided in an exemplary embodiment of the present application;
FIG. 23 illustrates a block diagram of an electronic apparatus provided in an exemplary embodiment of the present application;
FIG. 24 illustrates a block diagram of a network apparatus provided in an exemplary embodiment of the present application;
FIG. 25 illustrates a block diagram of an electronic apparatus provided in an exemplary embodiment of the present application;
FIG. 26 illustrates a block diagram of a network apparatus provided in an exemplary embodiment of the present application;
FIG. 27 illustrates a block diagram of an electronic apparatus provided in an exemplary embodiment of the present application;
FIG. 28 illustrates a block diagram of a network apparatus provided in an exemplary embodiment of the present application;
FIG. 29 illustrates a schematic diagram of the structure of an electronic device provided in an exemplary embodiment of the present application;
FIG. 30 illustrates a schematic diagram of the structure of an electronic device provided in an exemplary embodiment of the present application; and
FIG. 31 illustrates a schematic diagram of the structure of a network device provided in an exemplary embodiment of the present application.

### DETAILED DESCRIPTION

To make the objectives, technical solutions, and advantages of the present application clearer, the implementations of the present application will be described in further detail below with reference to the accompanying drawings. Exemplary embodiments will now be described in detail, examples of which are illustrated in the accompanying drawings. When the following description refers to the accompanying drawings, unless otherwise indicated, the same numbers in different drawings represent the same or similar elements. The implementations described in the following exemplary embodiments do not represent all implementations consistent with the present application. Rather, they are merely examples of apparatuses/devices and methods consistent with some aspects of the present application as detailed in the appended claims.

The terms used in the present application are for the purpose of describing specific embodiments only and are not intended to limit the present application. The singular forms "a/an," "the," and "this/that" used in the present application and the appended claims are also intended to include the plural forms, unless the context clearly indicates otherwise. It should also be understood that the term "and/or" as used herein refers to and includes any or all possible combinations of one or more associated listed items.

It should be understood that although the terms such as first, second, and third, may be used in the present application to describe various pieces of information, such information should not be limited to these terms. These terms are only used to distinguish pieces of information of the same type from one another. For example, without departing from the scope of the present application, first information may also be referred to as second information, and similarly, the second information may also be referred to as the first information. Depending on the context, the word "if" as used here can be interpreted as "when," "at the time when," or "in response to determination."

The technical solutions described in some embodiments of the present application may be applied to various communication systems, such as: a global system for mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (WiFi), a 5th-generation (5G) system, a cellular IoT system, and a cellular passive IoT system, and may also be applied to subsequent evolution systems of 5G NR systems, as well as 6th-generation (6G) and subsequent evolution systems.

It should be understood that in some embodiments of the present application, "5G" may also be referred to as "5G NR" or "NR."

It should be understood that in the description of the embodiments of the present application, the term "corresponding" may indicate that there is a direct or indirect correspondence between the two, or that there is an association between the two, or that there is a relationship such as indicating and being indicated, or configuring and being configured.

In the embodiments of the present application, "pre-defined" may be implemented by pre-storing corresponding codes, tables or other methods capable of indicating relevant information in devices (e.g., including a terminal device and a network device). The present application does not limit its specific implementation method. For example, pre-defined may refer to what is defined in a protocol.

In the embodiments of the present application, "protocol" may refer to standard protocols in the field of communications, for example, including an LTE protocol, an NR protocol and relevant protocols applicable to future communication systems, and the present application is not limited thereto.

An electronic device involved in the embodiments of the present application may be an active device. The active device refers to a device that has its own power supply and is capable of actively generating and transmitting signals, such as a mobile phone, a computer, a smartwatch, a smart bracelet, or the like.

The electronic device may alternatively be a passive device. The passive device refers to a device that does not require a power supply or is capable of operating by receiving energy from other devices, which may be called a zero-power device, a zero-power terminal, a low-power device, a low-power terminal, or the like.

The electronic device may alternatively be a device that obtains energy from an environment, which may be called an ambient power-enabled IoT device.

The electronic device may alternatively be a device deployed in a fixed location, which may be called a zero-power station, a low-power station, or the like.

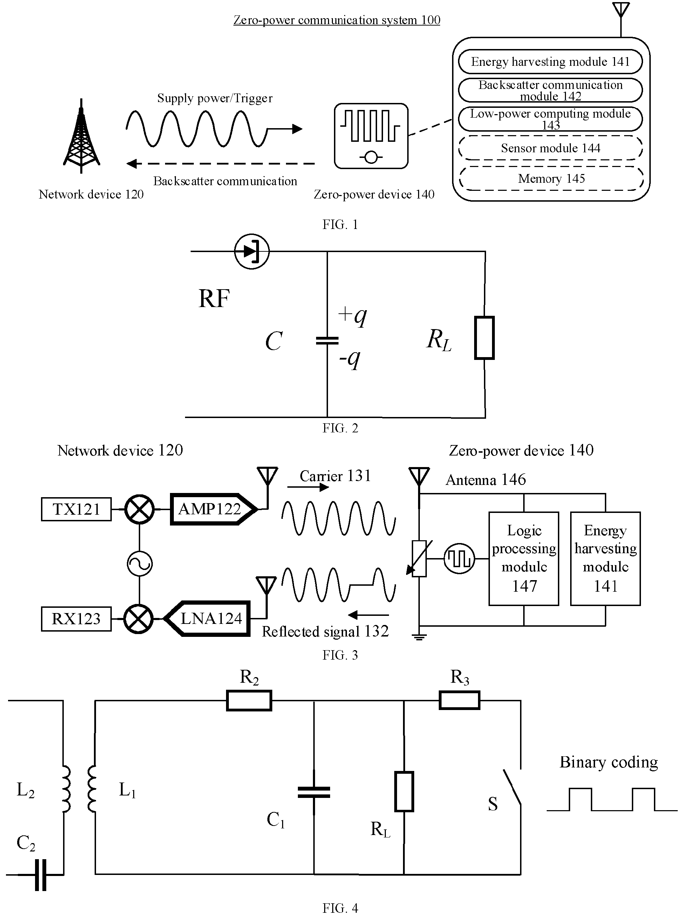

FIG. 1 illustrates a schematic diagram of a zero-power communication system 100 provided in the related technology, and the zero-power communication system 100 includes a network device 120 and a zero-power device 140.

The network device 120 is configured to transmit a wireless power supply signal and a downlink communication signal to the zero-power device 140, and receive a backscatter signal from the zero-power device 140. The zero-power device 140, also known as an ambient power-enabled Internet of Things (Ambient IoT) device, includes an energy harvesting module 141, a backscatter communication module 142, and a low-power computing module 143. The energy harvesting module 141 may harvest the energy carried by radio waves (wireless signals) in space to drive the low-power computing module 143 of the zero-power device 140 and to implement backscatter communication. After obtaining power, the zero-power device 140 may receive a control signal from the network device 120 and transmit data to the network device 120 based on back scattering according to the control signal. The data transmitted may come from the data stored in the zero-power device 140 itself, such as identification or pre-written information (e.g., production date, brand, and manufacturer of a product).

The zero-power device 140 may also include a sensor module 144 and a memory 145. The sensor module 144 may include various sensors, and the zero-power device 140 may report pieces of data collected by the various sensors based on the zero-power mechanism. The memory 145 is configured to store some pieces of basic information (such as item identification) or to acquire sensor data, such as ambient temperature and humidity.

The zero-power device 140 itself does not require batteries. Moreover, by using the low-power computing module 143, the zero-power device 140 may perform simple operations such as simple signal demodulation, decoding or encoding, and modulation. Therefore, the zero-power modules require only minimal hardware design, enabling the zero-power device 140 to be very low-cost and very small in size.

Network devices 120 include, but are not limited to: cellular network devices, such as 5G/6G network devices and base station devices, and WiFi/WLAN network devices, such as access points (APs), routers, and mobile access points, where the mobile access point is, for example, a mobile phone.

Zero-power devices 140 include, but are not limited to: handheld devices, wearable devices, in-vehicle devices, and IoT devices. The zero-power devices 140 may be at least one of: mobile phones, tablets, e-book readers, laptops, desktop computers, televisions, game consoles, augmented reality (AR) terminals, virtual reality (VR) terminals, mixed reality (MR) terminals, wearable apparatuses, gamepads, electronic tags, or controllers.

Next, the key technologies of zero-power communication will be introduced.

### • Radio Frequency Power Harvesting

FIG. 2 illustrates a schematic diagram of radio frequency energy harvesting provided in the related technology. The radio frequency (RF) energy harvesting operates on the principle of electromagnetic induction, in which through electromagnetic induction, a radio frequency module, connected to a capacitor C and a load resistor R_{L} maintained in parallel, is used to accomplish the harvesting of electromagnetic wave energy in space, to obtain the energy required to drive the zero-power device, such as for driving a low-power demodulation module, a modulation module, a sensor, and a memory reader. Therefore, the zero-power device does not require traditional batteries.

### • Backscatter Communication

FIG. 3 illustrates a schematic diagram of a backscatter communication process provided in the related technology. The zero-power device 140 receives a radio signal carrier 131 transmitted by a transmitting module (Transmit, TX for short) 121 of the network device 120 using an amplifier (AMP) 122, modulates the radio signal carrier 131, loads the information to be transmitted using a logic processing module 147, and harvests radio frequency energy using an energy harvesting module 141. The zero-power device 140 uses an antenna 146 to radiate a reflected signal 132 after modulation. This information transmission process is referred to as backscatter communication. A receiving module (Receive, RX for short) 123 of the network device 120 receives the reflected signal 132 after modulation using a low-noise amplifier (LNA) 124. Back scattering and load modulation functions are inseparable. By adjusting and controlling the circuit parameters of the oscillation circuit of the zero-power device 140 in accordance with the rhythm of a data stream, the load modulation enables parameters such as the magnitude of the impedance of an electronic tag to be changed accordingly, thereby completing the modulation process.

The load modulation techniques mainly include resistive load modulation and capacitive load modulation. FIG. 4 illustrates a schematic diagram of resistive load modulation provided in the related technology. In the resistive load modulation, the load resistor R_{L} is connected in parallel with a third resistor R₃. A switch S, controlled by binary coding, is switched on or off, and switching the third resistor R₃ on and off will cause a change in the voltage across the circuit. The load resistor R_{L} remains in a parallel connection with a first capacitor C₁, the load resistor R_{L} remains in a series connection with a second resistor R₂, and the second resistor R₂ remains in a series connection with a first inductor L₁. The first inductor L₁ is coupled to a second inductor L₂, and the second inductor L₂ remains in a series connection with a second capacitor C₂. It is possible to implement amplitude shift keying (ASK) modulation, that is, to implement the modulation and transmission of signals by adjusting the magnitude of the amplitude of the backscatter signal of the zero-power device. Similarly, in the capacitive load modulation, the circuit resonant frequency may be changed by switching the capacitors on and off, implementing frequency shift keying (FSK), that is, to implement the modulation and transmission of signals by adjusting the operating frequency of the backscatter signal of the zero-power device.

The zero-power device modulates incoming wave signals using the load modulation, thus implementing backscatter communication process. The zero-power device has significant advantages: it does not actively transmit signals, thus no complex radio frequency links such as a power amplifier (PA) and a radio frequency filter are required; it does not need to actively generate high-frequency signals, thus no high-frequency crystal oscillators are required; and by using backscatter communication, the signal transmission does not consume the power of the zero-power device itself.

### • Extremely Low-Power Active Transmission Technology

The zero-power device may also use extremely low-power active transmission technology. Unlike back scattering, when using the extremely low-power active transmission technology for data transmission, the zero-power device needs to use a relatively simple and low-power oscillator to generate a radio frequency carrier and then modulate information to be transmitted onto the radio frequency carrier. Based on current research, the power consumption of extremely low-power active transmitters may be as low as hundreds of microwatts, thus implementing ultra-low-power data transmission.

Next, encoding methods for zero-power communication will be introduced.

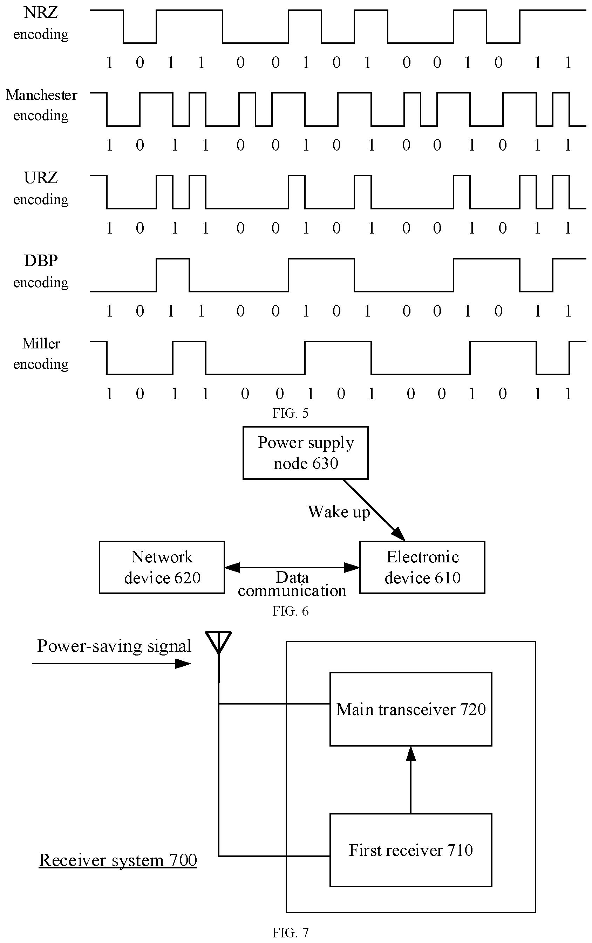

FIG. 5 illustrates a schematic diagram of encoding methods provided in the related technology. For the data transmitted by electronic tags, different forms of codes may be used to represent binary "1" and binary "0." Radio frequency identification (RFID) systems generally use one of the following encoding methods: non-return-to-zero (NRZ) encoding, Manchester encoding, unipolar return-to-zero (URZ) encoding, differential binary phase (DBP) encoding, Miller encoding, and differential encoding. That is, different pulse signals may be used to represent 0 and 1.
- NRZ encoding: the non-return-to-zero encoding uses a high level to represent binary "1" and a low level to represent binary "0." FIG. 5 illustrates a schematic diagram of the level of binary data 101100101001011 encoded using the NRZ method.
- Manchester encoding: Manchester encoding is also known as split-phase coding. In Manchester encoding, binary values are represented by the level change (rising or falling) over half a bit period within the bit length. A negative transition over half a bit period represents binary "1," and a positive transition over half the bit period represents binary "0." A data transmission error arises when multiple electronic tags transmit data bits with different values simultaneously, and the received rising and falling edges cancel each other out, resulting in an uninterrupted carrier signal throughout the entire bit length. Within the bit length of Manchester encoding, there cannot be a state that remains unchanged. A reader can use this error to determine an exact location where a collision occurred. Manchester encoding is helpful in detecting errors in data transmission and is commonly used for data transmission from electronic tags to readers when using carrier load modulation or backscatter modulation. FIG. 5 illustrates a schematic diagram of the level of binary data 101100101001011 encoded using the Manchester method.
- URZ encoding: the unipolar return-to-zero encoding uses a high level in the first half of the bit period to represent binary "1," and a low level signal that lasts for the entire bit period represents binary "1." FIG. 5 illustrates a schematic diagram of the level of binary data 101100101001011 encoded using the URZ method.
- DBP encoding: in the differential binary phase encoding, any edge in half a bit period represents binary "0," and the absence of an edge represents binary "1." In addition, the level is inverted at the beginning of each bit period, so bit beat recovery is relatively straightforward for a receiver. FIG. 5 illustrates a schematic diagram of the level of binary data 101100101001011 encoded using the DBP method.
- Miller encoding: in Miller encoding, any edge in half a bit period represents binary "1," and a constant level maintained throughout the next bit period represents binary "0." A level transition occurs at the beginning of the bit period, so bit beat recovery is relatively straightforward for a receiver. FIG. 5 illustrates a schematic diagram of the level of binary data 101100101001011 encoded using the Miller method.
- Differential coding: in differential coding, each binary "1" to be transmitted will lead to a change in the signal level, and for binary "0," the signal level remains unchanged.

Next, the classification of zero-power devices will be introduced.

Based on energy sources and usage methods of zero-power devices, the zero-power devices may be classified into the following types:

### • Passive Zero-Power Device

The zero-power device does not need to be arranged with a built-in battery. When approaching a network device, the zero-power device is within a near-field range formed by an antenna radiation of the network device. For example, the network device is a reader of a radio frequency identification (RFID) system. Therefore, an antenna of the zero-power device generates an induced current through electromagnetic induction, and the induced current drives a low-power chip circuit of the zero-power device, thereby accomplishing operations such as signal demodulation of a forward link and signal modulation of a backward link. For backscatter links, the zero-power device may transmit signals using back scattering or extremely low-power active transmission methods. The passive zero-power device does not require a built-in battery to drive either the forward link or the backward link, making it a truly zero-power device. The passive zero-power device does not require batteries, so its radio frequency and baseband circuits are all very simple. For example, an LNA, a PA, a crystal oscillator, an analog-to-digital converter (ADC), and other components are not required, enabling the passive zero-power device to have a lot of advantages, such as small size, light weight, very low price, and long service life.

### • Semi-Passive Zero-Power Device

The semi-passive zero-power device does not need to be arranged with a conventional battery but uses a radio frequency energy harvesting module to harvest energy of radio waves and stores the harvested power in an energy storage unit, such as a capacitor. Once obtaining the energy, the energy storage unit may drive a low-power chip circuit of the zero-power device, thereby accomplishing operations such as signal demodulation of a forward link and signal modulation of a backward link. For backscatter links, the zero-power device may transmit signals using back scattering or extremely low-power active transmission methods.

The semi-passive zero-power device does not require a built-in battery to drive either the forward link or the backward link. The energy stored in the capacitor used in operation comes from the radio energy harvested by the radio frequency energy harvesting module, making it also a truly zero-power device. The semi-passive zero-power device inherits a lot of advantages of the passive zero-power device, such as small size, light weight, very low price, and long service life.

### • Active Zero-Power Device

Zero-power devices used in some scenarios may be active zero-power devices, and this type of zero-power devices may be arranged with built-in batteries. The battery is used to power a low-power chip circuit in the zero-power device, thereby accomplishing operations such as signal demodulation of a forward link and signal modulation of a backward link. However, for backscatter links, the zero-power device may transmit signals using back scattering or extremely low-power active transmission methods. Therefore, the zero power consumption of the active zero-power device is mainly reflected in the fact that signal transmission of the backward link does not consume the power of the zero-power device itself, but uses back scattering. In the active zero-power device, the built-in battery powers the RFID chip, extending the reading/writing distance of a tag and improving communication reliability. Therefore, the active zero-power device may be applied in some scenarios with relatively high requirements for communication distance, reading latency, and other factors.

Next, the classification of zero-power devices based on transmitter type will be introduced.

### (1) Zero-Power Device Based on Back Scattering

This type of zero-power devices uses back scattering, as described above, for uplink data transmission. These zero-power devices do not have an active transmitter for active transmission but only have a transmitter for back scattering. Therefore, when these zero-power devices transmit uplink data, a network device is required to provide a carrier. These zero-power devices then perform back scattering based on the carrier to accomplish the uplink data transmission.

### (2) Zero-Power Device Based on Active Transmitter

This type of zero-power devices uses active transmitters with active transmission capabilities for uplink data transmission. Therefore, when transmitting uplink data, these zero-power devices may transmit uplink data using their own active transmitters without requiring a network device to provide a carrier. Active transmitters suitable for these zero-power devices may be, for example, ultra-low-power ASK transmitters or ultra-low-power FSK transmitters. Based on current implementations, these transmitters may have an overall power consumption reduced to 400 to 600 microwatts when transmitting a 100-microwatt signal.

### (3) Zero-Power Device Featuring Both Back Scattering and Active Transmitter

This type of zero-power devices may support both back scattering and active transmitters. The zero-power devices may determine whether to use back scattering or active transmitters for active transmission according to different situations (such as different power levels or different available ambient energy sources) or based on the scheduling of network devices.

Next, cellular IoT will be introduced.

The cellular IoT is booming, for example, the 3rd generation partnership project (3GPP) has standardized IoT technologies such as narrowband-Internet of Things (NB-IoT), machine-type communications (MTC), and RedCap. However, many IoT communication requirements in various scenarios remain unmet, as described below.

### • Harsh Communication Environment

Certain IoT scenarios may face extreme environments, such as high temperature, extremely low temperature, high humidity, high pressure, high radiation, or high-speed movement. Examples include ultra-high voltage substations, high-speed train track monitoring, environmental monitoring in high-cold areas, industrial production lines, etc. In these scenarios, IoT terminal devices will be unable to work due to limitations of the working environment of conventional power supplies. In addition, extreme working environments are also detrimental to the maintenance of the IoT terminal devices, such as battery replacement.

### •Terminal Form Requirements with Extremely Small Size

The size of terminals is required to be extremely small in certain IoT communication scenarios, such as food traceability, commodity circulation, and smart wearables, to facilitate use in these scenarios. For example, IoT terminal devices used for commodity management in the circulation process generally take a form of electronic tags, which are embedded in the commodity packaging in a very small form. As another example, lightweight wearable IoT terminal devices may improve user experience while meeting user needs.

### • IoT Communication Requirements with Extremely Low-Cost

The cost of IoT terminal devices is required to be low enough in numerous IoT communication scenarios, thereby enhancing competitiveness thereof relative to other alternative technologies. For example, in logistics or warehousing scenarios, to facilitate the management of a large number of circulating items, each item may be attached to an IoT terminal device, so that accurate management of the entire logistics process and lifecycle may be completed via communication between the IoT terminal device and a logistics network. Prices of IoT terminal devices are required to be sufficiently competitive in these scenarios.

Therefore, in order to fulfill these unmet IoT communication requirements, it is also necessary to develop IoT with ultra-low-cost, extremely small size, battery-free/maintenance-free in cellular IoT, and zero-power IoT may exactly meet these requirements.

Zero-power IoT is also known as ambient IoT or passive IoT. Ambient IoT devices refer to IoT devices capable of using various ambient energy sources, such as radio frequency energy, light energy, solar energy, thermal energy, and mechanical energy, to power themselves. This type of devices may have no energy storage capability or may have very limited energy storage capability (such as using capacitors with a capacitance of tens of microfarads). Compared to existing IoT devices, ambient IoT devices have a lot of advantages, such as no conventional batteries, no maintenance, small size, low complexity, low cost, and long life cycle.

Zero-power IoT may be used in at least the following four types of scenarios:
(1) object recognition, such as management of logistics and production line product, as well as supply chain management;
(2) environmental monitoring, such as monitoring of temperature, humidity and harmful gases in working environments and natural environments;
(3) positioning, such as indoor positioning, intelligent object search, and production line item positioning; and
(4) intelligent control, such as intelligent control of various electrical appliances in smart homes (turning air conditioners on/off and adjusting temperature), and intelligent control of various facilities in agricultural greenhouses (automatic irrigation and fertilization).

Next, the communication process of ambient IoT devices will be introduced.

In future cellular passive IoT or WLAN passive IoT, or ambient IoT devices, support for new types of ambient IoT devices (electronic devices) may be provided to meet requirements for the corresponding types of IoT communications in different application scenarios.

In practical deployment scenarios, to support the foregoing electronic devices, access points (APs) are required to have the capability to communicate with these electronic devices. However, in some application scenarios, a large number of APs supporting traditional technologies have already been deployed. If these APs can support electronic devices capable of operating with the ambient energy, it is possible to maintain traditional communication functions while reducing power consumption during communication, making full use of these already deployed APs and reducing the consumption of material and financial resources.

FIG. 6 illustrates a schematic diagram of a communication process of an ambient IoT device provided in an exemplary embodiment of the present application. An electronic device 610, as a new type of ambient IoT device, has the capability to communicate with a network device 620 in a WiFi system. The electronic device 610 may be deployed in the WiFi system to make full use of the existing network infrastructure and reduce the network deployment cost.

However, since the network device 620 in the WiFi system generally does not have wireless power supply capabilities, a new network node is deployed, such as a power supply node 630 in FIG. 6, which may also be referred to as an auxiliary node, to provide wireless power to the electronic device 610. The network device 620 in this WiFi system may be an access point (AP).

Next, a wake-up receiver will be introduced.

FIG. 7 illustrates a schematic diagram of a receiver system 700 provided in the related technology. The receiver system 700 includes a first receiver 710 and a main transceiver 720, where the first receiver 710 may be referred to as a wake-up receiver (WUR).

In some embodiments, the main transceiver (main radio) 720 may be equivalently understood as a main transmitter-receiver or a main air interface communication unit.

In some embodiments, the main transceiver 720 includes a receiver.

In some embodiments, the main transceiver 720 includes a receiver and a transmitter.

To further save power, a WUR is introduced to receive a power-saving signal. The wake-up receiver, featuring extremely low cost, extremely low complexity, and extremely low power consumption, receives the power-saving signal mainly through envelope-based detection. Therefore, the power-saving signal received by the wake-up receiver is different from signals carried over the physical downlink control channel (PDCCH) as defined by relevant standards in terms of modulation method and waveform. The power-saving signal is mainly an envelope signal obtained by ASK modulation of the carrier signal. Demodulation of the envelope signal may also be accomplished by driving a low-power circuit with energy provided by a wireless radio frequency signal, so the wake-up receiver may be passive. The wake-up receiver may also be actively powered by an electronic device (terminal device). Regardless of any power supply method, the receiver greatly reduces the power consumption compared to traditional receivers. For example, the WUR may accomplish power consumption of less than 1 milliwatt, which is far lower than the power consumption of tens to hundreds of milliwatts for the main receiver. The wake-up receiver may be integrated with an electronic device as an add-on module to the receiver of the electronic device, or may stand alone as a wake-up function module for the electronic device.

As illustrated in FIG. 7, in an initial state, the first receiver 710 is in a wake-up state and the main transceiver 720 is in a turn-off state. The first receiver 710 receives a power-saving signal and determines whether to wake up the main transceiver 720 based on an indication of the power-saving signal. If it is necessary to wake up the main transceiver 720, the network device or the power supply node may transmit a power-saving signal for indicating wake-up to the first receiver 710, and the first receiver 710 will wake up the main transceiver 720 after receiving the power-saving signal. Otherwise, the main transceiver 720 remains in the turn-off state.

In some embodiments, transmitting the power-saving signal is used to indicate wake-up; and not transmitting the power-saving signal is used to indicate non-wake-up.

In some embodiments, transmitting a power-saving signal carrying a wake-up indication is used to indicate wake-up; and transmitting a power-saving signal carrying a non-wake-up indication is used to indicate non-wake-up.

Therefore, the electronic device may use the first receiver 710 to monitor the power-saving signal. In a case where the electronic device has no business or paging messages, the electronic device may keep using the first receiver 710. Only in a case where the electronic device has business, will it receive the power-saving signal to wake up the main transceiver 720 for data transmission and reception, thus reducing the power consumption of the electronic device compared to the traditional mode in which the main transceiver 720 is kept using for data transmission and reception.

Next, the energy harvesting of the electronic device will be introduced.

In a case where the electronic device is an ambient IoT device, energy may be obtained from the environment, where available ambient energy sources include: RF energy, solar energy, light energy, thermal energy, kinetic energy, etc. The type of ambient energy used by the electronic device is determined based on an application scenario and working environment. The electronic device may use one or more types of ambient energy. Since RF energy may be provided by transmitting radio waves through network devices, and the transmission time and power are relatively controllable, ambient IoT devices that use RF energy may be applied to various scenarios.

In a case where the wireless network is a WiFi network, the network device may be an access point (AP) in the WiFi network. The electronic device may receive radio waves transmitted by the AP to harvest energy. However, the AP generally operates at 2.4 GHz or 5 GHz, significant radio wave attenuation. Furthermore, the transmission power of the AP is limited due to relevant regulations. Additionally, the duration of radio waves emitted by the AP depends on the demands of services within the network, with no clear pattern in the transmission time and duration. Therefore, directly using the radio waves emitted by the AP for energy harvesting is often inefficient. To address this, a dedicated power supply node may be deployed to wirelessly power electronic devices.

The power supply node may transmit power supply signals on a frequency band different from that on which the AP operates (e.g., 2.4 GHz), such as a frequency band below 1 GHz, specifically, 920 MHz to 925 MHz.

The time and duration of the power supply signal transmitted by the power supply node may be controlled by signaling transmitted by the AP, or set through application programs.

The power supply signal may be a single-frequency sine wave signal or a broadband modulation signal, and the power supply signal may be a specified waveform such as on-off keying (OOK), orthogonal frequency division multiplexing (OFDM), triangular wave, sine wave, or any of other arbitrary waveforms.

The electronic device performs energy harvesting at relatively low power. The current sensitivity for energy harvesting is around -20 decibels, which means that the electronic device may harvest energy only when the strength of the received power supply signal is greater than -20 decibels. When the received power supply signal is set to -20 decibels, i.e., 10 microwatts, the power of the electronic device for harvesting energy is 5 microwatts with an energy harvesting efficiency of 50%. The electronic device may use an energy storage device to store the harvested energy, and then communicate with the network after obtaining enough energy.

In some embodiments, the electronic device includes a first receiver (wake-up receiver) and a main transceiver (main receiver), with the power consumed by the wake-up receiver (WUR) (generally less than 1 milliwatt) much lower than the power consumed by the main receiver (generally tens to hundreds of milliwatts). For example, if the main receiver needs to consume 50 milliwatts to maintain a wake-up state, and the wake-up receiver needs to consume 0.5 milliwatts to maintain a wake-up state, then a duration required for the electronic device to harvest the energy to maintain the main receiver in the wake-up state is 100 times a duration required to harvest the energy to maintain the wake-up receiver in the wake-up state. Since the power of energy harvesting is relatively low, waking up the main receiver will consume a lot of the energy that the electronic device takes a long time to harvest. Therefore, in a case of no service, the electronic device may not only turn off the main receiver, but also turn off the WUR to save more power.

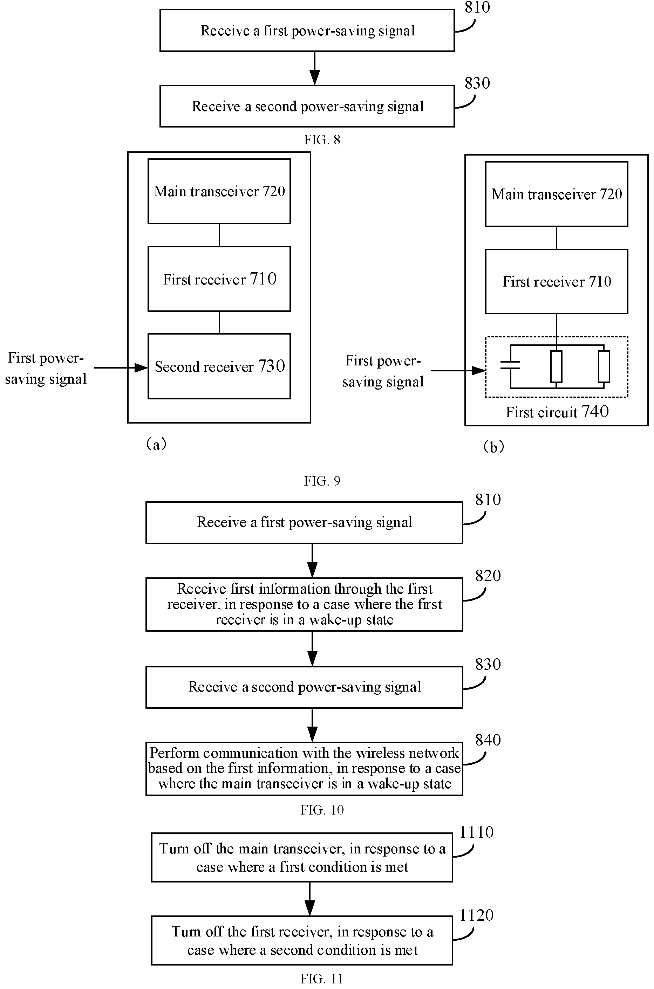

To address the challenge on how to further save energy during the communication process, the embodiments of the present application propose a wake-up method for a receiver. FIG. 8 illustrates a flowchart of a wake-up method for a receiver provided in an exemplary embodiment of the present application. The method is performed by an electronic device, where the electronic device has a first receiver and a main transceiver, with operating power consumption of the first receiver lower than operating power consumption of the main transceiver. The method includes the following content.

**Step 810:** a first power-saving signal is received.

In an initial state, both the first receiver and the main transceiver of the electronic device are in a non-wake-up state. The non-wake-up state may also be understood as at least one of the following: a turn-off state, a sleep state, or a DRX monitoring state. Here, the sleep state includes at least one of a light sleep state, a deep sleep state, and an ultra-deep sleep state. The power consumption of the light sleep state is higher than that of the deep sleep state, and the power consumption of the deep sleep state is higher than that of the ultra-deep sleep state.

Here, the first power-saving signal is used to indicate whether to wake up the first receiver. As an example, the first receiver is a WUR.

In some embodiments, waking up the first receiver may also be equivalently understood as: monitoring transmission of downlink data or data frames through the first receiver; or may also be equivalently understood as: monitoring a control channel used to schedule uplink data or downlink data or data frames through the first receiver. The above three expressions have the same meaning in the embodiments of the present application.

In some embodiments, not waking up the first receiver may also be equivalently understood as: maintaining the first receiver in a turn-off state; or may also be equivalently understood as: maintaining the first receiver in a sleep state; or may also be equivalently understood as: maintaining the first receiver in a DRX monitoring state. The above four expressions have the same meaning in the embodiments of the present application.

In some embodiments, the first power-saving signal being used to indicate that the first receiver is to be woken up, may also be equivalently understood as: the first power-saving signal being used to indicate monitoring transmission of downlink data or data frames through the first receiver; or may also be equivalently understood as: the first power-saving signal being used to indicate monitoring a control channel used to schedule uplink data or downlink data or data frames through the first receiver. The above three expressions have the same meaning in the embodiments of the present application.

In some embodiments, the first power-saving signal being used to indicate that the first receiver is not to be woken up, may also be equivalently understood as: the first power-saving signal being used to indicate that the first receiver is to be maintained in a turn-off state; or may also be equivalently understood as: the first power-saving signal being used to indicate that the first receiver is to be maintained in a sleep state; or may also be equivalently understood as: the first power-saving signal being used to indicate that the first receiver is to be maintained in a DRX monitoring state. The above four expressions have the same meaning in the embodiments of the present application.

In some embodiments, the first power-saving signal is received by the first receiver.

In some embodiments, the electronic device is an active device, where the active device refers to a device that has its own power supply and is capable of actively generating and transmitting signals, such as a mobile phone, a computer, a smartwatch, or a smart bracelet.

In some embodiments, the electronic device is a passive device, where the passive device refers to a device that does not require a power supply or is capable of operating by receiving energy from other devices, which may be referred to as a zero-power device, a zero-power terminal, a low-power device, a low-power terminal, or the like.

In some embodiments, the electronic device obtains energy from an environment, which may be referred to as an ambient power-enabled IoT device.

In some embodiments, the electronic device is deployed in a fixed location, which may be referred to as a zero-power station, a low-power station, or the like.

In some embodiments, the first power-saving signal for indicating wake-up and the first power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In some embodiments, the first power-saving signal is a wake-up signal. A network device transmits a dedicated wake-up signal to the electronic device, and the dedicated wake-up signal is different from a power supply signal.

In some embodiments, the first power-saving signal is a power supply signal. The first power-saving signal is transmitted by a network device or a power supply node.

In a case where both the WUR (first receiver) and the main transceiver are in the turn-off state, since the network device cannot wake up the electronic device by transmitting signals to these receivers, the network device may wake up the WUR by transmitting a power supply signal.

In some embodiments, the first power-saving signal for indicating non-wake-up has a first waveform, for example, the first power-saving signal is a single-frequency sine wave, on which no information is modulated.

In some embodiments, the first power-saving signal for indicating wake-up is a sequence modulated using a first modulation method. For example, a sequence is modulated with OOK, such as 111000 or 101010, where 1 represents a high level of OOK, and 0 represents a low level of OOK.

The modulation method of the first power-saving signal may also be FSK, phase shift keying (PSK), etc., and the sequence length and sequence may also be other values, which are not limited in the embodiments of the present application.

In some embodiments, it is indicated whether to wake up the WUR by changing a frequency of transmitting the first power-saving signal.

For example, the first power-saving signal is transmitted at a first frequency point or within a first frequency range, and the transmission at the first frequency point or within the first frequency range indicates that the WUR is to be woken up.

As another example, the first power-saving signal is transmitted at a second frequency point or within a second frequency range, and the transmission at the second frequency point or within the second frequency range indicates that the WUR is not to be woken up.

The first frequency point and the second frequency point may be located in the same frequency band or different frequency bands. The first frequency range and the second frequency range may be located in the same frequency band or different frequency bands.

The electronic device uses a peripheral circuit to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In some embodiments, the first power-saving signal may be received in any one of the following two methods:

### Method 1: the first power-saving signal is received through a second receiver.

FIG. 9 illustrates a schematic diagram of receiving a first power-saving signal provided in an exemplary embodiment of the present application. As illustrated in (a) of FIG. 9, the electronic device further includes a second receiver 730, and the electronic device receives the first power-saving signal through the second receiver 730.

Here, operating power consumption of the second receiver 730 is lower than operating power consumption of the first receiver 710. For example, a receiver type of the second receiver 730 is an RF-based receiver type (RF envelope detection receiver type), and a receiver type of the first receiver 710 is an intermediate frequency-based receiver. Therefore, the power consumption of the second receiver 730 is several microwatts, such as 5 microwatts, and the power consumption of the first receiver 710 is hundreds of microwatts, such as 100 microwatts, so the operating power consumption of the second receiver 730 is lower than the operating power consumption of the first receiver 710.

In some embodiments, the second receiver 730 and the first receiver 710 are on the same chip or different chips and are connected by an electronic lead.

### Method 2: the first power-saving signal is received through a first circuit.

As illustrated in (b) of FIG. 9, the electronic device further includes a first circuit 740, and the electronic device receives the first power-saving signal through the first circuit 740.

In some embodiments, the first circuit 740 includes a wireless energy harvesting circuit of the electronic device, or a peripheral circuit of the first receiver 710.

The wireless energy harvesting circuit is used to harvest wireless energy. In a case where both the first receiver 710 and the main transceiver 720 are turned off, the wireless energy harvesting circuit still maintains an operating state thereof and continues to harvest wireless energy.

The electronic device uses the first circuit 740 to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In some embodiments, the first receiver uses a first receiver parameter, where the first receiver parameter includes a first receiver type and/or a first receiving bandwidth.

The receiver type represents an architecture type of a receiver used by the electronic device, such as a radio frequency (RF)-based receiver or an intermediate frequency (zero-IF)-based receiver; and the receiving bandwidth represents a bandwidth used to receive signals.

In some embodiments, the first receiver type is an RF-based receiver type. An RF signal is directly detected by using the first receiver of the RF-based receiver type (RF envelope detection receiver type), without requiring frequency conversion on the RF signal, and thus there is no need to convert the RF signal to a baseband signal, which may reduce the power consumption of the first receiver.

Since this receiver type, based on parameters of its implemented RF filter or matched network, can only receive the first power-saving signal within a specified frequency range, the first power-saving signal may be received within a first frequency band or on a first channel within the first frequency band.

In some embodiments, the first power-saving signal is received within a first frequency band.

The receiving bandwidth of the first receiver is equal to a bandwidth of the first frequency band, and the first receiver receives the first power-saving signal within a bandwidth not exceeding the bandwidth range of the first frequency band. For example, the first power-saving signal is received at 920 MHz to 925 MHz.

In some embodiments, the first power-saving signal is received on a first channel within the first frequency band.

In a case where the first frequency band includes a plurality of channels, the first power-saving signal is received on one of the channels (the first channel), and the receiving bandwidth of the first receiver is equal to a bandwidth of the first channel. For example, 20 channels with a bandwidth of 250 kHz are allocated within a range of 920 MHz to 925 MHz, and the first power-saving signal is received on the first channel therein.

As another example, in a case where the first receiver operates at 2.4 GHz, a frequency band is 2,400 MHz to 2,485 MHz, within which a plurality of channels may be allocated, such as channels at 2,400 MHz to 2,420 MHz, channels at 2,420 MHz to 2,440 MHz, channels at 2,440 MHz to 2,460 MHz, and so on. Therefore, the first power-saving signal may be received on the first channel within the frequency band, for example, on a channel at 2,400 MHz to 2,420 MHz.

In some embodiments, the first channel is any channel within the first frequency band; or
the first channel is a designated channel within the first frequency band; or
the first channel is a most central channel within the first frequency band; or
the first channel is one of two most central channels within the first frequency band.

In a case where the number of channels included in the first frequency band is odd, the first channel is the most central channel within the first frequency band; and in a case where the number of channels included in the first frequency band is even, the first channel is one of the two most central channels within the first frequency band.

For example, in a case where the first frequency band includes five channels, the first channel is the most central channel (the third channel); or in a case where the first frequency band includes four channels, the first channel is one of the two most central channels (the second channel or the third channel).

**Step 830:** a second power-saving signal is received.

Here, the second power-saving signal is used to indicate whether to wake up the main transceiver.

In some embodiments, step 830 may be performed before step 810. The embodiments of the present application are described by way of example where step 810 is performed first, and then step 830 is performed.

In some embodiments, waking up the main transceiver, may also be equivalently understood as: waking up the main transmitter-receiver; or may also be equivalently understood as: waking up the main air interface communication unit. The above three expressions have the same meaning in the embodiments of the present application.

In some embodiments, waking up the main transceiver, may also be equivalently understood as: monitoring transmission of downlink data or data frames through the main transceiver; or may also be equivalently understood as: monitoring a control channel used to schedule uplink data or downlink data or data frames through the main transceiver. The above three expressions have the same meaning in the embodiments of the present application.

In some embodiments, not waking up the main transceiver, may also be equivalently understood as: maintaining the main transceiver in a turn-off state; or may also be equivalently understood as: maintaining the main transceiver in a DRX monitoring state. The above three expressions have the same meaning in the embodiments of the present application.

In some embodiments, the second power-saving signal for indicating wake-up and the second power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In some embodiments, the reception of the second power-saving signal includes any one of the following two situations:

**Situation** 1: after the first receiver is woken up, the second power-saving signal is received through the first receiver.

The first receiver receives the second power-saving signal in a case of being woken up, demodulates the second power-saving signal, and transmits the corresponding content to the main transceiver, indicating whether to wake up the main transceiver.

In some embodiments, after the first receiver is woken up, which may also be equivalently understood as that: after the first receiver enters a state of monitoring the transmission of downlink data or data frames; or may also be equivalently understood as that: after the first receiver enters a state of monitoring the control channel used to schedule uplink data or downlink data or data frames. The above three expressions have the same meaning in the embodiments of the present application.

In some embodiments, the first receiver monitors the second power-saving signal based on a discontinuous reception (DRX) cycle; and in response to having monitored the second power-saving signal associated with a first DRX cycle, maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The first receiver monitors the second power-saving signals based on a DRX cycle; and in response to having monitored a second power-saving signal associated with a first DRX cycle, maintains the main transceiver in a wake-up state during an active time period in the first DRX cycle, according to a wake-up indication carried by the second power-saving signal, or maintains the main transceiver in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The first receiver monitors the second power-saving signal based on a DRX cycle; in response to having monitored the second power-saving signal associated with a first DRX cycle, maintains the main transceiver in a wake-up state during an active time period in the first DRX cycle, according to an indication of the second power-saving signal associated with the first DRX cycle; and in response to having not monitored the second power-saving signal associated with the first DRX cycle, maintains the main transceiver in a non-wake-up state during the active time period in the first DRX cycle.

In some embodiments, the second power-saving signal associated with the first DRX cycle may be transmitted before the active time period in the first DRX cycle or at an initial position of the active time period in the first DRX cycle.

**Situation** 2: the second power-saving signal is received through the main transceiver.

Here, both the first receiver and the main transceiver are in a non-wake-up state.

In some embodiments, the main transceiver monitors the second power-saving signal based on a DRX cycle; and in response to having monitored the second power-saving signal associated with a first DRX cycle, the main transceiver is maintained in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The main transceiver monitors the second power-saving signals based on a DRX cycle; and in response to having monitored a second power-saving signal associated with a first DRX cycle, the main transceiver is maintained in a wake-up state during an active time period in the first DRX cycle, according to a wake-up indication carried by the second power-saving signal, or the main transceiver is maintained in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The main transceiver monitors the second power-saving signal based on a DRX cycle; in response to having monitored the second power-saving signal associated with a first DRX cycle, the main transceiver is maintained in a wake-up state during an active time period in the first DRX cycle, according to an indication of the second power-saving signal associated with the first DRX cycle; and in response to having not monitored the second power-saving signal associated with the first DRX cycle, the main transceiver is maintained in a non-wake-up state during the active time period in the first DRX cycle.

In some embodiments, the second power-saving signal associated with the first DRX cycle may be transmitted before the active time period in the first DRX cycle or at an initial position of the active time period in the first DRX cycle.

In some embodiments, maintaining the main transceiver in a wake-up state during the active time period in the first DRX cycle, may also be equivalently understood as: monitoring the transmission of downlink data or data frames through the main transceiver at all times during the active time period in the first DRX cycle; or may also be equivalently understood as: monitoring the control channel used to schedule uplink data or downlink data or data frames through the main transceiver at all times during the active time period in the first DRX cycle. The above three expressions have the same meaning in the embodiments of the present application.

Maintaining the main transceiver in a non-wake-up state during the active time period in the first DRX cycle, may also be equivalently understood as: not monitoring, by the main transceiver, the transmission of downlink data or data frames during the active time period in the first DRX cycle; or may also be equivalently understood as: not monitoring, by the main transceiver, the control channel used to schedule uplink data or downlink data or data frames during the active time period in the first DRX cycle. The above three expressions have the same meaning in the embodiments of the present application.

A DRX cycle includes "on duration" and "opportunity for DRX," in which during the on duration (the active time period), the electronic device is in the wake-up state to receive data, and during the DRX opportunity, the electronic device is in the sleep state to receive no data.

For example, the electronic device monitors the second power-saving signal based on the DRX cycle; and in response to having monitored the second power-saving signal before the active time period in the first DRX cycle, where the second power-saving signal indicates that the main transceiver is to be in the wake-up state, maintains the main transceiver in the wake-up state during the active time period in the first DRX cycle.

In some embodiments, the first power-saving signal further carries an identifier of a device to be woken up or an identifier of a device group to be woken up.

In some embodiments, the second power-saving signal further carries an identifier of a device to be woken up or an identifier of a device group to be woken up.

The identifier of the device group to be woken up is also known as an identity document (ID) of the device group to be woken up, which is the ID of the group to which a device to be woken up belongs. This group includes at least one device to be woken up.

Based on the ID of the device to be woken up or the ID of the device group to be woken up carried in the first power-saving signal or the second power-saving signal, it is determined whether to wake up the electronic device. In response to that an ID of the electronic device is the same as the ID of the device to be woken up, the electronic device will be woken up; and in response to that the ID of the electronic device is different from the ID of the device to be woken up, the electronic device will not be woken up. In response to that a group ID of the electronic device is the same as the ID of the device group to be woken up, the electronic device will be woken up; and in response to that the group ID of the electronic device is different from the ID of the group device to be woken up, the electronic device will not be woken up.

In some embodiments, the second power-saving signal further carries synchronization information used for synchronization of a wireless network and the electronic device. The synchronization includes time-domain synchronization and/or frequency-domain synchronization. The wireless network includes at least one of a WiFi network, a cellular network, or a wireless power supply network.

In summary, in the method provided in this embodiment, a first power-saving signal is received, where the first power-saving signal is used to indicate whether to wake up the first receiver; and a second power-saving signal is received, where the second power-saving signal is used to indicate whether to wake up the main transceiver. In a case where it is indicated to wake up the first receiver first and then wake up the main transceiver, this method reduces the power consumption of the electronic device compared to always maintaining the first receiver in a wake-up state. For example, the first receiver is a wake-up receiver that needs to consume 0.5 milliwatts of power to maintain its wake-up state, the main transceiver is a main receiver that needs to consume 50 milliwatts of power to maintain its wake-up state, and the electronic device harvests energy at relatively low power, at 50 microwatts. In a case where the first receiver and/or the main transceiver are always woken up, the rate of energy consumption is greater than the rate of energy harvesting. Therefore, in the initial state, both the first receiver and the main transceiver of the electronic device are in a non-wake-up state. In a case of preparing for data transmission service, the first receiver with lower power consumption is woken up first to wait for the data transmission service to begin; and in a case of starting the data transmission service, the main transceiver with higher power consumption is woken up to perform the data transmission service. Compared with always maintaining the first receiver and/or the main transceiver in the wake-up state, this method reduces the power consumption of the electronic device.

In the method provided in this embodiment, further, the first power-saving signal is received through a second receiver or a first circuit, where the second receiver or the first circuit consumes less power than the first receiver, thereby saving power for the electronic device.

In the method provided in this embodiment, further, the second power-saving signal is received through the first receiver after the first receiver is woken up, and then the first receiver transmits the corresponding content to the main transceiver after demodulating the second power-saving signal. Since the operating power consumption of the first receiver is lower than the operating power consumption of the main transceiver, the power consumption of the electronic device is reduced.

In the method provided in this embodiment, further, the second power-saving signal is monitored based on the DRX cycle. Based on the DRX mechanism, using the main transceiver consumes less power than using the first receiver, so the first receiver is not required, thereby decoupling the first receiver from the main transceiver to adapt to different application scenarios.

Since the operating power consumption of the first receiver is lower than the operating power consumption of the main transceiver, transferring some of the work of the main transceiver to the first receiver may further save the power of the electronic device. In the related technology, the first information is information received by the main transceiver. In this embodiment of the present application, the first information is instead received by the first receiver, thereby reducing the power consumption of the electronic device. FIG. 10 illustrates a flowchart of a wake-up method for a receiver provided in an exemplary embodiment of the present application. The method is performed by an electronic device, where the electronic device has a first receiver and a main transceiver, with operating power consumption of the first receiver lower than operating power consumption of the main transceiver. The method includes the following content.

**Step 810:** a first power-saving signal is received.

Specific implementation details may be referenced in step 810 of the embodiment of FIG. 8, and will not be repeated here.

**Step 820:** in response to a case where the first receiver is in a wake-up state, first information is received through the first receiver.

The first information is used for communication between the electronic device and a wireless network. The wireless network includes at least one of a WiFi network, a cellular network, or a wireless power supply network.

In some embodiments, the first information includes: information used for communication between the first receiver and the wireless network.

In some embodiments, the electronic device is an active device, where the active device refers to a device that has its own power supply and is capable of actively generating and transmitting signals, such as a mobile phone, a computer, a smartwatch, or a smart bracelet.

In some embodiments, the electronic device is a passive device, where the passive device refers to a device that does not require a power supply or is capable of operating by receiving energy from other devices, which may be referred to as a zero-power device, a zero-power terminal, a low-power device, a low-power terminal, or the like.

In some embodiments, the electronic device obtains energy from an environment, which may be referred to as an ambient power-enabled IoT device.

In some embodiments, the electronic device is deployed in a fixed location, which may be referred to as a zero-power station, a low-power station, or the like.

In some embodiments, in response to a case where the first receiver is in the wake-up state, the network device or the power supply node 630 in the embodiment of FIG. 6 transmits first information to the first receiver, where the first information may be referred to as auxiliary information, assisting the electronic device in quickly establishing a connection with the wireless network and completing communication after waking up the main transceiver.

In some embodiments, the first information includes: information used for communication between the main transceiver and the wireless network. It may also be equivalently understood as follows: the first information includes: information used for communication between the main transmitter-receiver (or main air interface communication unit) and the wireless network.

In some embodiments, the first information includes, but is not limited to, at least one of the following:
- configuration information used for receiving downlink data;
- configuration information used for receiving downlink control signaling;
- configuration information used for receiving a system broadcast;
- configuration information used for transmitting uplink data;
- configuration information used for transmitting uplink control signaling;
- synchronization information used for synchronization;
- configuration information used for receiving a second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or a radio-network temporary identifier (RNTI) for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The configuration information used for transmitting uplink data includes at least one of the following pieces of information: a time-domain position for transmitting the uplink data, a frequency position for transmitting the uplink data, or a period for transmitting the uplink data.

The configuration information used for transmitting uplink control signaling includes at least one of the following pieces of information: a time-domain position for transmitting the uplink control signaling, or a frequency position for transmitting the uplink control signaling.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network.

The configuration information used for receiving a second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or a modulation and coding scheme (MCS) supported by the wireless network, and these pieces of information are generally carried in a beacon frame.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In some embodiments, a form of the frequency position includes: a channel form, a bandwidth form, a carrier form, or the like. For example, the downlink data is received on the first channel.

In some embodiments, relevant information of the frequency position may enable the electronic device to obtain the frequency position at which the main transceiver communicates with the wireless network through the first receiver, to avoid waking up the main transceiver and then obtaining the frequency position by frequency scanning, thereby reducing power consumption.

In some embodiments, the first information is transmitted via a data frame; or the first information is transmitted via a beacon frame.

In some embodiments, the network device transmits the first information first, and then transmits the second power-saving signal.

In some embodiments, the first information is carried in the second power-saving signal.

After waking up the first receiver, the network device transmits the second power-saving signal. By receiving the second power-saving signal, the electronic device may simultaneously obtain at least one of the following: the first information, the information on whether to wake up the main transceiver, or the synchronization information used for synchronization.

**Step 830:** a second power-saving signal is received.

Specific implementation details may be referenced in step 830 of the embodiment of FIG. 8, and will not be repeated here.

**Step 840:** in response to a case where the main transceiver is in a wake-up state, communication with the wireless network is performed based on the first information.

In response to the case where the main transceiver is in the wake-up state, the electronic device obtains configuration of the wireless network based on the content carried in the first information.

For example, in a case where the first information includes configuration information used for receiving downlink data, the main transceiver receives the downlink data based on information such as a time-domain position for receiving the downlink data and a frequency position for receiving the downlink data. Before receiving the downlink data, the main receiver may be maintained in a non-wake-up state as much as possible, thereby saving more power.

In a case where the first information includes configuration information used for receiving downlink control signaling, where the downlink control signaling is used to indicate relevant information for receiving downlink data, the main transceiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network. By receiving the configuration information in advance, the main transceiver may be in a non-wake-up state for a longer period of time, thereby reducing the power consumption of the electronic device.

In a case where the first information includes configuration information used for receiving a system broadcast, the main transceiver receives the system broadcast of the wireless network based on information such as a time-domain position of a broadcast frame and a frequency position of the broadcast frame. By receiving the configuration information of the system broadcast in advance, the main receiver may be maintained in a non-wake-up state during both stages of receiving the system broadcast and obtaining the configuration information in the system broadcast, thereby saving more power.

In a case where the first information includes configuration information used for transmitting uplink data, the main transceiver transmits the uplink data based on information such as a time-domain position for transmitting the uplink data and a frequency position for transmitting the uplink data. Before receiving the uplink data, the main receiver may be maintained in a non-wake-up state as much as possible, thereby saving more power.

In a case where the first information includes configuration information used for transmitting uplink control signaling, where the uplink control signaling is used to provide feedback on whether downlink data has been received, the main transceiver monitors the uplink control signaling based on information such as a time-domain position for transmitting the uplink control signaling and a frequency position for transmitting the uplink control signaling. By receiving the configuration information in advance, the main transceiver may be in a non-wake-up state for a longer period of time, thereby reducing the power consumption of the electronic device.

In a case where the first information includes synchronization information used for synchronization, the electronic device, based on synchronization information for time-domain synchronization and/or synchronization information for frequency-domain synchronization, enables the main transceiver to attain the time-frequency synchronization with the wireless network, so that the main transceiver does not need to perform the time-frequency synchronization after being woken up.

In a case where the first information includes configuration information used for receiving the second power-saving signal, the main transceiver monitors or receives the second power-saving signal based on information such as a time-domain position for receiving the second power-saving signal and a frequency position for receiving the second power-saving signal. By receiving the configuration information in advance, the main transceiver may be in a non-wake-up state for a longer period of time, thereby reducing the power consumption of the electronic device.

In a case where the first information includes capability information of the wireless network, the main transceiver communicates with the wireless network based on information such as a bit rate supported by the wireless network and an MCS supported by the wireless network, for example, communicating with the wireless network at a bit rate of 128 kilobits per second. Thus, the main transceiver does not need to read other content, such as a beacon frame, after being woken up, to obtain the capability information, thereby reducing the power consumption of the electronic device.

After receiving the first information, the electronic device establishes a connection or association with the network using the main transceiver, and then performs communication. The main transceiver uses communication protocols in the related technology, such as 802.11b and 802.11n, thereby enabling the electronic device to communicate with network devices (such as APs) in the related technology.

In summary, in the method provided in this embodiment, in response to a case where the first receiver is in a wake-up state, first information is received through the first receiver, where the first information is used for communication between the electronic device and the wireless network, so that the main transceiver of the electronic device does not need to read the first information from the beacon frame after being woken up, which may assist the electronic device in quickly establishing a connection with the wireless network, thereby saving the power of the electronic device.

Since the operating power consumption of the first receiver is lower than the operating power consumption of the main transceiver, receiving, by the first receiver, information communicated between the first receiver and the wireless network may reduce the power consumption of the electronic device, compared to using the main transceiver to receive the above information.

In some embodiments, the first information includes: information used for communication between the first receiver and the wireless network.

In some embodiments, the first information includes at least one of the following:
- configuration information used for receiving downlink data;
- configuration information used for receiving downlink control signaling;
- configuration information used for receiving a system broadcast;
- synchronization information used for synchronization;
- configuration information used for receiving the first power-saving signal;
- configuration information used for receiving the second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network, so that the main transceiver does not need to perform the time-frequency synchronization after being woken up.

The configuration information used for receiving the first power-saving signal includes at least one of the following pieces of information: a time-domain position for receiving the first power-saving signal, or a frequency position for receiving the first power-saving signal.

The configuration information used for receiving the second power-saving signal includes at least one of the following: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame, so the main transceiver does not need to read the beacon frame after being woken up, thus reducing the power consumption of the electronic device.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In some embodiments, the first receiver communicates with the wireless network based on the content carried in the first information.

For example, in a case where the first information includes configuration information used for receiving downlink data, the first receiver receives the downlink data based on information such as a time-domain position for receiving the downlink data and a frequency position for receiving the downlink data.

In a case where the first information includes configuration information used for receiving downlink control signaling, where the downlink control signaling is used to indicate relevant information for receiving downlink data, the first receiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network.

In a case where the first information includes configuration information used for receiving a system broadcast, the first receiver receives the system broadcast of the wireless network based on information such as a time-domain position of a broadcast frame and a frequency position of the broadcast frame.

In a case where the first information includes synchronization information used for synchronization, the first receiver, based on synchronization information for time-domain synchronization and/or synchronization information for frequency-domain synchronization, enables the first receiver to attain the time-frequency synchronization with the wireless network.

In a case where the first information includes configuration information used for receiving the first power-saving signal, the first receiver monitors or receives the first power-saving signal based on information such as a time-domain position for receiving the first power-saving signal and a frequency position for receiving the first power-saving signal.

In a case where the first information includes configuration information used for receiving the second power-saving signal, the first receiver monitors or receives the second power-saving signal based on information such as a time-domain position for receiving the second power-saving signal and a frequency position for receiving the second power-saving signal.

In a case where the first information includes capability information of the wireless network, the first receiver communicates with the wireless network based on information such as a bit rate supported by the wireless network and an MCS supported by the wireless network, for example, communicating with the wireless network at a bit rate of 8 kilobits per second.

In some embodiments, taking the wireless network as a WiFi network as an example, the first information includes at least one of the following pieces of information:
- timestamp information of the network when the network device communicates with the main transceiver;
- frequency position information of a communication channel used by the main transceiver during communication;
- time-domain position information of a beacon frame;
- capability information of the wireless network; or
- synchronization information used for synchronization.

In a case where the first information includes timestamp information of the network when the network device communicates with the main transceiver, the electronic device obtains the timestamp information in advance through the first receiver, so that the main transceiver may obtain the communication time of the network without reading the beacon frame after being woken up. Here, the main transceiver may be equivalently understood as a main transmitter-receiver or a main air interface communication unit.

In a case where the first information includes frequency position information of a communication channel used by the main transceiver during communication, the electronic device adjusts an operating channel to that frequency position, to avoid waking up the main transceiver and then obtaining the frequency position of the operating channel through frequency scanning of the main transceiver.

In a case where the first information includes time-domain position information of a beacon frame, the electronic device receives the beacon frame based on that time-domain position. For example, at a time-domain position of signal transmission of a non-beacon frame, the electronic device turns off the main transceiver; and at a time-domain position of transmission of the beacon frame, the electronic device turns on the main transceiver, thereby reducing power consumption. Moreover, considering the clock deviation of the electronic device, the main transceiver may be turned on at a first time-domain position. The first time-domain position is a time-domain position with a time margin before the time-domain position of the transmission of the beacon frame, where the time margin may be adjusted according to the actual situation.

In a case where the first information includes capability information of the wireless network, since the capability information of the wireless network is generally carried in the beacon frame, it is possible to avoid the main transceiver reading the beacon frame after being woken up, thereby reducing the power consumption of the electronic device.

In a case where the first information includes synchronization information used for synchronization, the first receiver attains the time-frequency synchronization with the wireless network, so that the main transceiver does not need to perform the time-frequency synchronization after being woken up.

In some embodiments, the first information includes downlink data, such as data with a data volume lower than a first threshold, or data with a transmission delay requirement lower than a first delay. The first threshold and the first delay are preset values or value ranges.

In some embodiments, the first information is received through the first receiver. The first receiver receives data with a data volume lower than a first threshold, or data with a transmission delay requirement lower than a first delay, without needing to use the main transceiver for reception, further reducing the power consumption of the electronic device.

In summary, in the method provided in this embodiment, in response to a case where the first receiver is in a wake-up state, first information is received through the first receiver, where the first information is used for communication between the electronic device and the wireless network. Furthermore, the communication with the wireless network is performed through the first receiver, without the need for the main transceiver, thereby saving the power of the electronic device.

FIG. 11 illustrates a flowchart of a turn-off method for a receiver provided in an exemplary embodiment of the present application. The method is performed by an electronic device, where the electronic device has a first receiver and a main transceiver, with operating power consumption of the first receiver lower than operating power consumption of the main transceiver. The method includes the following content.

**Step 1110:** in response to a case where a first condition is met, the main transceiver is turned off.

Due to the high operating power consumption of the main transceiver, in response to a case where a first condition is met, the main transceiver is turned off.

For example, the electricity consumption of different users is queried through IoT meters, and the main transceiver is turned off after the query is completed.

**Step 1120:** in response to a case where a second condition is met, the first receiver is turned off.

Here, the first condition and the second condition are two different conditions.

Although the operating power consumption of the first receiver is lower than the operating power consumption of the main transceiver, in order to further save power, the first receiver is turned off in response to a case where the second condition is met.

For example, the electricity consumption of different users is queried through IoT meters, and the main transceiver is turned off after the query is completed. In response to a case where feedback information, e.g., an acknowledgment (ACK) message, transmitted from the wireless network is received, the first receiver is turned off.

In summary, in the method provided in this embodiment, the main transceiver is turned off in response to a case where a first condition is met, and the first receiver is turned off in response to a case where a second condition is met, thereby selecting to turn off one or both receivers based on actual conditions, adapting to more application scenarios, and saving the power of the electronic device.

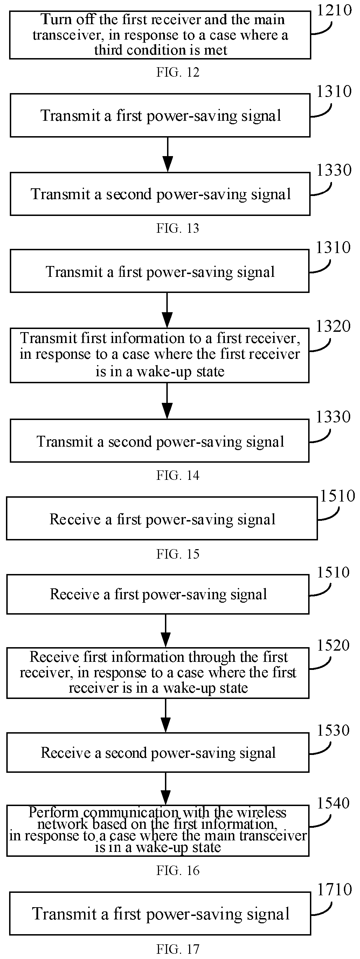

FIG. 12 illustrates a flowchart of a turn-off method for a receiver provided in an exemplary embodiment of the present application. The method is performed by an electronic device, where the electronic device has a first receiver and a main transceiver, with operating power consumption of the first receiver lower than operating power consumption of the main transceiver. The method includes the following content.

**Step 1210:** in response to a case where a third condition is met, the first receiver and the main transceiver are turned off.

Here, the third condition is different from the first condition and the second condition in the embodiment of FIG. 11.

To further save power, both the first receiver and the main transceiver are turned off in response to a case where a third condition is met.

For example, in response to a case where an IoT warehousing device receives all data on items stored in a warehouse, both the first receiver and the main transceiver are turned off.

In summary, in the method provided in this embodiment, the first receiver and the main transceiver are turned off in response to a case where a third condition is met, further saving the power of the electronic device.

In the above embodiments, step 1110 and step 1120 in the embodiment corresponding to FIG. 11 may be implemented alone or in combination with the embodiment corresponding to FIG. 8 or the embodiment corresponding to FIG. 10. For example, step 1110 and step 1120 may be performed after step 840, or step 1110 and step 1120 may be performed after step 830.

The embodiment corresponding to FIG. 12 may be implemented alone or in combination with the embodiment corresponding to FIG. 8 or the embodiment corresponding to FIG. 10. For example, step 1210 may be performed after step 840, or step 1210 may be performed after step 830.

FIG. 13 illustrates a flowchart of a wake-up method for a receiver provided in an exemplary embodiment of the present application. The method is performed by a network device or a power supply node. The method includes the following content.

**Step 1310:** a first power-saving signal is transmitted.

Here, the first power-saving signal is used to indicate whether to wake up a first receiver. An electronic device has the first receiver and a main transceiver, with operating power consumption of the first receiver lower than operating power consumption of the main transceiver.

In some embodiments, the first power-saving signal for indicating wake-up and the first power-saving signal for indicating non-wake-up have at least one of the following:
different waveforms;
different modulation methods;
different sequence lengths;
different sequences;
different frequency points used;
different frequency ranges used; or
different values of information bits carried.

In some embodiments, the first power-saving signal is a wake-up signal.

In some embodiments, the first power-saving signal is a power supply signal.

In some embodiments, the first power-saving signal is transmitted by the network device or the power supply node.

In some embodiments, the electronic device further includes a second receiver, and the first power-saving signal is a signal received by the electronic device through the second receiver, with operating power consumption of the second receiver lower than the operating power consumption of the first receiver.

In some embodiments, the electronic device further includes a first circuit, and the first power-saving signal is a signal received by the electronic device through the first circuit.

In some embodiments, the first circuit includes a wireless energy harvesting circuit of the electronic device or a peripheral circuit of the first receiver.

In some embodiments, the first power-saving signal is a signal received by the electronic device through the first receiver.

In some embodiments, the first receiver uses a first receiver parameter, where the first receiver parameter includes a first receiver type and/or a first receiving bandwidth.

In some embodiments, the first receiver type is an RF-based receiver type.

In some embodiments, the first power-saving signal is transmitted within a first frequency band.

In some embodiments, the first power-saving signal is transmitted on a first channel within the first frequency band.

In some embodiments, the first channel is any channel within the first frequency band; or
the first channel is a designated channel within the first frequency band; or
the first channel is a most central channel within the first frequency band; or
the first channel is one of two most central channels within the first frequency band.

**Step 1330:** a second power-saving signal is transmitted.

Here, the second power-saving signal is used to indicate whether to wake up the main transceiver.

In some embodiments, after the first receiver is woken up, the second power-saving signal is transmitted to the first receiver.

In some embodiments, the second power-saving signal is a signal received by the electronic device through the main transceiver.

In some embodiments, the second power-saving signal is a signal monitored by the electronic device based on a DRX cycle; and in response to having monitored the second power-saving signal associated with a first DRX cycle, the electronic device maintains the main transceiver in a wake-up state or a non-wake-up state during an active time period in the first DRX cycle, according to an indication of the second power-saving signal associated with the first DRX cycle.

In some embodiments, the main transceiver is turned off by the electronic device in response to a case where a first condition is met.

In some embodiments, the first receiver is turned off by the electronic device in response to a case where a second condition is met.

In some embodiments, the first receiver and the main transceiver are turned off by the electronic device in response to a case where a third condition is met.

Specific implementation details of the above wake-up method for a receiver may be referenced in the embodiment of FIG. 8, and will not be repeated here.

In summary, in the method provided in this embodiment, a first power-saving signal is transmitted, where the first power-saving signal is used to indicate whether to wake up the first receiver; and a second power-saving signal is transmitted, where the second power-saving signal is used to indicate whether to wake up the main transceiver. In a case where it is indicated to wake up the first receiver first and then wake up the main transceiver, this method reduces the power consumption of the electronic device compared to always maintaining the first receiver in a wake-up state.

FIG. 14 illustrates a flowchart of a wake-up method for a receiver provided in an exemplary embodiment of the present application. The method is performed by a network device or a power supply node. The method includes the following content.

**Step 1310:** a first power-saving signal is transmitted.

**Step 1320:** in response to a case where a first receiver is in a wake-up state, first information is transmitted to the first receiver.

Here, the first information is used for communication between an electronic device and a wireless network.

In some embodiments, the first information includes: information used for communication between the first receiver and the wireless network.

In some embodiments, the first information includes at least one of the following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving a second power-saving signal; or
capability information of the wireless network.

In some embodiments, the first information includes: information used for communication between a main transceiver and the wireless network.

In some embodiments, the first information includes at least one of the following:
configuration information used for receiving downlink data;
configuration information used for receiving downlink control signaling;
configuration information used for receiving a system broadcast;
configuration information used for transmitting uplink data;
configuration information used for transmitting uplink control signaling;
synchronization information used for synchronization;
configuration information used for receiving a second power-saving signal; or
capability information of the wireless network.

In some embodiments, the first information is transmitted via a data frame; or the first information is transmitted via a beacon frame.

In some embodiments, in response to a case where the main transceiver is in a wake-up state, the electronic device communicates with the wireless network based on the first information.

In some embodiments, the first information is carried in a second power-saving signal.

In some embodiments, the second power-saving signal further carries an identifier of a device to be woken up or an identifier of a device group to be woken up.

In some embodiments, the second power-saving signal further carries synchronization information, where the synchronization information is used for synchronization between the wireless network and the electronic device.

**Step 1330:** a second power-saving signal is transmitted.

Specific implementation details of the above wake-up method for a receiver may be referenced in the embodiment of FIG. 10, and will not be repeated here.

In summary, in the method provided in this embodiment, a first power-saving signal is transmitted, where the first power-saving signal is used to indicate whether to wake up the first receiver; and a second power-saving signal is transmitted, where the second power-saving signal is used to indicate whether to wake up the main transceiver. In a case where it is indicated to wake up the first receiver first and then wake up the main transceiver, this method reduces the power consumption of the electronic device compared to always maintaining the first receiver in a wake-up state.

In the method provided in this embodiment, further, in response to a case where the first receiver is in a wake-up state, first information is transmitted to the first receiver, where the first information is used for communication between the electronic device and the wireless network, so that the main transceiver of the electronic device does not need to read the first information from the beacon frame after being woken up, which may assist the electronic device in quickly establishing a connection with the wireless network.

With the continuous evolution of wireless communication technology, IoT technology is being applied to all aspects of production and life. Given the varying requirements for power consumption and size of IoT in different scenarios, zero-power IoT with ultra-low-power consumption, extremely small size, and battery-free design has emerged. In zero-power IoT, an electronic device may only have a first receiver in different communication scenarios or different communication processes. In order to save power, the first receiver is often in a non-wake-up state. FIG. 15 illustrates a flowchart of a wake-up method for a receiver provided in an exemplary embodiment of the present application. The method is performed by an electronic device, where the electronic device has a first receiver. The method includes the following content.

**Step 1510:** a first power-saving signal is received.

In an initial state, both the first receiver and the main transceiver of the electronic device are in a non-wake-up state. The non-wake-up state may also be understood as at least one of the following: a turn-off state, a sleep state, or a DRX monitoring state. Here, the sleep state includes at least one of a light sleep state, a deep sleep state, and an ultra-deep sleep state. The power consumption of the light sleep state is higher than that of the deep sleep state, and the power consumption of the deep sleep state is higher than that of the ultra-deep sleep state.

Here, the first power-saving signal is used to indicate whether to wake up the first receiver. As an example, the first receiver is a WUR.

In some embodiments, waking up the first receiver may also be equivalently understood as: monitoring transmission of downlink data or data frames through the first receiver; or may also be equivalently understood as: monitoring a control channel used to schedule uplink data or downlink data or data frames through the first receiver. The above three expressions have the same meaning in the embodiments of the present application.

In some embodiments, not waking up the first receiver may also be equivalently understood as: maintaining the first receiver in a turn-off state; or may also be equivalently understood as: maintaining the first receiver in a sleep state; or may also be equivalently understood as: maintaining the first receiver in a DRX monitoring state. The above four expressions have the same meaning in the embodiments of the present application.

In some embodiments, the first power-saving signal being used to indicate that the first receiver is to be woken up, may also be equivalently understood as: the first power-saving signal being used to indicate monitoring transmission of downlink data or data frames through the first receiver; or may also be equivalently understood as: the first power-saving signal being used to indicate monitoring a control channel used to schedule uplink data or downlink data or data frames through the first receiver. The above three expressions have the same meaning in the embodiments of the present application.

In some embodiments, the first power-saving signal being used to indicate that the first receiver is not to be woken up, may also be equivalently understood as: the first power-saving signal being used to indicate that the first receiver is to be maintained in a turn-off state; or may also be equivalently understood as: the first power-saving signal being used to indicate that the first receiver is to be maintained in a sleep state; or may also be equivalently understood as: the first power-saving signal being used to indicate that the first receiver is to be maintained in a DRX monitoring state. The above four expressions have the same meaning in the embodiments of the present application.

In some embodiments, the first power-saving signal is received by the first receiver.

In some embodiments, the electronic device is an active device, where the active device refers to a device that has its own power supply and is capable of actively generating and transmitting signals, such as a mobile phone, a computer, a smartwatch, or a smart bracelet.

In some embodiments, the electronic device is a passive device, where the passive device refers to a device that does not require a power supply or is capable of operating by receiving energy from other devices, which may be referred to as a zero-power device, a zero-power terminal, a low-power device, a low-power terminal or the like.

In some embodiments, the electronic device obtains energy from an environment, which may be referred to as an ambient power-enabled IoT device.

In some embodiments, the electronic device has an energy harvesting module used to harvest ambient energy from an environment, where the ambient energy is used to supply power to the first receiver.

In some embodiments, the electronic device is deployed in a fixed location, which may be referred to as a zero-power station, a low-power station, or the like.

In some embodiments, the first power-saving signal for indicating wake-up and the first power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In some embodiments, the first power-saving signal is a wake-up signal. A network device transmits a dedicated wake-up signal to the electronic device, and the dedicated wake-up signal is different from a power supply signal.

In some embodiments, the first power-saving signal is a power supply signal. The first power-saving signal is transmitted by a network device or a power supply node.

In a case where both the WUR (first receiver) and the main transceiver are in the turn-off state, since the network device cannot wake up the electronic device by transmitting signals to these receivers, the network device may wake up the WUR by transmitting a power supply signal.

In some embodiments, the first power-saving signal for indicating non-wake-up has a first waveform, for example, the first power-saving signal is a single-frequency sine wave, on which no information is modulated.

In some embodiments, the first power-saving signal for indicating wake-up is a sequence modulated using a first modulation method. For example, a sequence is modulated with OOK, such as 111000 or 101010, where 1 represents a high level of OOK, and 0 represents a low level of OOK.

The modulation method of the first power-saving signal may also be FSK, PSK, etc., and the sequence length and sequence may also be other values, which are not limited in the embodiments of the present application.

In some embodiments, it is indicated whether to wake up the WUR by changing a frequency of transmitting the first power-saving signal.

For example, the first power-saving signal is transmitted at a first frequency point or within a first frequency range, and the transmission at the first frequency point or within the first frequency range indicates that the WUR is to be woken up.

As another example, the first power-saving signal is transmitted at a second frequency point or within a second frequency range, and the transmission at the second frequency point or within the second frequency range indicates that the WUR is not to be woken up.

The first frequency point and the second frequency point may be located in the same frequency band or different frequency bands. The first frequency range and the second frequency range may be located in the same frequency band or different frequency bands.

The electronic device uses a peripheral circuit to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In some embodiments, the first power-saving signal may be received in any one of the following two methods:
**Method** 1: the first power-saving signal is received through a second receiver.

FIG. 9 illustrates a schematic diagram of receiving a first power-saving signal provided in an exemplary embodiment of the present application. As illustrated in (a) of FIG. 9, the electronic device further includes a second receiver 730, and the electronic device receives the first power-saving signal through the second receiver 730.

Here, operating power consumption of the second receiver 730 is lower than operating power consumption of the first receiver 710. For example, a receiver type of the second receiver 730 is an RF-based receiver type (RF envelope detection receiver type), and a receiver type of the first receiver 710 is an intermediate frequency-based receiver. Therefore, the power consumption of the second receiver 730 is several microwatts, such as 5 microwatts, and the power consumption of the first receiver 710 is hundreds of microwatts, such as 100 microwatts, so the operating power consumption of the second receiver 730 is lower than the operating power consumption of the first receiver 710.

In some embodiments, the second receiver 730 and the first receiver 710 are on the same chip or different chips and are connected by an electronic lead.

**Method** 2: the first power-saving signal is received through a first circuit.

As illustrated in (b) of FIG. 9, the electronic device further includes a first circuit 740, and the electronic device receives the first power-saving signal through the first circuit 740.

In some embodiments, the first circuit 740 includes a wireless energy harvesting circuit of the electronic device, or a peripheral circuit of the first receiver 710.

The wireless energy harvesting circuit is used to harvest wireless energy. In a case where both the first receiver 710 and the main transceiver 720 are turned off, the wireless energy harvesting circuit still maintains an operating state thereof and continues to harvest wireless energy.

The electronic device uses the first circuit 740 to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In some embodiments, the operating power consumption of the first receiver is lower than a preset threshold. The preset threshold is generally a small value relative to the operating power consumption of the main transceiver, enabling the operating power consumption of the first receiver to be much smaller than the operating power consumption of the main transceiver. For example, the preset threshold is 1 milliwatt, the operating power consumption of the main transceiver is 50 milliwatts, and the operating power consumption of the first receiver is 0.5 milliwatts.

In some embodiments, the first receiver uses a first receiver parameter, where the first receiver parameter includes a first receiver type and/or a first receiving bandwidth.

The receiver type represents an architecture type of a receiver used by the electronic device, such as an RF-based receiver or an intermediate frequency (zero-IF)-based receiver; and the receiving bandwidth represents a bandwidth used to receive signals.

In some embodiments, the first receiver type is an RF-based receiver type. An RF signal is directly detected by using the first receiver of the RF-based receiver type (RF envelope detection receiver type), without requiring frequency conversion on the RF signal, and thus there is no need to convert the RF signal to a baseband signal, which may reduce the power consumption of the first receiver.

Since this receiver type, based on parameters of its implemented RF filter or matched network, can only receive the first power-saving signal within a specified frequency range, the first power-saving signal may be received within a first frequency band or on a first channel within the first frequency band.

In some embodiments, the first power-saving signal is received within a first frequency band.

The receiving bandwidth of the first receiver is equal to a bandwidth of the first frequency band, and the first receiver receives the first power-saving signal within a bandwidth not exceeding the bandwidth range of the first frequency band. For example, the first power-saving signal is received at 920 MHz to 925 MHz.

In some embodiments, the first power-saving signal is received on a first channel within the first frequency band.

In a case where the first frequency band includes a plurality of channels, the first power-saving signal is received on one of the channels (the first channel), and the receiving bandwidth of the first receiver is equal to a bandwidth of the first channel. For example, 20 channels with a bandwidth of 250 kHz are allocated within a range of 920 MHz to 925 MHz, and the first power-saving signal is received on the first channel therein.

As another example, in a case where the first receiver operates at 2.4 GHz, a frequency band is 2,400 MHz to 2,485 MHz, within which a plurality of channels may be allocated, such as channels at 2,400 MHz to 2,420 MHz, channels at 2,420 MHz to 2,440 MHz, channels at 2,440 MHz to 2,460 MHz, and so on. Therefore, the first power-saving signal may be received on the first channel within the frequency band, for example, on a channel at 2,400 MHz to 2,420 MHz.

In some embodiments, the first channel is any channel within the first frequency band; or
the first channel is a designated channel within the first frequency band; or
the first channel is a most central channel within the first frequency band; or
the first channel is one of two most central channels within the first frequency band.

In a case where the number of channels included in the first frequency band is odd, the first channel is the most central channel within the first frequency band; and in a case where the number of channels included in the first frequency band is even, the first channel is one of the two most central channels within the first frequency band.

For example, in a case where the first frequency band includes five channels, the first channel is the most central channel (the third channel); or in a case where the first frequency band includes four channels, the first channel is one of the two most central channels (the second channel or the third channel).

In summary, in the method provided in this embodiment, a first power-saving signal is received, where the first power-saving signal is used to indicate whether to wake up the first receiver. In a case where only a low-power receiver is required to operate, only the first receiver is woken up, thereby reducing the power consumption of the electronic device.

FIG. 16 illustrates a flowchart of a wake-up method for a receiver provided in an exemplary embodiment of the present application. The method is performed by an electronic device, where the electronic device has a first receiver and a main transceiver, with operating power consumption of the first receiver lower than operating power consumption of the main transceiver. The method includes the following content.

**Step 1510:** a first power-saving signal is received.

Specific implementation details may be referenced in step 1510 of the embodiment of FIG. 15, and will not be repeated here.

**Step 1520:** in response to a case where the first receiver is in a wake-up state, first information is received through the first receiver.

Here, the first information is used for communication between the electronic device and a wireless network. The wireless network includes at least one of a WiFi network, a cellular network, or a wireless power supply network.

In some embodiments, the first information includes: information used for communication between the first receiver and the wireless network.

In some embodiments, the electronic device is an active device, where the active device refers to a device that has its own power supply and is capable of actively generating and transmitting signals, such as a mobile phone, a computer, a smartwatch, or a smart bracelet.

In some embodiments, the electronic device is a passive device, where the passive device refers to a device that does not require a power supply or is capable of operating by receiving energy from other devices, which may be referred to as a zero-power device, a zero-power terminal, a low-power device, a low-power terminal, or the like.

In some embodiments, the electronic device obtains energy from an environment, which may be referred to as an ambient power-enabled IoT device.

In some embodiments, the electronic device has an energy harvesting module used to harvest ambient energy from an environment, where the ambient energy is used to supply power to the first receiver.

In some embodiments, the electronic device is deployed in a fixed location, which may be referred to as a zero-power station, a low-power station, or the like.

In some embodiments, in response to a case where the first receiver is in the wake-up state, the network device or the power supply node 630 in the embodiment of FIG. 6 transmits first information to the first receiver, where the first information may be referred to as auxiliary information, assisting the electronic device in quickly establishing a connection with the wireless network and completing communication after waking up the main transceiver.

In some embodiments, the first information includes: information used for communication between the main transceiver and the wireless network. It may also be equivalently understood as follows: the first information includes: information used for communication between the main transmitter-receiver (or main air interface communication unit) and the wireless network.

In some embodiments, the first information includes, but is not limited to, at least one of the following:
- configuration information used for receiving downlink data;
- configuration information used for receiving downlink control signaling;
- configuration information used for receiving a system broadcast;
- configuration information used for transmitting uplink data;
- configuration information used for transmitting uplink control signaling;
- synchronization information used for synchronization;
- configuration information used for receiving a second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The configuration information used for transmitting uplink data includes at least one of the following pieces of information: a time-domain position for transmitting the uplink data, a frequency position for transmitting the uplink data, or a period for transmitting the uplink data.

The configuration information used for transmitting uplink control signaling includes at least one of the following pieces of information: a time-domain position for transmitting the uplink control signaling, or a frequency position for transmitting the uplink control signaling.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network.

The configuration information used for receiving a second power-saving signal includes at least one of the following pieces of information: a time-domain position for receiving the second power-saving signal, or a frequency position for receiving the second power-saving signal. The second power-saving signal is used to indicate whether to wake up the main transceiver.

The capability information of the wireless network includes at least one of the following pieces of information: a bit rate supported by the wireless network, or an MCS supported by the wireless network, and these pieces of information are generally carried in a beacon frame.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In some embodiments, a form of the frequency position includes: a channel form, a bandwidth form, a carrier form, or the like. For example, the downlink data is received on the first channel.

In some embodiments, relevant information of the frequency position may enable the electronic device to obtain the frequency position at which the main transceiver communicates with the wireless network through the first receiver, to avoid waking up the main transceiver and then obtaining the frequency position by frequency scanning, thereby reducing power consumption.

In some embodiments, the first information is transmitted via a data frame; or the first information is transmitted via a beacon frame.

**Step 1530:** a second power-saving signal is received.

In some embodiments, the electronic device is an active device, where the active device refers to a device that has its own power supply and is capable of actively generating and transmitting signals, such as a mobile phone, a computer, a smartwatch, or a smart bracelet.

In some embodiments, the electronic device further includes a main transceiver, with operating power consumption of the first receiver lower than operating power consumption of the main transceiver.

Here, the second power-saving signal is used to indicate whether to wake up the main transceiver.

In some embodiments, step 1530 may be performed before step 1510. The embodiments of the present application are described by way of example where step 1510 is performed first, and then step 1530 is performed.

In some embodiments, waking up the main transceiver, may also be equivalently understood as: waking up the main transmitter-receiver; or may also be equivalently understood as: waking up the main air interface communication unit. The above three expressions have the same meaning in the embodiments of the present application.

In some embodiments, waking up the main transceiver, may also be equivalently understood as: monitoring transmission of downlink data or data frames through the main transceiver; or may also be equivalently understood as: monitoring a control channel used to schedule uplink data or downlink data or data frames through the main transceiver. The above three expressions have the same meaning in the embodiments of the present application.

In some embodiments, not waking up the main transceiver, may also be equivalently understood as: maintaining the main transceiver in a turn-off state; or may also be equivalently understood as: maintaining the main transceiver in a DRX monitoring state. The above three expressions have the same meaning in the embodiments of the present application.

In some embodiments, the second power-saving signal for indicating wake-up and the second power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In some embodiments, the reception of the second power-saving signal includes any one of the following two situations:
**Situation** 1: after the first receiver is woken up, the second power-saving signal is received through the first receiver.

The first receiver receives the second power-saving signal in a case of being woken up, demodulates the second power-saving signal, and transmits the corresponding content to the main transceiver, indicating whether to wake up the main transceiver.

In some embodiments, after the first receiver is woken up, which may also be equivalently understood as that: after the first receiver enters a state of monitoring the transmission of downlink data or data frames; or may also be equivalently understood as that: after the first receiver enters a state of monitoring the control channel used to schedule uplink data or downlink data or data frames. The above three expressions have the same meaning in the embodiments of the present application.

In some embodiments, the first receiver monitors the second power-saving signal based on a DRX cycle; and in response to having monitored the second power-saving signal associated with a first DRX cycle, maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The first receiver monitors the second power-saving signals based on a DRX cycle; and in response to having monitored a second power-saving signal associated with a first DRX cycle, maintains the main transceiver in a wake-up state during an active time period in the first DRX cycle, according to a wake-up indication carried by the second power-saving signal, or maintains the main transceiver in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The first receiver monitors the second power-saving signal based on a DRX cycle; in response to having monitored the second power-saving signal associated with a first DRX cycle, maintains the main transceiver in a wake-up state during an active time period in the first DRX cycle, according to an indication of the second power-saving signal associated with the first DRX cycle; and in response to having not monitored the second power-saving signal associated with the first DRX cycle, maintains the main transceiver in a non-wake-up state during the active time period in the first DRX cycle.

In some embodiments, the second power-saving signal associated with the first DRX cycle may be transmitted before the active time period in the first DRX cycle or at an initial position of the active time period in the first DRX cycle.

**Situation** 2: the second power-saving signal is received through the main transceiver.

Here, both the first receiver and the main transceiver are in a non-wake-up state.

In some embodiments, the main transceiver monitors the second power-saving signal based on a DRX cycle; and in response to having monitored the second power-saving signal associated with a first DRX cycle, the main transceiver is maintained in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The main transceiver monitors the second power-saving signals based on a DRX cycle; and in response to having monitored a second power-saving signal associated with a first DRX cycle, the main transceiver is maintained in a wake-up state during an active time period in the first DRX cycle, according to a wake-up indication carried by the second power-saving signal, or the main transceiver is maintained in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The main transceiver monitors the second power-saving signal based on a DRX cycle; in response to having monitored the second power-saving signal associated with a first DRX cycle, the main transceiver is maintained in a wake-up state during an active time period in the first DRX cycle, according to an indication of the second power-saving signal associated with the first DRX cycle; and in response to having not monitored the second power-saving signal associated with the first DRX cycle, the main transceiver is maintained in a non-wake-up state during the active time period in the first DRX cycle.

In some embodiments, the second power-saving signal associated with the first DRX cycle may be transmitted before the active time period in the first DRX cycle or at an initial position of the active time period in the first DRX cycle.

In some embodiments, maintaining the main transceiver in a wake-up state during the active time period in the first DRX cycle, may also be equivalently understood as: monitoring the transmission of downlink data or data frames through the main transceiver at all times during the active time period in the first DRX cycle; or may also be equivalently understood as: monitoring the control channel used to schedule uplink data or downlink data or data frames through the main transceiver at all times during the active time period in the first DRX cycle. The above three expressions have the same meaning in the embodiments of the present application.

Maintaining the main transceiver in a non-wake-up state during the active time period in the first DRX cycle, may also be equivalently understood as: not monitoring, by the main transceiver, the transmission of downlink data or data frames during the active time period in the first DRX cycle; or may also be equivalently understood as: not monitoring, by the main transceiver, the control channel used to schedule uplink data or downlink data or data frames during the active time period in the first DRX cycle. The above three expressions have the same meaning in the embodiments of the present application.

A DRX cycle includes "on duration" and "opportunity for DRX," in which during the on duration (the active time period), the electronic device is in the wake-up state to receive data, and during the DRX opportunity, the electronic device is in the sleep state to receive no data.

For example, the electronic device monitors the second power-saving signal based on the DRX cycle; and in response to having monitored the second power-saving signal before the active time period in the first DRX cycle, where the second power-saving signal indicates that the main transceiver is to be in the wake-up state, maintains the main transceiver in the wake-up state during the active time period in the first DRX cycle.

In some embodiments, the first power-saving signal further carries an identifier of a device to be woken up or an identifier of a device group to be woken up.

In some embodiments, the second power-saving signal further carries an identifier of a device to be woken up or an identifier of a device group to be woken up.

The identifier of the device group to be woken up is also known as an ID of the device group to be woken up, which is the ID of the group to which a device to be woken up belongs. This group includes at least one device to be woken up.

Based on the ID of the device to be woken up or the ID of the device group to be woken up carried in the first power-saving signal or the second power-saving signal, it is determined whether to wake up the electronic device. In response to that an ID of the electronic device is the same as the ID of the device to be woken up, the electronic device will be woken up; and in response to that the ID of the electronic device is different from the ID of the device to be woken up, the electronic device will not be woken up. In response to that a group ID of the electronic device is the same as the ID of the device group to be woken up, the electronic device will be woken up; and in response to that the group ID of the electronic device is different from the ID of the group device to be woken up, the electronic device will not be woken up.

In some embodiments, the second power-saving signal further carries synchronization information used for synchronization of a wireless network and the electronic device. The synchronization includes time-domain synchronization and/or frequency-domain synchronization. The wireless network includes at least one of a WiFi network, a cellular network, or a wireless power supply network.

In some embodiments, the network device transmits the first information first, and then transmits the second power-saving signal.

In some embodiments, the first information is carried in the second power-saving signal.

After waking up the first receiver, the network device transmits the second power-saving signal. By receiving the second power-saving signal, the electronic device may simultaneously obtain at least one of the following: the first information, the information on whether to wake up the main transceiver, or the synchronization information used for synchronization.

**Step 1540:** in response to a case where the main transceiver is in a wake-up state, communication with the wireless network is performed based on the first information.

In response to the case where the main transceiver is in the wake-up state, the electronic device obtains configuration of the wireless network based on the content carried in the first information.

For example, in a case where the first information includes configuration information used for receiving downlink data, the main transceiver receives the downlink data based on information such as a time-domain position for receiving the downlink data and a frequency position for receiving the downlink data. Before receiving the downlink data, the main receiver may be maintained in a non-wake-up state as much as possible, thereby saving more power.

In a case where the first information includes configuration information used for receiving downlink control signaling, where the downlink control signaling is used to indicate relevant information for receiving downlink data, the main transceiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network. By receiving the configuration information in advance, the main transceiver may be in a non-wake-up state for a longer period of time, thereby reducing the power consumption of the electronic device.

In a case where the first information includes configuration information used for receiving a system broadcast, the main transceiver receives the system broadcast of the wireless network based on information such as a time-domain position of a broadcast frame and a frequency position of the broadcast frame. By receiving the configuration information of the system broadcast in advance, the main receiver may be maintained in a non-wake-up state during both stages of receiving the system broadcast and obtaining the configuration information in the system broadcast, thereby saving more power.

In a case where the first information includes configuration information used for transmitting uplink data, the main transceiver transmits the uplink data based on information such as a time-domain position for transmitting the uplink data and a frequency position for transmitting the uplink data. Before receiving the uplink data, the main receiver may be maintained in a non-wake-up state as much as possible, thereby saving more power.

In a case where the first information includes configuration information used for transmitting uplink control signaling, where the uplink control signaling is used to provide feedback on whether downlink data has been received, the main transceiver monitors the uplink control signaling based on information such as a time-domain position for transmitting the uplink control signaling and a frequency position for transmitting the uplink control signaling. By receiving the configuration information in advance, the main transceiver may be in a non-wake-up state for a longer period of time, thereby reducing the power consumption of the electronic device.

In a case where the first information includes synchronization information used for synchronization, the electronic device, based on synchronization information for time-domain synchronization and/or synchronization information for frequency-domain synchronization, enables the main transceiver to attain the time-frequency synchronization with the wireless network, so that the main transceiver does not need to perform the time-frequency synchronization after being woken up.

In a case where the first information includes configuration information used for receiving the second power-saving signal, the main transceiver monitors or receives the second power-saving signal based on information such as a time-domain position for receiving the second power-saving signal and a frequency position for receiving the second power-saving signal. By receiving the configuration information in advance, the main transceiver may be in a non-wake-up state for a longer period of time, thereby reducing the power consumption of the electronic device.

In a case where the first information includes capability information of the wireless network, the main transceiver communicates with the wireless network based on information such as a bit rate supported by the wireless network and an MCS supported by the wireless network, for example, communicating with the wireless network at a bit rate of 128 kilobits per second. Thus, the main transceiver does not need to read other content, such as a beacon frame, after being woken up, to obtain the capability information, thereby reducing the power consumption of the electronic device.

After receiving the first information, the electronic device establishes a connection or association with the network using the main transceiver, and then performs communication. The main transceiver uses communication protocols in the related technology, such as 802.11b and 802.11n, thereby enabling the electronic device to communicate with network devices (such as APs) in the related technology.

In summary, in the method provided in this embodiment, in response to a case where the first receiver is in a wake-up state, first information is received through the first receiver, where the first information is used for communication between the electronic device and the wireless network, so that the main transceiver of the electronic device does not need to read the first information from the beacon frame after being woken up, which may assist the electronic device in quickly establishing a connection with the wireless network, thereby saving the power of the electronic device.

Since the operating power consumption of the first receiver is lower than the operating power consumption of the main transceiver, receiving, by the first receiver, information communicated between the first receiver and the wireless network may reduce the power consumption of the electronic device, compared to using the main transceiver to receive the above information.

In some embodiments, the first information includes: information used for communication between the first receiver and the wireless network.

In some embodiments, the first information includes at least one of the following:
- configuration information used for receiving downlink data;
- configuration information used for receiving downlink control signaling;
- configuration information used for receiving a system broadcast;
- synchronization information used for synchronization;
- configuration information used for receiving the first power-saving signal;
- configuration information used for receiving the second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network, so that the main transceiver does not need to perform the time-frequency synchronization after being woken up.

The configuration information used for receiving the first power-saving signal includes at least one of the following pieces of information: a time-domain position for receiving the first power-saving signal, or a frequency position for receiving the first power-saving signal.

The configuration information used for receiving the second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame, so the main transceiver does not need to read the beacon frame after being woken up, thus reducing the power consumption of the electronic device.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In some embodiments, the first receiver communicates with the wireless network based on the content carried in the first information.

For example, in a case where the first information includes configuration information used for receiving downlink data, the first receiver receives the downlink data based on information such as a time-domain position for receiving the downlink data and a frequency position for receiving the downlink data.

In a case where the first information includes configuration information used for receiving downlink control signaling, where the downlink control signaling is used to indicate relevant information for receiving downlink data, the first receiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network.

In a case where the first information includes configuration information used for receiving a system broadcast, the first receiver receives the system broadcast of the wireless network based on information such as a time-domain position of a broadcast frame and a frequency position of the broadcast frame.

In a case where the first information includes synchronization information used for synchronization, the first receiver, based on synchronization information for time-domain synchronization and/or synchronization information for frequency-domain synchronization, enables the first receiver to attain the time-frequency synchronization with the wireless network.

In a case where the first information includes configuration information used for receiving the first power-saving signal, the first receiver monitors or receives the first power-saving signal based on information such as a time-domain position for receiving the first power-saving signal and a frequency position for receiving the first power-saving signal.

In a case where the first information includes configuration information used for receiving the second power-saving signal, the first receiver monitors or receives the second power-saving signal based on information such as a time-domain position for receiving the second power-saving signal and a frequency position for receiving the second power-saving signal.

In a case where the first information includes capability information of the wireless network, the first receiver communicates with the wireless network based on information such as a bit rate supported by the wireless network and an MCS supported by the wireless network, for example, communicating with the wireless network at a bit rate of 8 kilobits per second.

In some embodiments, taking the wireless network as a WiFi network as an example, the first information includes at least one of the following pieces of information:
- timestamp information of the network when the network device communicates with the main transceiver;
- frequency position information of a communication channel used by the main transceiver during communication;
- time-domain position information of a beacon frame;
- capability information of the wireless network; or
- synchronization information used for synchronization.

In a case where the first information includes timestamp information of the network when the network device communicates with the main transceiver, the electronic device obtains the timestamp information in advance through the first receiver, so that the main transceiver may obtain the communication time of the network without reading the beacon frame after being woken up. Here, the main transceiver may be equivalently understood as a main transmitter-receiver or a main air interface communication unit.

In a case where the first information includes frequency position information of a communication channel used by the main transceiver during communication, the electronic device adjusts an operating channel to that frequency position, to avoid waking up the main transceiver and then obtaining the frequency position of the operating channel through frequency scanning of the main transceiver.

In a case where the first information includes time-domain position information of a beacon frame, the electronic device receives the beacon frame based on that time-domain position. For example, at a time-domain position of signal transmission of a non-beacon frame, the electronic device turns off the main transceiver; and at a time-domain position of transmission of the beacon frame, the electronic device turns on the main transceiver, thereby reducing power consumption. Moreover, considering the clock deviation of the electronic device, the main transceiver may be turned on at a first time-domain position. The first time-domain position is a time-domain position with a time margin before the time-domain position of the transmission of the beacon frame, where the time margin may be adjusted according to the actual situation.

In a case where the first information includes capability information of the wireless network, since the capability information of the wireless network is generally carried in the beacon frame, it is possible to avoid the main transceiver reading the beacon frame after being woken up, thereby reducing the power consumption of the electronic device.

In a case where the first information includes synchronization information used for synchronization, the first receiver attains the time-frequency synchronization with the wireless network, so that the main transceiver does not need to perform the time-frequency synchronization after being woken up.

In some embodiments, the first information includes downlink data, such as data with a data volume lower than a first threshold, or data with a transmission delay requirement lower than a first delay. The first threshold and the first delay are preset values or value ranges.

In some embodiments, the first information is received through the first receiver. The first receiver receives data with a data volume lower than a first threshold, or data with a transmission delay requirement lower than a first delay, without needing to use the main transceiver for reception, further reducing the power consumption of the electronic device.

In summary, in the method provided in this embodiment, in response to a case where the first receiver is in a wake-up state, first information is received through the first receiver, where the first information is used for communication between the electronic device and the wireless network. Furthermore, the communication with the wireless network is performed through the first receiver, without the need for the main transceiver, thereby saving the power of the electronic device.

In the above embodiments, step 1110 and step 1120 in the embodiment corresponding to FIG. 11 may be implemented in combination with the embodiment corresponding to FIG. 15 or the embodiment corresponding to FIG. 16. For example, step 1110 and step 1120 may be performed after step 1540, or step 1110 and step 1120 may be performed after step 1530.

The embodiment corresponding to FIG. 12 may be implemented in combination with the embodiment corresponding to FIG. 15 or the embodiment corresponding to FIG. 16. For example, step 1210 may be performed after step 1540, or step 1210 may be performed after step 1530.

FIG. 17 illustrates a flowchart of a wake-up method for a receiver provided in an exemplary embodiment of the present application. The method is performed by a network device or a power supply node. The method includes the following content.

**Step 1710:** a first power-saving signal is transmitted.

Here, the first power-saving signal is used to indicate whether to wake up a first receiver. An electronic device has the first receiver.

In some embodiments, the first power-saving signal for indicating wake-up and the first power-saving signal for indicating non-wake-up have at least one of the following:
different waveforms;
different modulation methods;
different sequence lengths;
different sequences;
different frequency points used;
different frequency ranges used; or
different values of information bits carried.

In some embodiments, the first power-saving signal is a wake-up signal.

In some embodiments, the first power-saving signal is a power supply signal.

In some embodiments, the first power-saving signal is transmitted by the network device or the power supply node.

In some embodiments, the electronic device further includes a second receiver, and the first power-saving signal is a signal received by the electronic device through the second receiver, with operating power consumption of the second receiver lower than operating power consumption of the first receiver.

In some embodiments, the electronic device further includes a first circuit, and the first power-saving signal is a signal received by the electronic device through the first circuit.

In some embodiments, the first circuit includes a wireless energy harvesting circuit of the electronic device or a peripheral circuit of the first receiver.

In some embodiments, operating power consumption of the first receiver is lower than a preset threshold.

In some embodiments, the first power-saving signal is a signal received by the electronic device through the first receiver.

In some embodiments, the electronic device is a passive device.

In some embodiments, the electronic device is an active device.

In some embodiments, the electronic device has an energy harvesting module used to harvest ambient energy from an environment, where the ambient energy is used to supply power to the first receiver.

In some embodiments, the first receiver uses a first receiver parameter, where the first receiver parameter includes a first receiver type and/or a first receiving bandwidth.

In some embodiments, the first receiver type is an RF-based receiver type.

In some embodiments, the first power-saving signal is transmitted within a first frequency band.

In some embodiments, the first power-saving signal is transmitted on a first channel within the first frequency band.

In some embodiments, the first channel is any channel within the first frequency band; or
the first channel is a designated channel within the first frequency band; or
the first channel is a most central channel within the first frequency band; or
the first channel is one of two most central channels within the first frequency band.

Specific implementation details of the above wake-up method for a receiver may be referenced in the embodiment of FIG. 15, and will not be repeated here.

In summary, in the method provided in this embodiment, a first power-saving signal is transmitted, where the first power-saving signal is used to indicate whether to wake up the first receiver. In a case where only a low-power receiver is required to operate, the first receiver is woken up without waking up other high-power receivers, thereby reducing the power consumption of the electronic device.

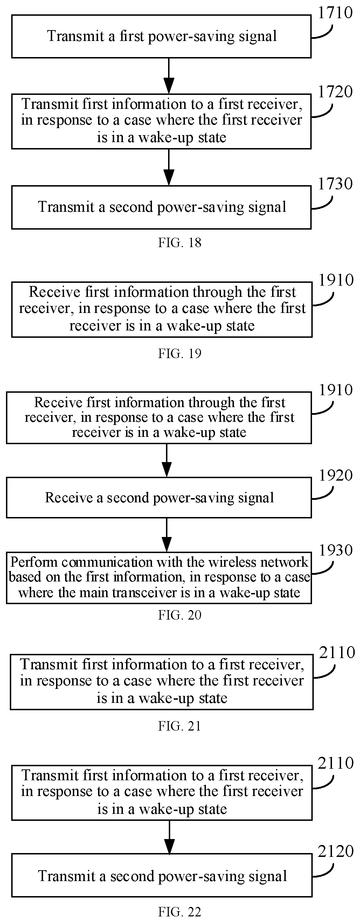

FIG. 18 illustrates a flowchart of a wake-up method for a receiver provided in an exemplary embodiment of the present application. The method is performed by a network device or a power supply node. The method includes the following content.

**Step 1710: a** first power-saving signal is transmitted.

**Step 1720:** in response to a case where a first receiver is in a wake-up state, first information is transmitted to the first receiver.

Here, the first information is used for communication between an electronic device and a wireless network.

In some embodiments, the first information includes: information used for communication between the first receiver and the wireless network.

In some embodiments, the first information includes at least one of the following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving a second power-saving signal; or
capability information of the wireless network.

In some embodiments, the first information includes: information used for communication between a main transceiver and the wireless network.

In some embodiments, the first information includes at least one of the following:
configuration information used for receiving downlink data;
configuration information used for receiving downlink control signaling;
configuration information used for receiving a system broadcast;
configuration information used for transmitting uplink data;
configuration information used for transmitting uplink control signaling;
synchronization information used for synchronization;
configuration information used for receiving a second power-saving signal; or
capability information of the wireless network.

In some embodiments, the first information is transmitted via a data frame; or the first information is transmitted via a beacon frame.

In some embodiments, in response to a case where the main transceiver is in a wake-up state, the electronic device communicates with the wireless network based on the first information.

In some embodiments, the first information is carried in a second power-saving signal.

In some embodiments, the second power-saving signal further carries an identifier of a device to be woken up or an identifier of a device group to be woken up.

In some embodiments, the second power-saving signal further carries synchronization information, where the synchronization information is used for synchronization between the wireless network and the electronic device.

**Step 1730:** a second power-saving signal is transmitted.

In some embodiments, the electronic device further includes a main transceiver, with operating power consumption of the first receiver lower than operating power consumption of the main transceiver. The second power-saving signal is used to indicate whether to wake up the main transceiver.

In some embodiments, after the first receiver is woken up, the second power-saving signal is transmitted to the first receiver.

In some embodiments, the second power-saving signal is a signal received by the electronic device through the main transceiver.

In some embodiments, the second power-saving signal is a signal monitored by the electronic device based on a DRX cycle; and in response to having monitored the second power-saving signal associated with a first DRX cycle, the electronic device maintains the main transceiver in a wake-up state or a non-wake-up state during an active time period in the first DRX cycle, according to an indication of the second power-saving signal associated with the first DRX cycle.

In some embodiments, the main transceiver is turned off by the electronic device in response to a case where a first condition is met.

In some embodiments, the first receiver is turned off by the electronic device in response to a case where a second condition is met.

In some embodiments, the first receiver and the main transceiver are turned off by the electronic device in response to a case where a third condition is met.

Specific implementation details of the above wake-up method for a receiver may be referenced in the embodiment of FIG. 16, and will not be repeated here.

In summary, in the method provided in this embodiment, a first power-saving signal is transmitted, where the first power-saving signal is used to indicate whether to wake up the first receiver; and a second power-saving signal is transmitted, where the second power-saving signal is used to indicate whether to wake up the main transceiver. In a case where it is indicated to wake up the first receiver first and then wake up the main transceiver, this method reduces the power consumption of the electronic device compared to always maintaining the first receiver in a wake-up state.

In the method provided in this embodiment, further, in response to a case where the first receiver is in a wake-up state, first information is transmitted to the first receiver, where the first information is used for communication between the electronic device and the wireless network, so that the main transceiver of the electronic device does not need to read the first information from the beacon frame after being woken up, which may assist the electronic device in quickly establishing a connection with the wireless network.

With the continuous evolution of wireless communication technology, IoT technology is being applied to all aspects of production and life. Given the varying requirements for power consumption and delay of IoT devices in different scenarios, electronic devices used in IoT often face the problem of slow receiver wake-up speeds during communication. FIG. 19 illustrates a flowchart of an information transmission method provided in an exemplary embodiment of the present application. The method is performed by an electronic device, where the electronic device has a first receiver and a main transceiver, with operating power consumption of the first receiver lower than operating power consumption of the main transceiver. The method includes the following content.

**Step 1910:** in response to a case where the first receiver is in a wake-up state, first information is received through the first receiver.

Here, the first information is used for communication between the electronic device and a wireless network. The wireless network includes at least one of a WiFi network, a cellular network, or a wireless power supply network.

In some embodiments, being in a wake-up state includes at least one of the following:
- constantly being in a wake-up state;
- periodically being in a wake-up state; or
- being in a wake-up state upon receiving the first power-saving signal.

Here, the first power-saving signal is used to indicate whether to wake up the first receiver. This embodiment is described by way of example where the first receiver is constantly in a wake-up state.

In some embodiments, the first information includes: information used for communication between the first receiver and the wireless network.

In some embodiments, the electronic device is an active device, where the active device refers to a device that has its own power supply and is capable of actively generating and transmitting signals, such as a mobile phone, a computer, a smartwatch, or a smart bracelet.

In some embodiments, the electronic device is a passive device, where the passive device refers to a device that does not require a power supply or is capable of operating by receiving energy from other devices, which may be referred to as a zero-power device, a zero-power terminal, a low-power device, a low-power terminal, or the like.

In some embodiments, the electronic device obtains energy from an environment, which may be referred to as an ambient power-enabled IoT device.

In some embodiments, the electronic device has an energy harvesting module used to harvest ambient energy from an environment, where the ambient energy is used to supply power to the first receiver.

In some embodiments, the electronic device is deployed in a fixed location, which may be referred to as a zero-power station, a low-power station, or the like.

In some embodiments, in response to a case where the first receiver is in the wake-up state, the network device or the power supply node 630 in the embodiment of FIG. 6 transmits the first information to the first receiver, where the first information may be referred to as auxiliary information, assisting the electronic device in quickly establishing a connection with the wireless network and completing communication after waking up the main transceiver.

In some embodiments, the first information includes: information used for communication between the main transceiver and the wireless network. It may also be equivalently understood as follows: the first information includes: information used for communication between the main transmitter-receiver (or main air interface communication unit) and the wireless network.

In some embodiments, the first information includes, but is not limited to, at least one of the following:
- configuration information used for receiving downlink data;
- configuration information used for receiving downlink control signaling;
- configuration information used for receiving a system broadcast;
- configuration information used for transmitting uplink data;
- configuration information used for transmitting uplink control signaling;
- synchronization information used for synchronization;
- configuration information used for receiving a second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The configuration information used for transmitting uplink data includes at least one of the following pieces of information: a time-domain position for transmitting the uplink data, a frequency position for transmitting the uplink data, or a period for transmitting the uplink data.

The configuration information used for transmitting uplink control signaling includes at least one of the following pieces of information: a time-domain position for transmitting the uplink control signaling, or a frequency position for transmitting the uplink control signaling.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network.

The configuration information used for receiving a second power-saving signal includes at least one of the following pieces of information: a time-domain position for receiving the second power-saving signal, or a frequency position for receiving the second power-saving signal. The second power-saving signal is used to indicate whether to wake up the main transceiver.

The capability information of the wireless network includes at least one of the following pieces of information: a bit rate supported by the wireless network, or an MCS supported by the wireless network, and these pieces of information are generally carried in a beacon frame.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In some embodiments, a form of the frequency position includes: a channel form, a bandwidth form, a carrier form, or the like. For example, the downlink data is received on the first channel.

In some embodiments, relevant information of the frequency position may enable the electronic device to obtain the frequency position at which the main transceiver communicates with the wireless network through the first receiver, to avoid waking up the main transceiver and then obtaining the frequency position by frequency scanning, thereby reducing power consumption.

In some embodiments, the first information is transmitted via a data frame; or the first information is transmitted via a beacon frame.

In summary, in the method provided in this embodiment, in response to a case where the first receiver is in a wake-up state, first information is received through the first receiver, where the first information is used for communication between the electronic device and the wireless network, so that the main transceiver of the electronic device does not need to read the first information from the beacon frame after being woken up, which may assist the electronic device in quickly establishing a connection with the wireless network.

FIG. 20 illustrates a flowchart of an information transmission method provided in an exemplary embodiment of the present application. The method is performed by an electronic device, where the electronic device has a first receiver and a main transceiver, with operating power consumption of the first receiver lower than operating power consumption of the main transceiver. The method includes the following content.

**Step 1910:** in response to a case where the first receiver is in a wake-up state, first information is received through the first receiver.

Specific implementation details may be referenced in step 1910 of the embodiment of FIG. 19, and will not be repeated here.

**Step 1920:** a second power-saving signal is received.

Here, the second power-saving signal is used to indicate whether to wake up the main transceiver.

In some embodiments, waking up the main transceiver, may also be equivalently understood as: waking up the main transmitter-receiver; or may also be equivalently understood as: waking up the main air interface communication unit. The above three expressions have the same meaning in the embodiments of the present application.

In some embodiments, waking up the main transceiver, may also be equivalently understood as: monitoring transmission of downlink data or data frames through the main transceiver; or may also be equivalently understood as: monitoring a control channel used to schedule uplink data or downlink data or data frames through the main transceiver. The above three expressions have the same meaning in the embodiments of the present application.

In some embodiments, not waking up the main transceiver, may also be equivalently understood as: maintaining the main transceiver in a turn-off state; or may also be equivalently understood as: maintaining the main transceiver in a DRX monitoring state. The above three expressions have the same meaning in the embodiments of the present application.

In some embodiments, the second power-saving signal for indicating wake-up and the second power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In some embodiments, the reception of the second power-saving signal includes any one of the following two situations:
**Situation 1:** after the first receiver is woken up, the second power-saving signal is received through the first receiver.

The first receiver receives the second power-saving signal in a case of being woken up, demodulates the second power-saving signal, and transmits the corresponding content to the main transceiver, indicating whether to wake up the main transceiver.

In some embodiments, after the first receiver is woken up, which may also be equivalently understood as that: after the first receiver enters a state of monitoring the transmission of downlink data or data frames; or may also be equivalently understood as that: after the first receiver enters a state of monitoring the control channel used to schedule uplink data or downlink data or data frames. The above three expressions have the same meaning in the embodiments of the present application.

In some embodiments, the first receiver monitors the second power-saving signal based on a DRX cycle; and in response to having monitored the second power-saving signal associated with a first DRX cycle, maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The first receiver monitors the second power-saving signals based on a DRX cycle; and in response to having monitored a second power-saving signal associated with a first DRX cycle, maintains the main transceiver in a wake-up state during an active time period in the first DRX cycle, according to a wake-up indication carried by the second power-saving signal, or maintains the main transceiver in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The first receiver monitors the second power-saving signal based on a DRX cycle; in response to having monitored the second power-saving signal associated with a first DRX cycle, maintains the main transceiver in a wake-up state during an active time period in the first DRX cycle, according to an indication of the second power-saving signal associated with the first DRX cycle; and in response to having not monitored the second power-saving signal associated with the first DRX cycle, maintains the main transceiver in a non-wake-up state during the active time period in the first DRX cycle.

In some embodiments, the second power-saving signal associated with the first DRX cycle may be transmitted before the active time period in the first DRX cycle or at an initial position of the active time period in the first DRX cycle.

**Situation 2:** the second power-saving signal is received through the main transceiver.

Here, both the first receiver and the main transceiver are in a non-wake-up state.

In some embodiments, the main transceiver monitors the second power-saving signal based on a DRX cycle; and in response to having monitored the second power-saving signal associated with a first DRX cycle, the main transceiver is maintained in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The main transceiver monitors the second power-saving signals based on a DRX cycle; and in response to having monitored a second power-saving signal associated with a first DRX cycle, the main transceiver is maintained in a wake-up state during an active time period in the first DRX cycle, according to a wake-up indication carried by the second power-saving signal, or the main transceiver is maintained in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The main transceiver monitors the second power-saving signal based on a DRX cycle; in response to having monitored the second power-saving signal associated with a first DRX cycle, the main transceiver is maintained in a wake-up state during an active time period in the first DRX cycle, according to an indication of the second power-saving signal associated with the first DRX cycle; and in response to having not monitored the second power-saving signal associated with the first DRX cycle, the main transceiver is maintained in a non-wake-up state during the active time period in the first DRX cycle.

In some embodiments, the second power-saving signal associated with the first DRX cycle may be transmitted before the active time period in the first DRX cycle or at an initial position of the active time period in the first DRX cycle.

In some embodiments, maintaining the main transceiver in a wake-up state during the active time period in the first DRX cycle, may also be equivalently understood as: monitoring the transmission of downlink data or data frames through the main transceiver at all times during the active time period in the first DRX cycle; or may also be equivalently understood as: monitoring the control channel used to schedule uplink data or downlink data or data frames through the main transceiver at all times during the active time period in the first DRX cycle. The above three expressions have the same meaning in the embodiments of the present application.

Maintaining the main transceiver in a non-wake-up state during the active time period in the first DRX cycle, may also be equivalently understood as: not monitoring, by the main transceiver, the transmission of downlink data or data frames during the active time period in the first DRX cycle; or may also be equivalently understood as: not monitoring, by the main transceiver, the control channel used to schedule uplink data or downlink data or data frames during the active time period in the first DRX cycle. The above three expressions have the same meaning in the embodiments of the present application.

A DRX cycle includes "on duration" and "opportunity for DRX," in which during the on duration (the active time period), the electronic device is in the wake-up state to receive data, and during the DRX opportunity, the electronic device is in the sleep state to receive no data.

For example, the electronic device monitors the second power-saving signal based on the DRX cycle; and in response to having monitored the second power-saving signal before the active time period in the first DRX cycle, where the second power-saving signal indicates that the main transceiver is to be in the wake-up state, maintains the main transceiver in the wake-up state during the active time period in the first DRX cycle.

In some embodiments, the second power-saving signal further carries an identifier of a device to be woken up or an identifier of a device group to be woken up.

The identifier of the device group to be woken up is also known as an ID of the device group to be woken up, which is the ID of the group to which a device to be woken up belongs. This group includes at least one device to be woken up.

Based on the ID of the device to be woken up or the ID of the device group to be woken up carried in the second power-saving signal, it is determined whether to wake up the electronic device. In response to that an ID of the electronic device is the same as the ID of the device to be woken up, the electronic device will be woken up; and in response to that the ID of the electronic device is different from the ID of the device to be woken up, the electronic device will not be woken up. In response to that a group ID of the electronic device is the same as the ID of the device group to be woken up, the electronic device will be woken up; and in response to that the group ID of the electronic device is different from the ID of the group device to be woken up, the electronic device will not be woken up.

In some embodiments, the second power-saving signal further carries synchronization information used for synchronization of a wireless network and the electronic device. The synchronization includes time-domain synchronization and/or frequency-domain synchronization. The wireless network includes at least one of a WiFi network, a cellular network, or a wireless power supply network.

In some embodiments, the network device transmits the first information first, and then transmits the second power-saving signal.

In some embodiments, the first information is carried in the second power-saving signal.

After waking up the first receiver, the network device transmits the second power-saving signal. By receiving the second power-saving signal, the electronic device may simultaneously obtain at least one of the following: the first information, the information on whether to wake up the main transceiver, or the synchronization information used for synchronization.

**Step 1930:** in response to a case where the main transceiver is in a wake-up state, communication with the wireless network is performed based on the first information.

In response to the case where the main transceiver is in the wake-up state, the electronic device obtains configuration of the wireless network based on the content carried in the first information.

For example, in a case where the first information includes configuration information used for receiving downlink data, the main transceiver receives the downlink data based on information such as a time-domain position for receiving the downlink data and a frequency position for receiving the downlink data. Before receiving the downlink data, the main receiver may be maintained in a non-wake-up state as much as possible, thereby saving more power.

In a case where the first information includes configuration information used for receiving downlink control signaling, where the downlink control signaling is used to indicate relevant information for receiving downlink data, the main transceiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network. By receiving the configuration information in advance, the main transceiver may be in a non-wake-up state for a longer period of time, thereby reducing the power consumption of the electronic device.

In a case where the first information includes configuration information used for receiving a system broadcast, the main transceiver receives the system broadcast of the wireless network based on information such as a time-domain position of a broadcast frame and a frequency position of the broadcast frame. By receiving the configuration information of the system broadcast in advance, the main receiver may be maintained in a non-wake-up state during both stages of receiving the system broadcast and obtaining the configuration information in the system broadcast, thereby saving more power.

In a case where the first information includes configuration information used for transmitting uplink data, the main transceiver transmits the uplink data based on information such as a time-domain position for transmitting the uplink data and a frequency position for transmitting the uplink data. Before receiving the uplink data, the main receiver may be maintained in a non-wake-up state as much as possible, thereby saving more power.

In a case where the first information includes configuration information used for transmitting uplink control signaling, where the uplink control signaling is used to provide feedback on whether downlink data has been received, the main transceiver monitors the uplink control signaling based on information such as a time-domain position for transmitting the uplink control signaling and a frequency position for transmitting the uplink control signaling. By receiving the configuration information in advance, the main transceiver may be in a non-wake-up state for a longer period of time, thereby reducing the power consumption of the electronic device.

In a case where the first information includes synchronization information used for synchronization, the electronic device, based on synchronization information for time-domain synchronization and/or synchronization information for frequency-domain synchronization, enables the main transceiver to attain the time-frequency synchronization with the wireless network, so that the main transceiver does not need to perform the time-frequency synchronization after being woken up.

In a case where the first information includes configuration information used for receiving the second power-saving signal, the main transceiver monitors or receives the second power-saving signal based on information such as a time-domain position for receiving the second power-saving signal and a frequency position for receiving the second power-saving signal. By receiving the configuration information in advance, the main transceiver may be in a non-wake-up state for a longer period of time, thereby reducing the power consumption of the electronic device.

In a case where the first information includes capability information of the wireless network, the main transceiver communicates with the wireless network based on information such as a bit rate supported by the wireless network and an MCS supported by the wireless network, for example, communicating with the wireless network at a bit rate of 128 kilobits per second. Thus, the main transceiver does not need to read other content, such as a beacon frame, after being woken up, to obtain the capability information, thereby reducing the power consumption of the electronic device.

After receiving the first information, the electronic device establishes a connection or association with the network using the main transceiver, and then performs communication. The main transceiver uses communication protocols in the related technology, such as 802.11b and 802.11n, thereby enabling the electronic device to communicate with network devices (such as APs) in the related technology.

In summary, in the method provided in this embodiment, in response to a case where the first receiver is in a wake-up state, first information is received through the first receiver, where the first information is used for communication between the electronic device and the wireless network, so that the main transceiver of the electronic device does not need to read the first information from the beacon frame after being woken up, which may assist the electronic device in quickly establishing a connection with the wireless network.

In the method provided in this embodiment, further, the second power-saving signal is received through the first receiver after the first receiver is woken up, and then the first receiver transmits the corresponding content to the main transceiver after demodulating the second power-saving signal. Since the operating power consumption of the first receiver is lower than the operating power consumption of the main transceiver, the power consumption of the electronic device is reduced.

In the method provided in this embodiment, further, the second power-saving signal is monitored based on the DRX cycle. Based on the DRX mechanism, using the main transceiver consumes less power than using the first receiver, so the first receiver is not required, thereby decoupling the first receiver from the main transceiver to adapt to different application scenarios.

Since the operating power consumption of the first receiver is lower than the operating power consumption of the main transceiver, receiving, by the first receiver, information communicated between the first receiver and the wireless network may reduce the power consumption of the electronic device, compared to using the main transceiver to receive the above information.

In some embodiments, the first information includes: information used for communication between the first receiver and the wireless network.

In some embodiments, the first information includes at least one of the following:
- configuration information used for receiving downlink data;
- configuration information used for receiving downlink control signaling;
- configuration information used for receiving a system broadcast;
- synchronization information used for synchronization;
- configuration information used for receiving the first power-saving signal;
- configuration information used for receiving the second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network, so that the main transceiver does not need to perform the time-frequency synchronization after being woken up.

The configuration information used for receiving the first power-saving signal includes at least one of the following pieces of information: a time-domain position for receiving the first power-saving signal, or a frequency position for receiving the first power-saving signal. The first power-saving signal is used to indicate whether to wake up the first receiver.

The configuration information used for receiving the second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame, so the main transceiver does not need to read the beacon frame after being woken up, thus reducing the power consumption of the electronic device.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In some embodiments, the first receiver communicates with the wireless network based on the content carried in the first information.

For example, in a case where the first information includes configuration information used for receiving downlink data, the first receiver receives the downlink data based on information such as a time-domain position for receiving the downlink data and a frequency position for receiving the downlink data.

In a case where the first information includes configuration information used for receiving downlink control signaling, where the downlink control signaling is used to indicate relevant information for receiving downlink data, the first receiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network.

In a case where the first information includes configuration information used for receiving a system broadcast, the first receiver receives the system broadcast of the wireless network based on information such as a time-domain position of a broadcast frame and a frequency position of the broadcast frame.

In a case where the first information includes synchronization information used for synchronization, the first receiver, based on synchronization information for time-domain synchronization and/or synchronization information for frequency-domain synchronization, enables the first receiver to attain the time-frequency synchronization with the wireless network.

In a case where the first information includes configuration information used for receiving the first power-saving signal, the first receiver monitors or receives the first power-saving signal based on information such as a time-domain position for receiving the first power-saving signal and a frequency position for receiving the first power-saving signal.

In a case where the first information includes configuration information used for receiving the second power-saving signal, the first receiver monitors or receives the second power-saving signal based on information such as a time-domain position for receiving the second power-saving signal and a frequency position for receiving the second power-saving signal.

In a case where the first information includes capability information of the wireless network, the first receiver communicates with the wireless network based on information such as a bit rate supported by the wireless network and an MCS supported by the wireless network, for example, communicating with the wireless network at a bit rate of 8 kilobits per second.

In some embodiments, taking the wireless network as a WiFi network as an example, the first information includes at least one of the following pieces of information:
- timestamp information of the network when the network device communicates with the main transceiver;
- frequency position information of a communication channel used by the main transceiver during communication;
- time-domain position information of a beacon frame;
- capability information of the wireless network; or
- synchronization information used for synchronization.

In a case where the first information includes timestamp information of the network when the network device communicates with the main transceiver, the electronic device obtains the timestamp information in advance through the first receiver, so that the main transceiver may obtain the communication time of the network without reading the beacon frame after being woken up. Here, the main transceiver may be equivalently understood as a main transmitter-receiver or a main air interface communication unit.

In a case where the first information includes frequency position information of a communication channel used by the main transceiver during communication, the electronic device adjusts an operating channel to that frequency position, to avoid waking up the main transceiver and then obtaining the frequency position of the operating channel through frequency scanning of the main transceiver.

In a case where the first information includes time-domain position information of a beacon frame, the electronic device receives the beacon frame based on that time-domain position. For example, at a time-domain position of signal transmission of a non-beacon frame, the electronic device turns off the main transceiver; and at a time-domain position of transmission of the beacon frame, the electronic device turns on the main transceiver, thereby reducing power consumption. Moreover, considering the clock deviation of the electronic device, the main transceiver may be turned on at a first time-domain position. The first time-domain position is a time-domain position with a time margin before the time-domain position of the transmission of the beacon frame, where the time margin may be adjusted according to the actual situation.

In a case where the first information includes capability information of the wireless network, since the capability information of the wireless network is generally carried in the beacon frame, it is possible to avoid the main transceiver reading the beacon frame after being woken up, thereby reducing the power consumption of the electronic device.

In a case where the first information includes synchronization information used for synchronization, the first receiver attains the time-frequency synchronization with the wireless network, so that the main transceiver does not need to perform the time-frequency synchronization after being woken up.

In some embodiments, the first information includes downlink data, such as data with a data volume lower than a first threshold, or data with a transmission delay requirement lower than a first delay. The first threshold and the first delay are preset values or value ranges.

In some embodiments, the first information is received through the first receiver. The first receiver receives data with a data volume lower than a first threshold, or data with a transmission delay requirement lower than a first delay, without needing to use the main transceiver for reception, further reducing the power consumption of the electronic device.

In summary, in the method provided in this embodiment, in response to a case where the first receiver is in a wake-up state, first information is received through the first receiver, where the first information is used for communication between the electronic device and the wireless network. Furthermore, the communication with the wireless network is performed through the first receiver, without the need for the main transceiver, thereby saving the power of the electronic device.

In the above embodiments, step 1110 and step 1120 in the embodiment corresponding to FIG. 11 may be implemented in combination with the embodiment corresponding to FIG. 19 or the embodiment corresponding to FIG. 20. For example, step 1110 and step 1120 may be performed after step 1930, or step 1110 and step 1120 may be performed after step 1920.

The embodiment corresponding to FIG. 12 may be implemented in combination with the embodiment corresponding to FIG. 19 or the embodiment corresponding to FIG. 20. For example, step 1210 may be performed after step 1930, or step 1210 may be performed after step 1920.

FIG. 21 illustrates a flowchart of an information transmission method provided in an exemplary embodiment of the present application. The method is performed by a network device or a power supply node. The method includes the following content.

**Step 2110:** in response to a case where a first receiver is in a wake-up state, first information is transmitted to the first receiver.

In some embodiments, an electronic device has the first receiver and a main transceiver, with operating power consumption of the first receiver lower than operating power consumption of the main transceiver, and the first information is used for communication between the electronic device and a wireless network.

In some embodiments, the first information includes: information used for communication between the first receiver and the wireless network.

In some embodiments, the first information includes at least one of the following:
configuration information used for receiving downlink data;
configuration information used for receiving downlink control signaling;
configuration information used for receiving a system broadcast;
synchronization information used for synchronization;
configuration information used for receiving a first power-saving signal;
configuration information used for receiving a second power-saving signal; or
capability information of the wireless network.

In some embodiments, the first information includes: information used for communication between a main transceiver and the wireless network.

In some embodiments, the first information includes at least one of the following:
configuration information used for receiving downlink data;
configuration information used for receiving downlink control signaling;
configuration information used for receiving a system broadcast;
configuration information used for transmitting uplink data;
configuration information used for transmitting uplink control signaling;
synchronization information used for synchronization;
configuration information used for receiving a second power-saving signal; or
capability information of the wireless network.

In some embodiments, the first information is transmitted via a data frame; or the first information is transmitted via a beacon frame.

In some embodiments, in response to a case where the main transceiver is in a wake-up state, the electronic device communicates with the wireless network based on the first information.

Specific implementation details of the above information transmission method may be referenced in the embodiment of FIG. 19, and will not be repeated here.

In summary, in the method provided in this embodiment, in response to a case where the first receiver is in a wake-up state, first information is transmitted to the first receiver, where the first information is used for communication between the electronic device and the wireless network, so that the main transceiver of the electronic device does not need to read the first information from the beacon frame after being woken up, which may assist the electronic device in quickly establishing a connection with the wireless network.

FIG. 22 illustrates a flowchart of an information transmission method provided in an exemplary embodiment of the present application. The method is performed by a network device or a power supply node. The method includes the following content.

**Step 2110:** in response to a case where a first receiver is in a wake-up state, first information is transmitted to the first receiver.

Specific implementation details may be referenced in step 2110 of the embodiment of FIG. 21, and will not be repeated here.

**Step 2120:** a second power-saving signal is transmitted.

Here, the second power-saving signal is used to indicate whether to wake up a main transceiver.

In some embodiments, after the first receiver is woken up, the second power-saving signal is transmitted to the first receiver.

In some embodiments, the second power-saving signal is a signal received by an electronic device through the main transceiver.

In some embodiments, the second power-saving signal is a signal monitored by the electronic device based on a DRX cycle; and in response to having monitored the second power-saving signal associated with a first DRX cycle, the electronic device maintains the main transceiver in a wake-up state or a non-wake-up state during an active time period in the first DRX cycle, according to an indication of the second power-saving signal associated with the first DRX cycle.

In some embodiments, the electronic device is a passive device.

In some embodiments, the electronic device is an active device.

In some embodiments, the electronic device has an energy harvesting module used to harvest ambient energy from an environment, where the ambient energy is used to supply power to the first receiver.

Specific implementation details of the above information transmission method may be referenced in the embodiment of FIG. 20, and will not be repeated here.

In summary, in the method provided in this embodiment, in response to a case where the first receiver is in a wake-up state, first information is transmitted to the first receiver, where the first information is used for communication between the electronic device and the wireless network, so that the main transceiver of the electronic device does not need to read the first information from the beacon frame after being woken up, which may assist the electronic device in quickly establishing a connection with the wireless network.

In the method provided in this embodiment, further, a second power-saving signal is transmitted, where the second power-saving signal is used to indicate whether to wake up the main transceiver. The main transceiver receives the second power-saving signal based on the DRX mechanism, thereby reducing the power consumption of the electronic device and extending battery life.

In the above embodiments, steps with the same serial number may be considered as the same step. Here, the embodiment corresponding to FIG. 8, the embodiment corresponding to FIG. 10, the embodiment corresponding to FIG. 11, the embodiment corresponding to FIG. 12, the embodiment corresponding to FIG. 13, the embodiment corresponding to FIG. 14, the embodiment corresponding to FIG. 15, the embodiment corresponding to FIG. 16, the embodiment corresponding to FIG. 17, the embodiment corresponding to FIG. 18, the embodiment corresponding to FIG. 19, the embodiment corresponding to FIG. 20, the embodiment corresponding to FIG. 21, and the embodiment corresponding to FIG. 22 may be implemented alone or in combination with each other, and the present application imposes no limitation thereon.

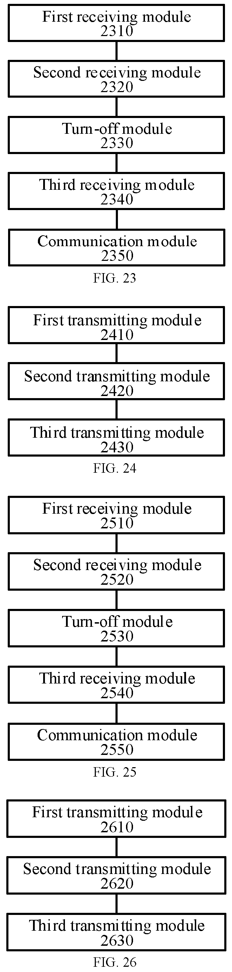

FIG. 23 illustrates a block diagram of an electronic apparatus provided in an exemplary embodiment of the present application. The apparatus may be implemented as an electronic device or as part of an electronic device by software or hardware or a combination of both. The apparatus has a first receiver and a main transceiver, with operating power consumption of the first receiver lower than operating power consumption of the main transceiver. The apparatus includes a first receiving module 2310, a second receiving module 2320, a turn-off module 2330, a third receiving module 2340, and a communication module 2350.

The first receiving module 2310 is configured to receive a first power-saving signal, where the first power-saving signal is used to indicate whether to wake up the first receiver.

In an initial state, both the first receiver and the main transceiver are in a non-wake-up state. The non-wake-up state may also be understood as at least one of the following: a turn-off state, a sleep state, or a DRX monitoring state. Here, the sleep state includes at least one of a light sleep state, a deep sleep state, and an ultra-deep sleep state. The power consumption of the light sleep state is higher than that of the deep sleep state, and the power consumption of the deep sleep state is higher than that of the ultra-deep sleep state.

Here, the first power-saving signal is used to indicate whether to wake up the first receiver. As an example, the first receiver is a WUR.

In one possible design of this embodiment, waking up the first receiver may also be equivalently understood as: monitoring transmission of downlink data or data frames through the first receiver; or may also be equivalently understood as: monitoring a control channel used to schedule uplink data or downlink data or data frames through the first receiver. The above three expressions have the same meaning in the embodiments of the present application.

In one possible design of this embodiment, not waking up the first receiver may also be equivalently understood as: maintaining the first receiver in a turn-off state; or may also be equivalently understood as: maintaining the first receiver in a sleep state; or may also be equivalently understood as: maintaining the first receiver in a DRX monitoring state. The above four expressions have the same meaning in the embodiments of the present application.

In one possible design of this embodiment, the first power-saving signal being used to indicate that the first receiver is to be woken up, may also be equivalently understood as: the first power-saving signal being used to indicate monitoring transmission of downlink data or data frames through the first receiver; or may also be equivalently understood as: the first power-saving signal being used to indicate monitoring a control channel used to schedule uplink data or downlink data or data frames through the first receiver. The above three expressions have the same meaning in the embodiments of the present application.

In one possible design of this embodiment, the first power-saving signal being used to indicate that the first receiver is not to be woken up, may also be equivalently understood as: the first power-saving signal being used to indicate that the first receiver is to be maintained in a turn-off state; or may also be equivalently understood as: the first power-saving signal being used to indicate that the first receiver is to be maintained in a sleep state; or may also be equivalently understood as: the first power-saving signal being used to indicate that the first receiver is to be maintained in a DRX monitoring state. The above four expressions have the same meaning in the embodiments of the present application.

In one possible design of this embodiment, the electronic apparatus is an active apparatus, where the active apparatus refers to an apparatus that has its own power supply and is capable of actively generating and transmitting signals, such as a mobile phone, a computer, a smartwatch, or a smart bracelet.

In one possible design of this embodiment, the electronic apparatus is a passive apparatus, where the passive apparatus refers to an apparatus that does not require a power supply or is capable of operating by receiving energy from other apparatuses, which may be referred to as a zero-power apparatus, a low-power apparatus, or the like. The zero-power apparatus may be implemented as at least one of a zero-power device or a zero-power terminal, or as part of at least one of a zero-power device or a zero-power terminal. The low-power apparatus may be implemented as at least one of a low-power device or a low-power terminal, or as part of at least one of a low-power device or a low-power terminal.

In one possible design of this embodiment, the electronic apparatus obtains energy from an environment, which may be referred to as an ambient power-enabled IoT apparatus.

In one possible design of this embodiment, the electronic apparatus is deployed in a fixed location, which may be referred to as a zero-power apparatus, a low-power apparatus, or the like. The zero-power apparatus may be implemented as a zero-power station, or as part of a zero-power station. The low-power apparatus may be implemented as a low-power station, or as part of a low-power station.

In one possible design of this embodiment, the first receiving module 2310 is configured to receive the first power-saving signal through the first receiver.

In one possible design of this embodiment, the first power-saving signal for indicating wake-up and the first power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In one possible design of this embodiment, the first power-saving signal is a wake-up signal. A network apparatus transmits a dedicated wake-up signal to the electronic apparatus, and the dedicated wake-up signal is different from a power supply signal.

In one possible design of this embodiment, the first power-saving signal is a power supply signal.

In one possible design of this embodiment, the first power-saving signal is transmitted by a network apparatus or a power supply node.

In a case where both the WUR (first receiver) and the main transceiver are in a turn-off state, since the network apparatus cannot wake up the electronic apparatus by transmitting signals to these receivers, the network apparatus may wake up the WUR by transmitting a power supply signal.

In one possible design of this embodiment, the first power-saving signal for indicating non-wake-up has a first waveform, for example, the first power-saving signal is a single-frequency sine wave, on which no information is modulated.

In one possible design of this embodiment, the first power-saving signal for indicating wake-up is a sequence modulated using a first modulation method. For example, a sequence is modulated with OOK, such as 111000 or 101010, where 1 represents a high level of OOK, and 0 represents a low level of OOK.

The modulation method of the first power-saving signal may also be FSK, PSK, etc., and the sequence length and sequence may also be other values, which are not limited in the embodiments of the present application.

In one possible design of this embodiment, it is indicated whether to wake up the WUR by changing a frequency of transmitting the first power-saving signal.

For example, the first power-saving signal is transmitted at a first frequency point or within a first frequency range, and the transmission at the first frequency point or within the first frequency range indicates that the WUR is to be woken up.

As another example, the first power-saving signal is transmitted at a second frequency point or within a second frequency range, and the transmission at the second frequency point or within the second frequency range indicates that the WUR is not to be woken up.

The first frequency point and the second frequency point may be located in the same frequency band or different frequency bands. The first frequency range and the second frequency range may be located in the same frequency band or different frequency bands.

The electronic apparatus uses a peripheral circuit to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In one possible design of this embodiment, the electronic apparatus further includes a second receiver; and the first receiving module 2310 is configured to receive the first power-saving signal through the second receiver.

Here, operating power consumption of the second receiver is lower than operating power consumption of the first receiver. For example, a receiver type of the second receiver 730 is an RF-based receiver type (RF envelope detection receiver type), and a receiver type of the first receiver 710 is an intermediate frequency-based receiver. Therefore, the power consumption of the second receiver 730 is several microwatts, such as 5 microwatts, and the power consumption of the first receiver 710 is hundreds of microwatts, such as 100 microwatts, so the operating power consumption of the second receiver 730 is lower than the operating power consumption of the first receiver 710.

In one possible design of this embodiment, the second receiver and the first receiver are on the same chip or different chips and are connected by an electronic lead.

In one possible design of this embodiment, the first receiving module 2310 may be implemented as the first receiver or as the second receiver.

In one possible design of this embodiment, the electronic apparatus further includes a first circuit; and the first receiving module 2310 is configured to receive the first power-saving signal through the first circuit.

In one possible design of this embodiment, the first circuit includes a wireless energy harvesting circuit of the electronic apparatus, or a peripheral circuit of the first receiver.

The wireless energy harvesting circuit is used to harvest wireless energy. In a case where both the first receiver and the main transceiver are turned off, the wireless energy harvesting circuit still maintains an operating state thereof and continues to harvest wireless energy.

The electronic apparatus uses the first circuit to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In one possible design of this embodiment, the first receiver uses a first receiver parameter, where the first receiver parameter includes a first receiver type and/or a first receiving bandwidth.

The receiver type represents an architecture type of a receiver used by the electronic apparatus, such as an RF-based receiver or an intermediate frequency (zero-IF)-based receiver; and the receiving bandwidth represents a bandwidth used to receive signals.

In one possible design of this embodiment, the first receiver type is an RF-based receiver type. An RF signal is directly detected by using the first receiver of the RF-based receiver type (RF envelope detection receiver type), without requiring frequency conversion on the RF signal, and thus there is no need to convert the RF signal to a baseband signal, which may reduce the power consumption of the first receiver.

Since this receiver type, based on parameters of its implemented RF filter or matched network, can only receive the first power-saving signal within a specified frequency range, the first power-saving signal may be received within a first frequency band or on a first channel within the first frequency band.

In one possible design of this embodiment, the first receiving module 2310 is configured to receive the first power-saving signal within a first frequency band.

The receiving bandwidth of the first receiver is equal to a bandwidth of the first frequency band, and the first receiver receives the first power-saving signal within a bandwidth not exceeding the bandwidth range of the first frequency band. For example, the first power-saving signal is received at 920 MHz to 925 MHz.

In one possible design of this embodiment, the first receiving module 2310 is configured to receive the first power-saving signal on a first channel within the first frequency band.

In a case where the first frequency band includes a plurality of channels, the first power-saving signal is received on one of the channels (the first channel), and the receiving bandwidth of the first receiver is equal to a bandwidth of the first channel. For example, 20 channels with a bandwidth of 250 kHz are allocated within a range of 920 MHz to 925 MHz, and the first power-saving signal is received on the first channel therein.

As another example, in a case where the first receiver operates at 2.4 GHz, a frequency band is 2,400 MHz to 2,485 MHz, within which a plurality of channels may be allocated, such as channels at 2,400 MHz to 2,420 MHz, channels at 2,420 MHz to 2,440 MHz, channels at 2,440 MHz to 2,460 MHz, and so on. Therefore, the first power-saving signal may be received on the first channel within the frequency band, for example, on a channel at 2,400 MHz to 2,420 MHz.

In one possible design of this embodiment, the first channel is any channel within the first frequency band; or
the first channel is a designated channel within the first frequency band; or
the first channel is a most central channel within the first frequency band; or
the first channel is one of two most central channels within the first frequency band.

In a case where the number of channels included in the first frequency band is odd, the first channel is the most central channel within the first frequency band; and in a case where the number of channels included in the first frequency band is even, the first channel is one of the two most central channels within the first frequency band.

For example, in a case where the first frequency band includes five channels, the first channel is the most central channel (the third channel); or in a case where the first frequency band includes four channels, the first channel is one of the two most central channels (the second channel or the third channel).

In one possible design of this embodiment, the second receiving module 2320 is configured to receive a second power-saving signal, where the second power-saving signal is used to indicate whether to wake up the main transceiver.

In one possible design of this embodiment, waking up the main transceiver, may also be equivalently understood as: waking up a main transmitter-receiver; or may also be equivalently understood as: waking up a main air interface communication unit. The above three expressions have the same meaning in the embodiments of the present application.

In one possible design of this embodiment, waking up the main transceiver, may also be equivalently understood as: monitoring transmission of downlink data or data frames through the main transceiver; or may also be equivalently understood as: monitoring a control channel used to schedule uplink data or downlink data or data frames through the main transceiver. The above three expressions have the same meaning in the embodiments of the present application.

In one possible design of this embodiment, not waking up the main transceiver, may also be equivalently understood as: maintaining the main transceiver in a turn-off state; or may also be equivalently understood as: maintaining the main transceiver in a DRX monitoring state. The above three expressions have the same meaning in the embodiments of the present application.

In one possible design of this embodiment, the second power-saving signal for indicating wake-up and the second power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In one possible design of this embodiment, the second receiving module 2320 is configured to, after the first receiver is woken up, receive the second power-saving signal through the first receiver.

The first receiver receives the second power-saving signal in a case of being woken up, demodulates the second power-saving signal, and transmits the corresponding content to the main transceiver, indicating whether to wake up the main transceiver.

In one possible design of this embodiment, after the first receiver is woken up, which may also be equivalently understood as that: after the first receiver enters a state of monitoring the transmission of downlink data or data frames; or may also be equivalently understood as that: after the first receiver enters a state of monitoring the control channel used to schedule uplink data or downlink data or data frames. The above three expressions have the same meaning in the embodiments of the present application.

In one possible design of this embodiment, the first receiver monitors the second power-saving signal based on a DRX cycle; and in response to having monitored the second power-saving signal associated with a first DRX cycle, maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The first receiver monitors the second power-saving signals based on a DRX cycle; and in response to having monitored a second power-saving signal associated with a first DRX cycle, maintains the main transceiver in a wake-up state during an active time period in the first DRX cycle, according to a wake-up indication carried by the second power-saving signal, or maintains the main transceiver in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The first receiver monitors the second power-saving signal based on a DRX cycle; in response to having monitored the second power-saving signal associated with a first DRX cycle, maintains the main transceiver in a wake-up state during an active time period in the first DRX cycle, according to an indication of the second power-saving signal associated with the first DRX cycle; and in response to having not monitored the second power-saving signal associated with the first DRX cycle, maintains the main transceiver in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, the second receiving module 2320 is configured to receive the second power-saving signal through the main transceiver.

Here, both the first receiver and the main transceiver are in a non-wake-up state.

In one possible design of this embodiment, the main transceiver monitors the second power-saving signal based on a DRX cycle; and in response to having monitored the second power-saving signal associated with a first DRX cycle, the main transceiver is maintained in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The main transceiver monitors the second power-saving signals based on a DRX cycle; and in response to having monitored a second power-saving signal associated with a first DRX cycle, the main transceiver is maintained in a wake-up state during an active time period in the first DRX cycle, according to a wake-up indication carried by the second power-saving signal, or the main transceiver is maintained in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The main transceiver monitors the second power-saving signal based on a DRX cycle; in response to having monitored the second power-saving signal associated with a first DRX cycle, the main transceiver is maintained in a wake-up state during an active time period in the first DRX cycle, according to an indication of the second power-saving signal associated with the first DRX cycle; and in response to having not monitored the second power-saving signal associated with the first DRX cycle, the main transceiver is maintained in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, maintaining the main transceiver in a wake-up state during the active time period in the first DRX cycle, may also be equivalently understood as: monitoring the transmission of downlink data or data frames through the main transceiver at all times during the active time period in the first DRX cycle; or may also be equivalently understood as: monitoring the control channel used to schedule uplink data or downlink data or data frames through the main transceiver at all times during the active time period in the first DRX cycle. The above three expressions have the same meaning in the embodiments of the present application.

Maintaining the main transceiver in a non-wake-up state during the active time period in the first DRX cycle, may also be equivalently understood as: not monitoring, by the main transceiver, the transmission of downlink data or data frames during the active time period in the first DRX cycle; or may also be equivalently understood as: not monitoring, by the main transceiver, the control channel used to schedule uplink data or downlink data or data frames during the active time period in the first DRX cycle. The above three expressions have the same meaning in the embodiments of the present application.

A DRX cycle includes "on duration" and "opportunity for DRX," in which during the on duration (the active time period), the electronic apparatus is in the wake-up state to receive data, and during the DRX opportunity, the electronic apparatus is in the sleep state to receive no data.

For example, the electronic apparatus monitors the second power-saving signal based on the DRX cycle; and in response to having monitored the second power-saving signal before the active time period in the first DRX cycle, where the second power-saving signal indicates that the main transceiver is to be in the wake-up state, maintains the main transceiver in the wake-up state during the active time period in the first DRX cycle.

In one possible design of this embodiment, the first power-saving signal further carries an identifier of a device to be woken up or an identifier of a device group to be woken up.

In one possible design of this embodiment, the second power-saving signal further carries an identifier of a device to be woken up or an identifier of a device group to be woken up.

The identifier of the device group to be woken up is also known as an ID of the device group to be woken up, which is the ID of the group to which a device to be woken up belongs. This group includes at least one device to be woken up.

Based on the ID of the device to be woken up or the ID of the device group to be woken up carried in the first power-saving signal or the second power-saving signal, it is determined whether to wake up the electronic apparatus. In response to that an ID of the electronic apparatus is the same as the ID of the device to be woken up, the electronic apparatus will be woken up; and in response to that the ID of the electronic apparatus is different from the ID of the device to be woken up, the electronic apparatus will not be woken up. In response to that a group ID of the electronic apparatus is the same as the ID of the device group to be woken up, the electronic apparatus will be woken up; and in response to that the group ID of the electronic apparatus is different from the ID of the group device to be woken up, the electronic apparatus will not be woken up.

In one possible design of this embodiment, the second power-saving signal further carries synchronization information used for synchronization of a wireless network and the electronic apparatus. The synchronization includes time-domain synchronization and/or frequency-domain synchronization. The wireless network includes at least one of a WiFi network, a cellular network, or a wireless power supply network.

In one possible design of this embodiment, the turn-off module 2330 is configured to, in response to a case where a first condition is met, turn off the main transceiver.

Due to the high operating power consumption of the main transceiver, in response to a case where a first condition is met, the main transceiver is turned off.

For example, the electricity consumption of different users is queried through IoT meters, and the main transceiver is turned off after the query is completed.

In one possible design of this embodiment, the turn-off module 2330 is configured to, in response to a case where a first condition is met, turn off the first receiver.

Here, the first condition and the second condition are two different conditions.

Although the operating power consumption of the first receiver is lower than the operating power consumption of the main transceiver, in order to further save power, the first receiver is turned off in response to a case where the second condition is met.

For example, the electricity consumption of different users is queried through IoT meters, and the main transceiver is turned off after the query is completed. In response to a case where feedback information, e.g., an ACK message, transmitted from the wireless network is received, the first receiver is turned off.

In one possible design of this embodiment, the turn-off module 2330 is configured to, in response to a case where a first condition is met, turn off the first receiver and the main transceiver.

Here, the third condition is different from the first condition and the second condition.

To further save power, both the first receiver and the main transceiver are turned off in response to a case where a third condition is met.

For example, in response to a case where an IoT warehousing device receives all data on items stored in a warehouse, both the first receiver and the main transceiver are turned off.

In one possible design of this embodiment, the turn-off module 2330 may be implemented independently as a turn-off apparatus for a receiver.

In one possible design of this embodiment, the third receiving module 2340 is configured to, in response to a case where the first receiver is in a wake-up state, receive first information through the first receiver.

Here, the first information is used for communication between the electronic apparatus and a wireless network. The wireless network includes at least one of a WiFi network, a cellular network, or a wireless power supply network.

In one possible design of this embodiment, the first information includes: information used for communication between the first receiver and the wireless network.

In one possible design of this embodiment, the electronic apparatus is an active apparatus, where the active apparatus refers to an apparatus that has its own power supply and is capable of actively generating and transmitting signals, such as a mobile phone, a computer, a smartwatch, or a smart bracelet.

In one possible design of this embodiment, the electronic apparatus is a passive apparatus, where the passive apparatus refers to an apparatus that does not require a power supply or is capable of operating by receiving energy from other devices, which may be referred to as a zero-power apparatus, a low-power apparatus, or the like. The zero-power apparatus may be implemented as at least one of a zero-power device or a zero-power terminal, or as part of at least one of a zero-power device or a zero-power terminal. The low-power apparatus may be implemented as at least one of a low-power device or a low-power terminal, or as part of at least one of a low-power device or a low-power terminal.

In one possible design of this embodiment, the electronic apparatus obtains energy from an environment, which may be referred to as an ambient power-enabled IoT apparatus.

In one possible design of this embodiment, the electronic apparatus is deployed in a fixed location, which may be referred to as a zero-power apparatus, a low-power apparatus, or the like. The zero-power apparatus may be implemented as a zero-power station, or as part of a zero-power station. The low-power apparatus may be implemented as a low-power station, or as part of a low-power station.

In one possible design of this embodiment, in response to a case where the first receiver is in the wake-up state, the network apparatus or the power supply node 630 in the embodiment of FIG. 6 transmits first information to the first receiver, where the first information may be referred to as auxiliary information, assisting the electronic apparatus in quickly establishing a connection with the wireless network and completing communication after waking up the main transceiver.

In one possible design of this embodiment, the first information includes: information used for communication between the main transceiver and the wireless network. It may also be equivalently understood as follows: the first information includes: information used for communication between the main transmitter-receiver (or main air interface communication unit) and the wireless network.

In one possible design of this embodiment, the first information includes, but is not limited to, at least one of the following:
- configuration information used for receiving downlink data;
- configuration information used for receiving downlink control signaling;
- configuration information used for receiving a system broadcast;
- configuration information used for transmitting uplink data;
- configuration information used for transmitting uplink control signaling;
- synchronization information used for synchronization;
- configuration information used for receiving a second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The configuration information used for transmitting uplink data includes at least one of the following pieces of information: a time-domain position for transmitting the uplink data, a frequency position for transmitting the uplink data, or a period for transmitting the uplink data.

The configuration information used for transmitting uplink control signaling includes at least one of the following pieces of information: a time-domain position for transmitting the uplink control signaling, or a frequency position for transmitting the uplink control signaling.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network.

The configuration information used for receiving a second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In one possible design of this embodiment, a form of the frequency position includes: a channel form, a bandwidth form, a carrier form, or the like. For example, the downlink data is received on the first channel.

In one possible design of this embodiment, relevant information of the frequency position may enable the electronic apparatus to obtain the frequency position at which the main transceiver communicates with the wireless network through the first receiver, to avoid waking up the main transceiver and then obtaining the frequency position by frequency scanning, thereby reducing power consumption.

In one possible design of this embodiment, the first information is transmitted via a data frame; or the first information is transmitted via a beacon frame.

In one possible design of this embodiment, the network apparatus transmits the first information first, and then transmits the second power-saving signal.

In one possible design of this embodiment, the first information is carried in the second power-saving signal.

After waking up the first receiver, the network apparatus transmits the second power-saving signal. By receiving the second power-saving signal, the electronic apparatus may simultaneously obtain at least one of the following: the first information, the information on whether to wake up the main transceiver, or the synchronization information used for synchronization.

In one possible design of this embodiment, the communication module 2350 is configured to, in response to a case where the main transceiver is in a wake-up state, perform communication with the wireless network based on the first information.

In response to the case where the main transceiver is in the wake-up state, the electronic apparatus obtains configuration of the wireless network based on the content carried in the first information.

For example, in a case where the first information includes configuration information used for receiving downlink data, the main transceiver receives the downlink data based on information such as a time-domain position for receiving the downlink data and a frequency position for receiving the downlink data. Before receiving the downlink data, the main receiver may be maintained in a non-wake-up state as much as possible, thereby saving more power.

In a case where the first information includes configuration information used for receiving downlink control signaling, where the downlink control signaling is used to indicate relevant information for receiving downlink data, the main transceiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network. By receiving the configuration information in advance, the main transceiver may be in a non-wake-up state for a longer period of time, thereby reducing the power consumption of the electronic apparatus.

In a case where the first information includes configuration information used for receiving a system broadcast, the main transceiver receives the system broadcast of the wireless network based on information such as a time-domain position of a broadcast frame and a frequency position of the broadcast frame. By receiving the configuration information of the system broadcast in advance, the main receiver may be maintained in a non-wake-up state during both stages of receiving the system broadcast and obtaining the configuration information in the system broadcast, thereby saving more power.

In a case where the first information includes configuration information used for transmitting uplink data, the main transceiver transmits the uplink data based on information such as a time-domain position for transmitting the uplink data and a frequency position for transmitting the uplink data. Before receiving the uplink data, the main receiver may be maintained in a non-wake-up state as much as possible, thereby saving more power.

In a case where the first information includes configuration information used for transmitting uplink control signaling, where the uplink control signaling is used to provide feedback on whether downlink data has been received, the main transceiver monitors the uplink control signaling based on information such as a time-domain position for transmitting the uplink control signaling and a frequency position for transmitting the uplink control signaling. By receiving the configuration information in advance, the main transceiver may be in a non-wake-up state for a longer period of time, thereby reducing the power consumption of the electronic apparatus.

In a case where the first information includes synchronization information used for synchronization, the electronic apparatus, based on synchronization information for time-domain synchronization and/or synchronization information for frequency-domain synchronization, enables the main transceiver to attain the time-frequency synchronization with the wireless network, so that the main transceiver does not need to perform the time-frequency synchronization after being woken up.

In a case where the first information includes configuration information used for receiving the second power-saving signal, the main transceiver monitors or receives the second power-saving signal based on information such as a time-domain position for receiving the second power-saving signal and a frequency position for receiving the second power-saving signal. By receiving the configuration information in advance, the main transceiver may be in a non-wake-up state for a longer period of time, thereby reducing the power consumption of the electronic apparatus.

In a case where the first information includes capability information of the wireless network, the main transceiver communicates with the wireless network based on information such as a bit rate supported by the wireless network and an MCS supported by the wireless network, for example, communicating with the wireless network at a bit rate of 128 kilobits per second. Thus, the main transceiver does not need to read other content, such as a beacon frame, after being woken up, to obtain the capability information, thereby reducing the power consumption of the electronic apparatus.

After receiving the first information, the electronic apparatus establishes a connection or association with the network using the main transceiver, and then performs communication. The main transceiver uses communication protocols in the related technology, such as 802.11b and 802.11n, thereby enabling the electronic apparatus to communicate with network devices (such as APs) in the related technology.

Since the operating power consumption of the first receiver is lower than the operating power consumption of the main transceiver, receiving, by the first receiver, information communicated between the first receiver and the wireless network may reduce the power consumption of the electronic apparatus, compared to using the main transceiver to receive the above information.

In one possible design of this embodiment, the first information includes at least one of the following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving the second power-saving signal; or
capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network, so that the main transceiver does not need to perform the time-frequency synchronization after being woken up.

The configuration information used for receiving the first power-saving signal includes at least one of the following pieces of information: a time-domain position for receiving the first power-saving signal, or a frequency position for receiving the first power-saving signal.

The configuration information used for receiving the second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame, so the main transceiver does not need to read the beacon frame after being woken up, thus reducing the power consumption of the electronic apparatus.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In one possible design of this embodiment, the first receiver communicates with the wireless network based on the content carried in the first information.

For example, in a case where the first information includes configuration information used for receiving downlink data, the first receiver receives the downlink data based on information such as a time-domain position for receiving the downlink data and a frequency position for receiving the downlink data.

In a case where the first information includes configuration information used for receiving downlink control signaling, where the downlink control signaling is used to indicate relevant information for receiving downlink data, the first receiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network.

In a case where the first information includes configuration information used for receiving a system broadcast, the first receiver receives the system broadcast of the wireless network based on information such as a time-domain position of a broadcast frame and a frequency position of the broadcast frame.

In a case where the first information includes synchronization information used for synchronization, the first receiver, based on synchronization information for time-domain synchronization and/or synchronization information for frequency-domain synchronization, enables the first receiver to attain the time-frequency synchronization with the wireless network.

In a case where the first information includes configuration information used for receiving the first power-saving signal, the first receiver monitors or receives the first power-saving signal based on information such as a time-domain position for receiving the first power-saving signal and a frequency position for receiving the first power-saving signal.

In a case where the first information includes configuration information used for receiving the second power-saving signal, the first receiver monitors or receives the second power-saving signal based on information such as a time-domain position for receiving the second power-saving signal and a frequency position for receiving the second power-saving signal.

In a case where the first information includes capability information of the wireless network, the first receiver communicates with the wireless network based on information such as a bit rate supported by the wireless network and an MCS supported by the wireless network, for example, communicating with the wireless network at a bit rate of 8 kilobits per second.

In one possible design of this embodiment, taking the wireless network as a WiFi network as an example, the first information includes at least one of the following pieces of information:
- timestamp information of the network when the network device communicates with the main transceiver;
- frequency position information of a communication channel used by the main transceiver during communication;
- time-domain position information of a beacon frame;
- capability information of the wireless network; or
- synchronization information used for synchronization.

In a case where the first information includes timestamp information of the network when the network apparatus communicates with the main transceiver, the electronic apparatus obtains the timestamp information in advance through the first receiver, so that the main transceiver may obtain the communication time of the network without reading the beacon frame after being woken up. Here, the main transceiver may be equivalently understood as a main transmitter-receiver or a main air interface communication unit.

In a case where the first information includes frequency position information of a communication channel used by the main transceiver during communication, the electronic apparatus adjusts an operating channel to that frequency position, to avoid waking up the main transceiver and then obtaining the frequency position of the operating channel through frequency scanning of the main transceiver.

In a case where the first information includes time-domain position information of a beacon frame, the electronic apparatus receives the beacon frame based on that time-domain position. For example, at a time-domain position of signal transmission of a non-beacon frame, the electronic apparatus turns off the main transceiver; and at a time-domain position of transmission of the beacon frame, the electronic apparatus turns on the main transceiver, thereby reducing power consumption. Moreover, considering the clock deviation of the electronic apparatus, the main transceiver may be turned on at a first time-domain position. The first time-domain position is a time-domain position with a time margin before the time-domain position of the transmission of the beacon frame, where the time margin may be adjusted according to the actual situation.

In a case where the first information includes capability information of the wireless network, since the capability information of the wireless network is generally carried in the beacon frame, it is possible to avoid the main transceiver reading the beacon frame after being woken up, thereby reducing the power consumption of the electronic apparatus.

In a case where the first information includes synchronization information used for synchronization, the first receiver attains the time-frequency synchronization with the wireless network, so that the main transceiver does not need to perform the time-frequency synchronization after being woken up.

In some embodiments, the first information includes downlink data, such as data with a data volume lower than a first threshold, or data with a transmission delay requirement lower than a first delay. The first threshold and the first delay are preset values or value ranges.

In one possible design of this embodiment, the first information is received through the first receiver. The first receiver receives data with a data volume lower than a first threshold, or data with a transmission delay requirement lower than a first delay, without needing to use the main transceiver for reception, further reducing the power consumption of the electronic apparatus.

In this embodiment, the first receiving module 2310 may be divided into a plurality of receiving sub-modules, such as a first receiving sub-module, a second receiving sub-module, and a third receiving sub-module. The first receiving sub-module is configured to receive the first power-saving signal through the second receiver, the second receiving sub-module is configured to receive the first power-saving signal through the first circuit, and the third receiving sub-module is configured to receive the first power-saving signal through the first receiver; or the first receiving sub-module is configured to receive the first power-saving signal through the first circuit, the second receiving sub-module is configured to receive the first power-saving signal through the first receiver, and the third receiving sub-module is configured to receive the first power-saving signal through the second receiver. This embodiment does not limit the functions of different receiving sub-modules.

In this embodiment, the second receiving module 2320 may be divided into a plurality of receiving sub-modules, such as a first receiving sub-module and a second receiving sub-module. The first receiving sub-module is configured to, after the first receiver is woken up, receive the second power-saving signal through the first receiver, and the second receiving sub-module is configured to receive the second power-saving signal through the main transceiver; or the first receiving sub-module is configured to receive the second power-saving signal through the main transceiver, and the second receiving sub-module is configured to, after the first receiver is woken up, receive the second power-saving signal through the first receiver. This embodiment does not limit the functions of different receiving sub-modules.

In this embodiment, the turn-off module 2330 may be divided into a plurality of turn-off modules, such as a first turn-off module, a second turn-off module, and a third turn-off module. The first turn-off module is configured to, in response to a case where a first condition is met, turn off the main transceiver, the second turn-off module is configured to, in response to a case where a second condition is met, turn off the first receiver, and the third turn-off module is configured to, in response to a case where a third condition is met, turn off the first receiver and the main transceiver; or the first turn-off module is configured to, in response to a case where a second condition is met, turn off the first receiver, the second turn-off module is configured to, in response to a case where a third condition is met, turn off the first receiver and the main transceiver, and in response to a case where the first condition is met, turn off the main transceiver, and the third turn-off module is configured to, in response to a case where the first condition is met, turn off the main transceiver. This embodiment does not limit the functions of the different turn-off modules.

This embodiment is described by way of example with one first receiving module 2310, and the number of first receiving modules 2310 is not limited.

This embodiment is described by way of example with one second receiving module 2320, and the number of second receiving modules 2320 is not limited.

This embodiment is described by way of example with one turn-off module 2330, and the number of turn-off modules 2330 is not limited.

The description for the function of the first receiving module 2310 may be referenced in the context of step 810 in the embodiment of FIG. 8.

The description for the function of the second receiving module 2320 may be referenced in the context of step 830 in the embodiment of FIG. 8.

The description for the function of the turn-off module 2330 may be referenced in the content of step 1110 and step 1120 in the embodiment of FIG. 11, and the content of step 1210 in the embodiment of FIG. 12.

The description for the function of the third receiving module 2340 may be referenced in the content of step 820 in the embodiment of FIG. 10.

The description for the function of the communication module 2350 may be referenced in the content of step 840 in the embodiment of FIG. 10.

FIG. 24 illustrates a block diagram of a network apparatus provided in an exemplary embodiment of the present application. The apparatus may be implemented as a network device or as part of a network device by software or hardware or a combination of both. The apparatus includes a first transmitting module 2410, a second transmitting module 2420 and a third transmitting module 2430.

The first transmitting module 2410 is configured to transmit a first power-saving signal, where the first power-saving signal is used to indicate whether to wake up a first receiver.

Here, an electronic apparatus has the first receiver and a main transceiver, with operating power consumption of the first receiver lower than operating power consumption of the main transceiver.

In an initial state, both the first receiver and the main transceiver are in a non-wake-up state. The non-wake-up state may also be understood as at least one of the following: a turn-off state, a sleep state, or a DRX monitoring state. Here, the sleep state includes at least one of a light sleep state, a deep sleep state, and an ultra-deep sleep state. The power consumption of the light sleep state is higher than that of the deep sleep state, and the power consumption of the deep sleep state is higher than that of the ultra-deep sleep state.

Here, the first power-saving signal is used to indicate whether to wake up the first receiver. As an example, the first receiver is a WUR.

In one possible design of this embodiment, waking up the first receiver may also be equivalently understood as: monitoring transmission of downlink data or data frames through the first receiver; or may also be equivalently understood as: monitoring a control channel used to schedule uplink data or downlink data or data frames through the first receiver. The above three expressions have the same meaning in the embodiments of the present application.

In one possible design of this embodiment, not waking up the first receiver may also be equivalently understood as: maintaining the first receiver in a turn-off state; or may also be equivalently understood as: maintaining the first receiver in a sleep state; or may also be equivalently understood as: maintaining the first receiver in a DRX monitoring state. The above four expressions have the same meaning in the embodiments of the present application.

In one possible design of this embodiment, the first power-saving signal being used to indicate that the first receiver is to be woken up, may also be equivalently understood as: the first power-saving signal being used to indicate monitoring transmission of downlink data or data frames through the first receiver; or may also be equivalently understood as: the first power-saving signal being used to indicate monitoring a control channel used to schedule uplink data or downlink data or data frames through the first receiver. The above three expressions have the same meaning in the embodiments of the present application.

In one possible design of this embodiment, the first power-saving signal being used to indicate that the first receiver is not to be woken up, may also be equivalently understood as: the first power-saving signal being used to indicate that the first receiver is to be maintained in a turn-off state; or may also be equivalently understood as: the first power-saving signal being used to indicate that the first receiver is to be maintained in a sleep state; or may also be equivalently understood as: the first power-saving signal being used to indicate that the first receiver is to be maintained in a DRX monitoring state. The above four expressions have the same meaning in the embodiments of the present application.

In one possible design of this embodiment, the electronic apparatus is an active apparatus, where the active apparatus refers to an apparatus that has its own power supply and is capable of actively generating and transmitting signals, such as a mobile phone, a computer, a smartwatch, or a smart bracelet.

In one possible design of this embodiment, the electronic apparatus is a passive apparatus, where the passive apparatus refers to an apparatus that does not require a power supply or is capable of operating by receiving energy from other apparatuses, which may be referred to as a zero-power apparatus, a low-power apparatus, or the like. The zero-power apparatus may be implemented as at least one of a zero-power device or a zero-power terminal, or as part of at least one of a zero-power device or a zero-power terminal. The low-power apparatus may be implemented as at least one of a low-power device or a low-power terminal, or as part of at least one of a low-power device or a low-power terminal.

In one possible design of this embodiment, the electronic apparatus obtains energy from an environment, which may be referred to as an ambient power-enabled IoT apparatus.

In one possible design of this embodiment, the electronic apparatus is deployed in a fixed location, which may be referred to as a zero-power apparatus, a low-power apparatus, or the like. The zero-power apparatus may be implemented as a zero-power station, or as part of a zero-power station. The low-power apparatus may be implemented as a low-power station, or as part of a low-power station.

In one possible design of this embodiment, the first power-saving signal is a signal received by the electronic apparatus through the first receiver.

In one possible design of this embodiment, the first power-saving signal for indicating wake-up and the first power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In one possible design of this embodiment, the first power-saving signal is a wake-up signal. The network apparatus transmits a dedicated wake-up signal to the electronic apparatus, and the dedicated wake-up signal is different from a power supply signal.

In one possible design of this embodiment, the first power-saving signal is a power supply signal.

In one possible design of this embodiment, the first power-saving signal is transmitted by the network apparatus or a power supply node.

In a case where both the WUR (first receiver) and the main transceiver are in a turn-off state, since the network apparatus cannot wake up the electronic apparatus by transmitting signals to these receivers, the network apparatus may wake up the WUR by transmitting a power supply signal.

In one possible design of this embodiment, the first power-saving signal for indicating non-wake-up has a first waveform, for example, the first power-saving signal is a single-frequency sine wave, on which no information is modulated.

In one possible design of this embodiment, the first power-saving signal for indicating wake-up is a sequence modulated using a first modulation method. For example, a sequence is modulated with OOK, such as 111000 or 101010, where 1 represents a high level of OOK, and 0 represents a low level of OOK.

The modulation method of the first power-saving signal may also be FSK, PSK, etc., and the sequence length and sequence may also be other values, which are not limited in the embodiments of the present application.

In one possible design of this embodiment, it is indicated whether to wake up the WUR by changing a frequency of transmitting the first power-saving signal.

For example, the first power-saving signal is transmitted at a first frequency point or within a first frequency range, and the transmission at the first frequency point or within the first frequency range indicates that the WUR is to be woken up.

As another example, the first power-saving signal is transmitted at a second frequency point or within a second frequency range, and the transmission at the second frequency point or within the second frequency range indicates that the WUR is not to be woken up.

The first frequency point and the second frequency point may be located in the same frequency band or different frequency bands. The first frequency range and the second frequency range may be located in the same frequency band or different frequency bands.

The electronic apparatus uses a peripheral circuit to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In one possible design of this embodiment, the electronic apparatus further includes a second receiver, and the first power-saving signal is a signal received by the electronic apparatus through the second receiver, with operating power consumption of the second receiver lower than operating power consumption of the first receiver.

In one possible design of this embodiment, the second receiver and the first receiver are on the same chip or different chips and are connected by an electronic lead.

In one possible design of this embodiment, the electronic apparatus further includes a first circuit, and the first power-saving signal is a signal received by the electronic apparatus through the first circuit.

In one possible design of this embodiment, the first circuit includes a wireless energy harvesting circuit of the electronic apparatus, or a peripheral circuit of the first receiver.

The wireless energy harvesting circuit is used to harvest wireless energy. In a case where both the first receiver and the main transceiver are turned off, the wireless energy harvesting circuit still maintains an operating state thereof and continues to harvest wireless energy.

The electronic apparatus uses the first circuit to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In one possible design of this embodiment, the first receiver uses a first receiver parameter, where the first receiver parameter includes a first receiver type and/or a first receiving bandwidth.

The receiver type represents an architecture type of a receiver used by the electronic apparatus, such as an RF-based receiver or an intermediate frequency (zero-IF)-based receiver; and the receiving bandwidth represents a bandwidth used to receive signals.

In one possible design of this embodiment, the first receiver type is an RF-based receiver type. An RF signal is directly detected by using the first receiver of the RF-based receiver type (RF envelope detection receiver type), without requiring frequency conversion on the RF signal, and thus there is no need to convert the RF signal to a baseband signal, which may reduce the power consumption of the first receiver.

Since this receiver type, based on parameters of its implemented RF filter or matched network, can only receive the first power-saving signal within a specified frequency range, the first power-saving signal may be received within a first frequency band or on a first channel within the first frequency band.

In one possible design of this embodiment, the first transmitting module 2410 is configured to transmit the first power-saving signal within a first frequency band.

The receiving bandwidth of the first receiver is equal to a bandwidth of the first frequency band, and the first receiver receives the first power-saving signal within a bandwidth not exceeding the bandwidth range of the first frequency band. For example, the first power-saving signal is received at 920 MHz to 925 MHz.

In one possible design of this embodiment, the first transmitting module 2410 is configured to transmit the first power-saving signal on a first channel within the first frequency band.

In a case where the first frequency band includes a plurality of channels, the first power-saving signal is transmitted on one of the channels (the first channel), and the receiving bandwidth of the first receiver is equal to a bandwidth of the first channel. For example, 20 channels with a bandwidth of 250 kHz are allocated within a range of 920 MHz to 925 MHz, and the first receiver receives the first power-saving signal on the first channel therein.

As another example, in a case where the first receiver operates at 2.4 GHz, a frequency band is 2,400 MHz to 2,485 MHz, within which a plurality of channels may be allocated, such as channels at 2,400 MHz to 2,420 MHz, channels at 2,420 MHz to 2,440 MHz, channels at 2,440 MHz to 2,460 MHz, and so on. Therefore, the first receiver may receive the first power-saving signal on the first channel within the frequency band, for example, on a channel at 2,400 MHz to 2,420 MHz.

In one possible design of this embodiment, the first channel is any channel within the first frequency band; or
the first channel is a designated channel within the first frequency band; or
the first channel is a most central channel within the first frequency band; or
the first channel is one of two most central channels within the first frequency band.

In a case where the number of channels included in the first frequency band is odd, the first channel is the most central channel within the first frequency band; and in a case where the number of channels included in the first frequency band is even, the first channel is one of the two most central channels within the first frequency band.

For example, in a case where the first frequency band includes five channels, the first channel is the most central channel (the third channel); or in a case where the first frequency band includes four channels, the first channel is one of the two most central channels (the second channel or the third channel).

In one possible design of this embodiment, the second transmitting module 2420 is configured to transmit a second power-saving signal, where the second power-saving signal is used to indicate whether to wake up the main transceiver.

In one possible design of this embodiment, waking up the main transceiver, may also be equivalently understood as: waking up a main transmitter-receiver; or may also be equivalently understood as: waking up a main air interface communication unit. The above three expressions have the same meaning in the embodiments of the present application.

In one possible design of this embodiment, waking up the main transceiver, may also be equivalently understood as: monitoring transmission of downlink data or data frames through the main transceiver; or may also be equivalently understood as: monitoring a control channel used to schedule uplink data or downlink data or data frames through the main transceiver. The above three expressions have the same meaning in the embodiments of the present application.

In one possible design of this embodiment, not waking up the main transceiver, may also be equivalently understood as: maintaining the main transceiver in a turn-off state; or may also be equivalently understood as: maintaining the main transceiver in a DRX monitoring state. The above three expressions have the same meaning in the embodiments of the present application.

In one possible design of this embodiment, the second power-saving signal for indicating wake-up and the second power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In one possible design of this embodiment, the second transmitting module 2420 is configured to, after the first receiver is woken up, transmit the second power-saving signal to the first receiver.

The first receiver receives the second power-saving signal in a case of being woken up, demodulates the second power-saving signal, and transmits the corresponding content to the main transceiver, indicating whether to wake up the main transceiver.

In one possible design of this embodiment, after the first receiver is woken up, which may also be equivalently understood as that: after the first receiver enters a state of monitoring the transmission of downlink data or data frames; or may also be equivalently understood as that: after the first receiver enters a state of monitoring the control channel used to schedule uplink data or downlink data or data frames. The above three expressions have the same meaning in the embodiments of the present application.

In one possible design of this embodiment, the first receiver monitors the second power-saving signal based on a DRX cycle; and in response to having monitored the second power-saving signal associated with a first DRX cycle, maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The first receiver monitors the second power-saving signals based on a DRX cycle; and in response to having monitored a second power-saving signal associated with a first DRX cycle, maintains the main transceiver in a wake-up state during an active time period in the first DRX cycle, according to a wake-up indication carried by the second power-saving signal, or maintains the main transceiver in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The first receiver monitors the second power-saving signal based on a DRX cycle; in response to having monitored the second power-saving signal associated with a first DRX cycle, maintains the main transceiver in a wake-up state during an active time period in the first DRX cycle, according to an indication of the second power-saving signal associated with the first DRX cycle; and in response to having not monitored the second power-saving signal associated with the first DRX cycle, maintains the main transceiver in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, the second power-saving signal is a signal received by the electronic apparatus through the main transceiver.

In one possible design of this embodiment, the second power-saving signal is a signal monitored by the electronic apparatus based on a DRX cycle; and in response to having monitored the second power-saving signal associated with a first DRX cycle, the electronic apparatus maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The main transceiver monitors the second power-saving signals based on a DRX cycle; and in response to having monitored a second power-saving signal associated with a first DRX cycle, the main transceiver is maintained in a wake-up state during an active time period in the first DRX cycle, according to a wake-up indication carried by the second power-saving signal, or the main transceiver is maintained in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The main transceiver monitors the second power-saving signal based on a DRX cycle; in response to having monitored the second power-saving signal associated with a first DRX cycle, the main transceiver is maintained in a wake-up state during an active time period in the first DRX cycle, according to an indication of the second power-saving signal associated with the first DRX cycle; and in response to having not monitored the second power-saving signal associated with the first DRX cycle, the main transceiver is maintained in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, maintaining the main transceiver in a wake-up state during the active time period in the first DRX cycle, may also be equivalently understood as: monitoring the transmission of downlink data or data frames through the main transceiver at all times during the active time period in the first DRX cycle; or may also be equivalently understood as: monitoring the control channel used to schedule uplink data or downlink data or data frames through the main transceiver at all times during the active time period in the first DRX cycle. The above three expressions have the same meaning in the embodiments of the present application.

Maintaining the main transceiver in a non-wake-up state during the active time period in the first DRX cycle, may also be equivalently understood as: not monitoring, by the main transceiver, the transmission of downlink data or data frames during the active time period in the first DRX cycle; or may also be equivalently understood as: not monitoring, by the main transceiver, the control channel used to schedule uplink data or downlink data or data frames during the active time period in the first DRX cycle. The above three expressions have the same meaning in the embodiments of the present application.

A DRX cycle includes "on duration" and "opportunity for DRX," in which during the on duration (the active time period), the electronic apparatus is in the wake-up state to receive data, and during the DRX opportunity, the electronic apparatus is in the sleep state to receive no data.

For example, the electronic apparatus monitors the second power-saving signal based on the DRX cycle; and in response to having monitored the second power-saving signal before the active time period in the first DRX cycle, where the second power-saving signal indicates that the main transceiver is to be in the wake-up state, maintains the main transceiver in the wake-up state during the active time period in the first DRX cycle.

In one possible design of this embodiment, the first power-saving signal further carries an identifier of a device to be woken up or an identifier of a device group to be woken up.

In one possible design of this embodiment, the second power-saving signal further carries an identifier of a device to be woken up or an identifier of a device group to be woken up.

The identifier of the device group to be woken up is also known as an ID of the device group to be woken up, which is the ID of the group to which a device to be woken up belongs. This group includes at least one device to be woken up.

Based on the ID of the device to be woken up or the ID of the device group to be woken up carried in the first power-saving signal or the second power-saving signal, it is determined whether to wake up the electronic apparatus. In response to that an ID of the electronic apparatus is the same as the ID of the device to be woken up, the electronic apparatus will be woken up; and in response to that the ID of the electronic apparatus is different from the ID of the device to be woken up, the electronic apparatus will not be woken up. In response to that a group ID of the electronic apparatus is the same as the ID of the device group to be woken up, the electronic apparatus will be woken up; and in response to that the group ID of the electronic apparatus is different from the ID of the group device to be woken up, the electronic apparatus will not be woken up.

In one possible design of this embodiment, the second power-saving signal further carries synchronization information used for synchronization of a wireless network and the electronic apparatus. The synchronization includes time-domain synchronization and/or frequency-domain synchronization. The wireless network includes at least one of a WiFi network, a cellular network, or a wireless power supply network.

In one possible design of this embodiment, the main transceiver is turned off by the electronic apparatus in response to a case where a first condition is met.

In one possible design of this embodiment, the first receiver is turned off by the electronic apparatus in response to a case where a second condition is met.

In one possible design of this embodiment, the first receiver and the main transceiver are turned off by the electronic apparatus in response to a case where a third condition is met.

In one possible design of this embodiment, the third transmitting module 2430 is configured to, in response to a case where the first receiver is in a wake-up state, transmit first information to the first receiver.

Here, the first information is used for communication between the electronic apparatus and a wireless network. The wireless network includes at least one of a WiFi network, a cellular network, or a wireless power supply network.

In one possible design of this embodiment, the first information includes: information used for communication between the first receiver and the wireless network.

In one possible design of this embodiment, the electronic apparatus is an active apparatus, where the active apparatus refers to an apparatus that has its own power supply and is capable of actively generating and transmitting signals, such as a mobile phone, a computer, a smartwatch, or a smart bracelet.

In one possible design of this embodiment, the electronic apparatus is a passive apparatus, where the passive apparatus refers to an apparatus that does not require a power supply or is capable of operating by receiving energy from other devices, which may be referred to as a zero-power apparatus, a low-power apparatus, or the like. The zero-power apparatus may be implemented as at least one of a zero-power device or a zero-power terminal, or as part of at least one of a zero-power device or a zero-power terminal. The low-power apparatus may be implemented as at least one of a low-power device or a low-power terminal, or as part of at least one of a low-power device or a low-power terminal.

In one possible design of this embodiment, the electronic apparatus obtains energy from an environment, which may be referred to as an ambient power-enabled IoT apparatus.

In one possible design of this embodiment, the electronic apparatus is deployed in a fixed location, which may be referred to as a zero-power apparatus, a low-power apparatus, or the like. The zero-power apparatus may be implemented as a zero-power station, or as part of a zero-power station. The low-power apparatus may be implemented as a low-power station, or as part of a low-power station.

In one possible design of this embodiment, in response to a case where the first receiver is in the wake-up state, the network apparatus or the power supply node 630 in the embodiment of FIG. 6 transmits first information to the first receiver, where the first information may be referred to as auxiliary information, assisting the electronic apparatus in quickly establishing a connection with the wireless network and completing communication after waking up the main transceiver.

In one possible design of this embodiment, the first information includes: information used for communication between the main transceiver and the wireless network. It may also be equivalently understood as follows: the first information includes: information used for communication between the main transmitter-receiver (or main air interface communication unit) and the wireless network.

In one possible design of this embodiment, the first information includes, but is not limited to, at least one of the following:
- configuration information used for receiving downlink data;
- configuration information used for receiving downlink control signaling;
- configuration information used for receiving a system broadcast;
- configuration information used for transmitting uplink data;
- configuration information used for transmitting uplink control signaling;
- synchronization information used for synchronization;
- configuration information used for receiving a second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The configuration information used for transmitting uplink data includes at least one of the following pieces of information: a time-domain position for transmitting the uplink data, a frequency position for transmitting the uplink data, or a period for transmitting the uplink data.

The configuration information used for transmitting uplink control signaling includes at least one of the following pieces of information: a time-domain position for transmitting the uplink control signaling, or a frequency position for transmitting the uplink control signaling.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network.

The configuration information used for receiving a second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In one possible design of this embodiment, a form of the frequency position includes: a channel form, a bandwidth form, a carrier form, or the like. For example, the downlink data is received on the first channel.

In one possible design of this embodiment, relevant information of the frequency position may enable the electronic apparatus to obtain the frequency position at which the main transceiver communicates with the wireless network through the first receiver, to avoid waking up the main transceiver and then obtaining the frequency position by frequency scanning, thereby reducing power consumption.

In one possible design of this embodiment, the first information is transmitted via a data frame; or the first information is transmitted via a beacon frame.

In one possible design of this embodiment, the network apparatus transmits the first information first, and then transmits the second power-saving signal.

In one possible design of this embodiment, the first information is carried in the second power-saving signal.

After waking up the first receiver, the network apparatus transmits the second power-saving signal. By receiving the second power-saving signal, the electronic apparatus may simultaneously obtain at least one of the following: the first information, the information on whether to wake up the main transceiver, or the synchronization information used for synchronization.

In one possible design of this embodiment, the electronic apparatus obtains configuration of the wireless network based on the content carried in the first information.

For example, in a case where the first information includes configuration information used for receiving downlink data, the main transceiver receives the downlink data based on information such as a time-domain position for receiving the downlink data and a frequency position for receiving the downlink data. Before receiving the downlink data, the main receiver may be maintained in a non-wake-up state as much as possible, thereby saving more power.

In a case where the first information includes configuration information used for receiving downlink control signaling, where the downlink control signaling is used to indicate relevant information for receiving downlink data, the main transceiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network. By receiving the configuration information in advance, the main transceiver may be in a non-wake-up state for a longer period of time, thereby reducing the power consumption of the electronic apparatus.

In a case where the first information includes configuration information used for receiving a system broadcast, the main transceiver receives the system broadcast of the wireless network based on information such as a time-domain position of a broadcast frame and a frequency position of the broadcast frame. By receiving the configuration information of the system broadcast in advance, the main receiver may be maintained in a non-wake-up state during both stages of receiving the system broadcast and obtaining the configuration information in the system broadcast, thereby saving more power.

In a case where the first information includes configuration information used for transmitting uplink data, the main transceiver transmits the uplink data based on information such as a time-domain position for transmitting the uplink data and a frequency position for transmitting the uplink data. Before receiving the uplink data, the main receiver may be maintained in a non-wake-up state as much as possible, thereby saving more power.

In a case where the first information includes configuration information used for transmitting uplink control signaling, where the uplink control signaling is used to provide feedback on whether downlink data has been received, the main transceiver monitors the uplink control signaling based on information such as a time-domain position for transmitting the uplink control signaling and a frequency position for transmitting the uplink control signaling. By receiving the configuration information in advance, the main transceiver may be in a non-wake-up state for a longer period of time, thereby reducing the power consumption of the electronic apparatus.

In a case where the first information includes synchronization information used for synchronization, the electronic apparatus, based on synchronization information for time-domain synchronization and/or synchronization information for frequency-domain synchronization, enables the main transceiver to attain the time-frequency synchronization with the wireless network, so that the main transceiver does not need to perform the time-frequency synchronization after being woken up.

In a case where the first information includes configuration information used for receiving the second power-saving signal, the main transceiver monitors or receives the second power-saving signal based on information such as a time-domain position for receiving the second power-saving signal and a frequency position for receiving the second power-saving signal. By receiving the configuration information in advance, the main transceiver may be in a non-wake-up state for a longer period of time, thereby reducing the power consumption of the electronic apparatus.

In a case where the first information includes capability information of the wireless network, the main transceiver communicates with the wireless network based on information such as a bit rate supported by the wireless network and an MCS supported by the wireless network, for example, communicating with the wireless network at a bit rate of 128 kilobits per second. Thus, the main transceiver does not need to read other content, such as a beacon frame, after being woken up, to obtain the capability information, thereby reducing the power consumption of the electronic apparatus.

After receiving the first information, the electronic apparatus establishes a connection or association with the network using the main transceiver, and then performs communication. The main transceiver uses communication protocols in the related technology, such as 802.11b and 802.11n, thereby enabling the electronic apparatus to communicate with network devices (such as APs) in the related technology.

Since the operating power consumption of the first receiver is lower than the operating power consumption of the main transceiver, receiving, by the first receiver, information communicated between the first receiver and the wireless network may reduce the power consumption of the electronic apparatus, compared to using the main transceiver to receive the above information.

In one possible design of this embodiment, the first information includes at least one of the following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving the second power-saving signal; or
capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network, so that the main transceiver does not need to perform the time-frequency synchronization after being woken up.

The configuration information used for receiving the first power-saving signal includes at least one of the following pieces of information: a time-domain position for receiving the first power-saving signal, or a frequency position for receiving the first power-saving signal.

The configuration information used for receiving the second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame, so the main transceiver does not need to read the beacon frame after being woken up, thus reducing the power consumption of the electronic apparatus.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In this embodiment, the description for the function of the first transmitting module 2410 may be referenced in the context of step 1310 in the embodiment of FIG. 13.

The description for the function of the second transmitting module 2420 may be referenced in the context of step 1330 in the embodiment of FIG. 13.

The description for the function of the third transmitting module 2430 may be referenced in the context of step 1320 in the embodiment of FIG. 14.

FIG. 25 illustrates a block diagram of an electronic apparatus provided in an exemplary embodiment of the present application. The apparatus may be implemented as an electronic device or as part of an electronic device by software or hardware or a combination of both. The apparatus has a first receiver. The apparatus includes a first receiving module 2510, a second receiving module 2520, a turn-off module 2530, a third receiving module 2540, and a communication module 2550.

The first receiving module 2510 is configured to receive a first power-saving signal, where the first power-saving signal is used to indicate whether to wake up the first receiver.

In an initial state, both the first receiver and a main transceiver are in a non-wake-up state. The non-wake-up state may also be understood as at least one of the following: a turn-off state, a sleep state, or a DRX monitoring state. Here, the sleep state includes at least one of a light sleep state, a deep sleep state, and an ultra-deep sleep state. The power consumption of the light sleep state is higher than that of the deep sleep state, and the power consumption of the deep sleep state is higher than that of the ultra-deep sleep state.

Here, the first power-saving signal is used to indicate whether to wake up the first receiver. As an example, the first receiver is a WUR.

In one possible design of this embodiment, waking up the first receiver may also be equivalently understood as: monitoring transmission of downlink data or data frames through the first receiver; or may also be equivalently understood as: monitoring a control channel used to schedule uplink data or downlink data or data frames through the first receiver. The above three expressions have the same meaning in the embodiments of the present application.

In one possible design of this embodiment, not waking up the first receiver may also be equivalently understood as: maintaining the first receiver in a turn-off state; or may also be equivalently understood as: maintaining the first receiver in a sleep state; or may also be equivalently understood as: maintaining the first receiver in a DRX monitoring state. The above four expressions have the same meaning in the embodiments of the present application.

In one possible design of this embodiment, the first power-saving signal being used to indicate that the first receiver is to be woken up, may also be equivalently understood as: the first power-saving signal being used to indicate monitoring transmission of downlink data or data frames through the first receiver; or may also be equivalently understood as: the first power-saving signal being used to indicate monitoring a control channel used to schedule uplink data or downlink data or data frames through the first receiver. The above three expressions have the same meaning in the embodiments of the present application.

In one possible design of this embodiment, the first power-saving signal being used to indicate that the first receiver is not to be woken up, may also be equivalently understood as: the first power-saving signal being used to indicate that the first receiver is to be maintained in a turn-off state; or may also be equivalently understood as: the first power-saving signal being used to indicate that the first receiver is to be maintained in a sleep state; or may also be equivalently understood as: the first power-saving signal being used to indicate that the first receiver is to be maintained in a DRX monitoring state. The above four expressions have the same meaning in the embodiments of the present application.

In one possible design of this embodiment, the electronic apparatus is an active apparatus, where the active apparatus refers to an apparatus that has its own power supply and is capable of actively generating and transmitting signals, such as a mobile phone, a computer, a smartwatch, or a smart bracelet.

In one possible design of this embodiment, the electronic apparatus is a passive apparatus, where the passive apparatus refers to an apparatus that does not require a power supply or is capable of operating by receiving energy from other apparatuses, which may be referred to as a zero-power apparatus, a low-power apparatus, or the like. The zero-power apparatus may be implemented as at least one of a zero-power device or a zero-power terminal, or as part of at least one of a zero-power device or a zero-power terminal. The low-power apparatus may be implemented as at least one of a low-power device or a low-power terminal, or as part of at least one of a low-power device or a low-power terminal.

In one possible design of this embodiment, the electronic apparatus obtains energy from an environment, which may be referred to as an ambient power-enabled IoT apparatus.

In one possible design of this embodiment, the electronic apparatus is deployed in a fixed location, which may be referred to as a zero-power apparatus, a low-power apparatus, or the like. The zero-power apparatus may be implemented as a zero-power station, or as part of a zero-power station. The low-power apparatus may be implemented as a low-power station, or as part of a low-power station.

In one possible design of this embodiment, the first receiving module 2510 is configured to receive the first power-saving signal through the first receiver.

In one possible design of this embodiment, the first power-saving signal for indicating wake-up and the first power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In one possible design of this embodiment, the first power-saving signal is a wake-up signal. A network apparatus transmits a dedicated wake-up signal to the electronic apparatus, and the dedicated wake-up signal is different from a power supply signal.

In one possible design of this embodiment, the first power-saving signal is a power supply signal.

In one possible design of this embodiment, the first power-saving signal is transmitted by a network apparatus or a power supply node.

In a case where both the WUR (first receiver) and the main transceiver are in a turn-off state, since the network apparatus cannot wake up the electronic apparatus by transmitting signals to these receivers, the network apparatus may wake up the WUR by transmitting a power supply signal.

In one possible design of this embodiment, the first power-saving signal for indicating non-wake-up has a first waveform, for example, the first power-saving signal is a single-frequency sine wave, on which no information is modulated.

In one possible design of this embodiment, the first power-saving signal for indicating wake-up is a sequence modulated using a first modulation method. For example, a sequence is modulated with OOK, such as 111000 or 101010, where 1 represents a high level of OOK, and 0 represents a low level of OOK.

The modulation method of the first power-saving signal may also be FSK, PSK, etc., and the sequence length and sequence may also be other values, which are not limited in the embodiments of the present application.

In one possible design of this embodiment, it is indicated whether to wake up the WUR by changing a frequency of transmitting the first power-saving signal.

For example, the first power-saving signal is transmitted at a first frequency point or within a first frequency range, and the transmission at the first frequency point or within the first frequency range indicates that the WUR is to be woken up.

As another example, the first power-saving signal is transmitted at a second frequency point or within a second frequency range, and the transmission at the second frequency point or within the second frequency range indicates that the WUR is not to be woken up.

The first frequency point and the second frequency point may be located in the same frequency band or different frequency bands. The first frequency range and the second frequency range may be located in the same frequency band or different frequency bands.

The electronic apparatus uses a peripheral circuit to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In one possible design of this embodiment, the electronic apparatus further includes a second receiver; the first receiving module 2510 is configured to receive the first power-saving signal through the second receiver.

Here, operating power consumption of the second receiver is lower than operating power consumption of the first receiver. For example, a receiver type of the second receiver 730 is an RF-based receiver type (RF envelope detection receiver type), and a receiver type of the first receiver 710 is an intermediate frequency-based receiver. Therefore, the power consumption of the second receiver 730 is several microwatts, such as 5 microwatts, and the power consumption of the first receiver 710 is hundreds of microwatts, such as 100 microwatts, so the operating power consumption of the second receiver 730 is lower than the operating power consumption of the first receiver 710.

In one possible design of this embodiment, the first receiving module 2510 may be implemented as the first receiver or as the second receiver.

In one possible design of this embodiment, the electronic apparatus further includes a first circuit; and the first receiving module 2510 is configured to receive the first power-saving signal through the first circuit.

In one possible design of this embodiment, the first circuit includes a wireless energy harvesting circuit of the electronic apparatus, or a peripheral circuit of the first receiver.

The wireless energy harvesting circuit is used to harvest wireless energy. In a case where both the first receiver and the main transceiver are turned off, the wireless energy harvesting circuit still maintains an operating state thereof and continues to harvest wireless energy.

The electronic apparatus uses the first circuit to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In one possible design of this embodiment, the first receiver uses a first receiver parameter, where the first receiver parameter includes a first receiver type and/or a first receiving bandwidth.

The receiver type represents an architecture type of a receiver used by the electronic apparatus, such as an RF-based receiver or an intermediate frequency (zero-IF)-based receiver; and the receiving bandwidth represents a bandwidth used to receive signals.

In one possible design of this embodiment, the first receiver type is an RF-based receiver type. An RF signal is directly detected by using the first receiver of the RF-based receiver type (RF envelope detection receiver type), without requiring frequency conversion on the RF signal, and thus there is no need to convert the RF signal to a baseband signal, which may reduce the power consumption of the first receiver.

Since this receiver type, based on parameters of its implemented RF filter or matched network, can only receive the first power-saving signal within a specified frequency range, the first power-saving signal may be received within a first frequency band or on a first channel within the first frequency band.

In one possible design of this embodiment, the first receiving module 2510 is configured to receive the first power-saving signal within a first frequency band.

The receiving bandwidth of the first receiver is equal to a bandwidth of the first frequency band, and the first receiver receives the first power-saving signal within a bandwidth not exceeding the bandwidth range of the first frequency band. For example, the first power-saving signal is received at 920 MHz to 925 MHz.

In one possible design of this embodiment, the first receiving module 2510 is configured to receive the first power-saving signal on a first channel within the first frequency band.

In a case where the first frequency band includes a plurality of channels, the first power-saving signal is received on one of the channels (the first channel), and the receiving bandwidth of the first receiver is equal to a bandwidth of the first channel. For example, 20 channels with a bandwidth of 250 kHz are allocated within a range of 920 MHz to 925 MHz, and the first power-saving signal is received on the first channel therein.

As another example, in a case where the first receiver operates at 2.4 GHz, a frequency band is 2,400 MHz to 2,485 MHz, within which a plurality of channels may be allocated, such as channels at 2,400 MHz to 2,420 MHz, channels at 2,420 MHz to 2,440 MHz, channels at 2,440 MHz to 2,460 MHz, and so on. Therefore, the first power-saving signal may be received on the first channel within the frequency band, for example, on a channel at 2,400 MHz to 2,420 MHz.

In one possible design of this embodiment, the first channel is any channel within the first frequency band; or
the first channel is a designated channel within the first frequency band; or
the first channel is a most central channel within the first frequency band; or
the first channel is one of two most central channels within the first frequency band.

In a case where the number of channels included in the first frequency band is odd, the first channel is the most central channel within the first frequency band; and in a case where the number of channels included in the first frequency band is even, the first channel is one of the two most central channels within the first frequency band.

For example, in a case where the first frequency band includes five channels, the first channel is the most central channel (the third channel); or in a case where the first frequency band includes four channels, the first channel is one of the two most central channels (the second channel or the third channel).

In one possible design of this embodiment, the operating power consumption of the first receiver is lower than a preset threshold. The preset threshold is generally a small value relative to the operating power consumption of the main transceiver, enabling the operating power consumption of the first receiver to be much smaller than the operating power consumption of the main transceiver. For example, the preset threshold is 1 milliwatt, the operating power consumption of the main transceiver is 50 milliwatts, and the operating power consumption of the first receiver is 0.5 milliwatts.

In one possible design of this embodiment, the receiver's electronic apparatus has an energy harvesting module used to harvest ambient energy from an environment, where the ambient energy is used to supply power to the first receiver.

In one possible design of this embodiment, the electronic apparatus further includes a main transceiver, with operating power consumption of the first receiver lower than operating power consumption of the main transceiver; and the second receiving module 2520 is configured to receive a second power-saving signal, where the second power-saving signal is used to indicate whether to wake up the main transceiver.

In one possible design of this embodiment, waking up the main transceiver, may also be equivalently understood as: waking up a main transmitter-receiver; or may also be equivalently understood as: waking up a main air interface communication unit. The above three expressions have the same meaning in the embodiments of the present application.

In one possible design of this embodiment, waking up the main transceiver, may also be equivalently understood as: monitoring transmission of downlink data or data frames through the main transceiver; or may also be equivalently understood as: monitoring a control channel used to schedule uplink data or downlink data or data frames through the main transceiver. The above three expressions have the same meaning in the embodiments of the present application.

In one possible design of this embodiment, not waking up the main transceiver, may also be equivalently understood as: maintaining the main transceiver in a turn-off state; or may also be equivalently understood as: maintaining the main transceiver in a DRX monitoring state. The above three expressions have the same meaning in the embodiments of the present application.

In one possible design of this embodiment, the second power-saving signal for indicating wake-up and the second power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In one possible design of this embodiment, the second receiving module 2520 is configured to, after the first receiver is woken up, receive the second power-saving signal through the first receiver.

The first receiver receives the second power-saving signal in a case of being woken up, demodulates the second power-saving signal, and transmits the corresponding content to the main transceiver, indicating whether to wake up the main transceiver.

In one possible design of this embodiment, after the first receiver is woken up, which may also be equivalently understood as that: after the first receiver enters a state of monitoring the transmission of downlink data or data frames; or may also be equivalently understood as that: after the first receiver enters a state of monitoring the control channel used to schedule uplink data or downlink data or data frames. The above three expressions have the same meaning in the embodiments of the present application.

In one possible design of this embodiment, the first receiver monitors the second power-saving signal based on a DRX cycle; and in response to having monitored the second power-saving signal associated with a first DRX cycle, maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The first receiver monitors the second power-saving signals based on a DRX cycle; and in response to having monitored a second power-saving signal associated with a first DRX cycle, maintains the main transceiver in a wake-up state during an active time period in the first DRX cycle, according to a wake-up indication carried by the second power-saving signal, or maintains the main transceiver in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The first receiver monitors the second power-saving signal based on a DRX cycle; in response to having monitored the second power-saving signal associated with a first DRX cycle, maintains the main transceiver in a wake-up state during an active time period in the first DRX cycle, according to an indication of the second power-saving signal associated with the first DRX cycle; and in response to having not monitored the second power-saving signal associated with the first DRX cycle, maintains the main transceiver in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, the second receiving module 2520 is configured to receive the second power-saving signal through the main transceiver.

Here, both the first receiver and the main transceiver are in a non-wake-up state.

In one possible design of this embodiment, the main transceiver monitors the second power-saving signal based on a DRX cycle; and in response to having monitored the second power-saving signal associated with a first DRX cycle, the main transceiver is maintained in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The main transceiver monitors the second power-saving signals based on a DRX cycle; and in response to having monitored a second power-saving signal associated with a first DRX cycle, the main transceiver is maintained in a wake-up state during an active time period in the first DRX cycle, according to a wake-up indication carried by the second power-saving signal, or the main transceiver is maintained in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The main transceiver monitors the second power-saving signal based on a DRX cycle; in response to having monitored the second power-saving signal associated with a first DRX cycle, the main transceiver is maintained in a wake-up state during an active time period in the first DRX cycle, according to an indication of the second power-saving signal associated with the first DRX cycle; and in response to having not monitored the second power-saving signal associated with the first DRX cycle, the main transceiver is maintained in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, maintaining the main transceiver in a wake-up state during the active time period in the first DRX cycle, may also be equivalently understood as: monitoring the transmission of downlink data or data frames through the main transceiver at all times during the active time period in the first DRX cycle; or may also be equivalently understood as: monitoring the control channel used to schedule uplink data or downlink data or data frames through the main transceiver at all times during the active time period in the first DRX cycle. The above three expressions have the same meaning in the embodiments of the present application.

Maintaining the main transceiver in a non-wake-up state during the active time period in the first DRX cycle, may also be equivalently understood as: not monitoring, by the main transceiver, the transmission of downlink data or data frames during the active time period in the first DRX cycle; or may also be equivalently understood as: not monitoring, by the main transceiver, the control channel used to schedule uplink data or downlink data or data frames during the active time period in the first DRX cycle. The above three expressions have the same meaning in the embodiments of the present application.

A DRX cycle includes "on duration" and "opportunity for DRX," in which during the on duration (the active time period), the electronic apparatus is in the wake-up state to receive data, and during the DRX opportunity, the electronic apparatus is in the sleep state to receive no data.

For example, the electronic apparatus monitors the second power-saving signal based on the DRX cycle; and in response to having monitored the second power-saving signal before the active time period in the first DRX cycle, where the second power-saving signal indicates that the main transceiver is to be in the wake-up state, maintains the main transceiver in the wake-up state during the active time period in the first DRX cycle.

In one possible design of this embodiment, the first power-saving signal further carries an identifier of a device to be woken up or an identifier of a device group to be woken up.

In one possible design of this embodiment, the second power-saving signal further carries an identifier of a device to be woken up or an identifier of a device group to be woken up.

The identifier of the device group to be woken up is also known as an ID of the device group to be woken up, which is the ID of the group to which a device to be woken up belongs. This group includes at least one device to be woken up.

Based on the ID of the device to be woken up or the ID of the device group to be woken up carried in the first power-saving signal or the second power-saving signal, it is determined whether to wake up the electronic apparatus. In response to that an ID of the electronic apparatus is the same as the ID of the device to be woken up, the electronic apparatus will be woken up; and in response to that the ID of the electronic apparatus is different from the ID of the device to be woken up, the electronic apparatus will not be woken up. In response to that a group ID of the electronic apparatus is the same as the ID of the device group to be woken up, the electronic apparatus will be woken up; and in response to that the group ID of the electronic apparatus is different from the ID of the group device to be woken up, the electronic apparatus will not be woken up.

In one possible design of this embodiment, the second power-saving signal further carries synchronization information used for synchronization of a wireless network and the electronic apparatus. The synchronization includes time-domain synchronization and/or frequency-domain synchronization. The wireless network includes at least one of a WiFi network, a cellular network, or a wireless power supply network.

In one possible design of this embodiment, the turn-off module 2530 is configured to, in response to a case where a first condition is met, turn off the main transceiver.

Due to the high operating power consumption of the main transceiver, in response to a case where a first condition is met, the main transceiver is turned off.

For example, the electricity consumption of different users is queried through IoT meters, and the main transceiver is turned off after the query is completed.

In one possible design of this embodiment, the turn-off module 2530 is configured to, in response to a case where a first condition is met, turn off the first receiver.

Here, the first condition and the second condition are two different conditions.

Although the operating power consumption of the first receiver is lower than the operating power consumption of the main transceiver, in order to further save power, the first receiver is turned off in response to a case where the second condition is met.

For example, the electricity consumption of different users is queried through IoT meters, and the main transceiver is turned off after the query is completed. In response to a case where feedback information, e.g., an ACK message, transmitted from the wireless network is received, the first receiver is turned off.

In one possible design of this embodiment, the turn-off module 2530 is configured to, in response to a case where a first condition is met, turn off the first receiver and the main transceiver.

Here, the third condition is different from the first condition and the second condition.

To further save power, both the first receiver and the main transceiver are turned off in response to a case where a third condition is met.

For example, in response to a case where an IoT warehousing device receives all data on items stored in a warehouse, both the first receiver and the main transceiver are turned off.

In one possible design of this embodiment, the turn-off module 2530 may be implemented independently as a turn-off apparatus for a receiver.

In one possible design of this embodiment, the third receiving module 2540 is configured to, in response to a case where the first receiver is in a wake-up state, receive first information through the first receiver.

Here, the first information is used for communication between the electronic apparatus and a wireless network. The wireless network includes at least one of a WiFi network, a cellular network, or a wireless power supply network.

In one possible design of this embodiment, the first information includes: information used for communication between the first receiver and the wireless network.

In one possible design of this embodiment, the first information includes: information used for communication between the first receiver and the wireless network.

In one possible design of this embodiment, the electronic apparatus is an active apparatus, where the active apparatus refers to an apparatus that has its own power supply and is capable of actively generating and transmitting signals, such as a mobile phone, a computer, a smartwatch, or a smart bracelet.

In one possible design of this embodiment, the electronic apparatus is a passive apparatus, where the passive apparatus refers to an apparatus that does not require a power supply or is capable of operating by receiving energy from other devices, which may be referred to as a zero-power apparatus, a low-power apparatus, or the like. The zero-power apparatus may be implemented as at least one of a zero-power device or a zero-power terminal, or as part of at least one of a zero-power device or a zero-power terminal. The low-power apparatus may be implemented as at least one of a low-power device or a low-power terminal, or as part of at least one of a low-power device or a low-power terminal.

In one possible design of this embodiment, the electronic apparatus obtains energy from an environment, which may be referred to as an ambient power-enabled IoT apparatus.

In one possible design of this embodiment, the electronic apparatus is deployed in a fixed location, which may be referred to as a zero-power apparatus, a low-power apparatus, or the like. The zero-power apparatus may be implemented as a zero-power station, or as part of a zero-power station. The low-power apparatus may be implemented as a low-power station, or as part of a low-power station.

In one possible design of this embodiment, in response to a case where the first receiver is in the wake-up state, the network apparatus or the power supply node 630 in the embodiment of FIG. 6 transmits first information to the first receiver, where the first information may be referred to as auxiliary information, assisting the electronic apparatus in quickly establishing a connection with the wireless network and completing communication after waking up the main transceiver.

In one possible design of this embodiment, the first information includes: information used for communication between the main transceiver and the wireless network. It may also be equivalently understood as follows: the first information includes: information used for communication between the main transmitter-receiver (or main air interface communication unit) and the wireless network.

In one possible design of this embodiment, the first information includes, but is not limited to, at least one of the following:
- configuration information used for receiving downlink data;
- configuration information used for receiving downlink control signaling;
- configuration information used for receiving a system broadcast;
- configuration information used for transmitting uplink data;
- configuration information used for transmitting uplink control signaling;
- synchronization information used for synchronization;
- configuration information used for receiving a second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The configuration information used for transmitting uplink data includes at least one of the following pieces of information: a time-domain position for transmitting the uplink data, a frequency position for transmitting the uplink data, or a period for transmitting the uplink data.

The configuration information used for transmitting uplink control signaling includes at least one of the following pieces of information: a time-domain position for transmitting the uplink control signaling, or a frequency position for transmitting the uplink control signaling.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network.

The configuration information used for receiving a second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In one possible design of this embodiment, a form of the frequency position includes: a channel form, a bandwidth form, a carrier form, or the like. For example, the downlink data is received on the first channel.

In one possible design of this embodiment, relevant information of the frequency position may enable the electronic apparatus to obtain the frequency position at which the main transceiver communicates with the wireless network through the first receiver, to avoid waking up the main transceiver and then obtaining the frequency position by frequency scanning, thereby reducing power consumption.

In one possible design of this embodiment, the first information is transmitted via a data frame; or the first information is transmitted via a beacon frame.

In one possible design of this embodiment, the network apparatus transmits the first information first, and then transmits the second power-saving signal.

In one possible design of this embodiment, the first information is carried in the second power-saving signal.

After waking up the first receiver, the network apparatus transmits the second power-saving signal. By receiving the second power-saving signal, the electronic apparatus may simultaneously obtain at least one of the following: the first information, the information on whether to wake up the main transceiver, or the synchronization information used for synchronization.

In one possible design of this embodiment, the communication module 2550 is configured to, in response to a case where the main transceiver is in a wake-up state, perform communication with the wireless network based on the first information.

In response to the case where the main transceiver is in the wake-up state, the electronic apparatus obtains configuration of the wireless network based on the content carried in the first information.

For example, in a case where the first information includes configuration information used for receiving downlink data, the main transceiver receives the downlink data based on information such as a time-domain position for receiving the downlink data and a frequency position for receiving the downlink data. Before receiving the downlink data, the main receiver may be maintained in a non-wake-up state as much as possible, thereby saving more power.

In a case where the first information includes configuration information used for receiving downlink control signaling, where the downlink control signaling is used to indicate relevant information for receiving downlink data, the main transceiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network. By receiving the configuration information in advance, the main transceiver may be in a non-wake-up state for a longer period of time, thereby reducing the power consumption of the electronic apparatus.

In a case where the first information includes configuration information used for receiving a system broadcast, the main transceiver receives the system broadcast of the wireless network based on information such as a time-domain position of a broadcast frame and a frequency position of the broadcast frame. By receiving the configuration information of the system broadcast in advance, the main receiver may be maintained in a non-wake-up state during both stages of receiving the system broadcast and obtaining the configuration information in the system broadcast, thereby saving more power.

In a case where the first information includes configuration information used for transmitting uplink data, the main transceiver transmits the uplink data based on information such as a time-domain position for transmitting the uplink data and a frequency position for transmitting the uplink data. Before receiving the uplink data, the main receiver may be maintained in a non-wake-up state as much as possible, thereby saving more power.

In a case where the first information includes configuration information used for transmitting uplink control signaling, where the uplink control signaling is used to provide feedback on whether downlink data has been received, the main transceiver monitors the uplink control signaling based on information such as a time-domain position for transmitting the uplink control signaling and a frequency position for transmitting the uplink control signaling. By receiving the configuration information in advance, the main transceiver may be in a non-wake-up state for a longer period of time, thereby reducing the power consumption of the electronic apparatus.

In a case where the first information includes synchronization information used for synchronization, the electronic apparatus, based on synchronization information for time-domain synchronization and/or synchronization information for frequency-domain synchronization, enables the main transceiver to attain the time-frequency synchronization with the wireless network, so that the main transceiver does not need to perform the time-frequency synchronization after being woken up.

In a case where the first information includes configuration information used for receiving the second power-saving signal, the main transceiver monitors or receives the second power-saving signal based on information such as a time-domain position for receiving the second power-saving signal and a frequency position for receiving the second power-saving signal. By receiving the configuration information in advance, the main transceiver may be in a non-wake-up state for a longer period of time, thereby reducing the power consumption of the electronic apparatus.

In a case where the first information includes capability information of the wireless network, the main transceiver communicates with the wireless network based on information such as a bit rate supported by the wireless network and an MCS supported by the wireless network, for example, communicating with the wireless network at a bit rate of 128 kilobits per second. Thus, the main transceiver does not need to read other content, such as a beacon frame, after being woken up, to obtain the capability information, thereby reducing the power consumption of the electronic apparatus.

After receiving the first information, the electronic apparatus establishes a connection or association with the network using the main transceiver, and then performs communication. The main transceiver uses communication protocols in the related technology, such as 802.11b and 802.11n, thereby enabling the electronic apparatus to communicate with network devices (such as APs) in the related technology.

Since the operating power consumption of the first receiver is lower than the operating power consumption of the main transceiver, receiving, by the first receiver, information communicated between the first receiver and the wireless network may reduce the power consumption of the electronic apparatus, compared to using the main transceiver to receive the above information.

In one possible design of this embodiment, the first information includes at least one of the following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving the second power-saving signal; or
capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network, so that the main transceiver does not need to perform the time-frequency synchronization after being woken up.

The configuration information used for receiving the first power-saving signal includes at least one of the following pieces of information: a time-domain position for receiving the first power-saving signal, or a frequency position for receiving the first power-saving signal.

The configuration information used for receiving the second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame, so the main transceiver does not need to read the beacon frame after being woken up, thus reducing the power consumption of the electronic apparatus.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In one possible design of this embodiment, the first receiver communicates with the wireless network based on the content carried in the first information.

For example, in a case where the first information includes configuration information used for receiving downlink data, the first receiver receives the downlink data based on information such as a time-domain position for receiving the downlink data and a frequency position for receiving the downlink data.

In a case where the first information includes configuration information used for receiving downlink control signaling, where the downlink control signaling is used to indicate relevant information for receiving downlink data, the first receiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network.

In a case where the first information includes configuration information used for receiving a system broadcast, the first receiver receives the system broadcast of the wireless network based on information such as a time-domain position of a broadcast frame and a frequency position of the broadcast frame.

In a case where the first information includes synchronization information used for synchronization, the first receiver, based on synchronization information for time-domain synchronization and/or synchronization information for frequency-domain synchronization, enables the first receiver to attain the time-frequency synchronization with the wireless network.

In a case where the first information includes configuration information used for receiving the first power-saving signal, the first receiver monitors or receives the first power-saving signal based on information such as a time-domain position for receiving the first power-saving signal and a frequency position for receiving the first power-saving signal.

In a case where the first information includes configuration information used for receiving the second power-saving signal, the first receiver monitors or receives the second power-saving signal based on information such as a time-domain position for receiving the second power-saving signal and a frequency position for receiving the second power-saving signal.

In a case where the first information includes capability information of the wireless network, the first receiver communicates with the wireless network based on information such as a bit rate supported by the wireless network and an MCS supported by the wireless network, for example, communicating with the wireless network at a bit rate of 8 kilobits per second.

In one possible design of this embodiment, taking the wireless network as a WiFi network as an example, the first information includes at least one of the following pieces of information:
- timestamp information of the network when the network device communicates with the main transceiver;
- frequency position information of a communication channel used by the main transceiver during communication;
- time-domain position information of a beacon frame;
- capability information of the wireless network; or
- synchronization information used for synchronization.

In a case where the first information includes timestamp information of the network when the network apparatus communicates with the main transceiver, the electronic apparatus obtains the timestamp information in advance through the first receiver, so that the main transceiver may obtain the communication time of the network without reading the beacon frame after being woken up. Here, the main transceiver may be equivalently understood as a main transmitter-receiver or a main air interface communication unit.

In a case where the first information includes frequency position information of a communication channel used by the main transceiver during communication, the electronic apparatus adjusts an operating channel to that frequency position, to avoid waking up the main transceiver and then obtaining the frequency position of the operating channel through frequency scanning of the main transceiver.

In a case where the first information includes time-domain position information of a beacon frame, the electronic apparatus receives the beacon frame based on that time-domain position. For example, at a time-domain position of signal transmission of a non-beacon frame, the electronic apparatus turns off the main transceiver; and at a time-domain position of transmission of the beacon frame, the electronic apparatus turns on the main transceiver, thereby reducing power consumption. Moreover, considering the clock deviation of the electronic apparatus, the main transceiver may be turned on at a first time-domain position. The first time-domain position is a time-domain position with a time margin before the time-domain position of the transmission of the beacon frame, where the time margin may be adjusted according to the actual situation.

In a case where the first information includes capability information of the wireless network, since the capability information of the wireless network is generally carried in the beacon frame, it is possible to avoid the main transceiver reading the beacon frame after being woken up, thereby reducing the power consumption of the electronic apparatus.

In a case where the first information includes synchronization information used for synchronization, the first receiver attains the time-frequency synchronization with the wireless network, so that the main transceiver does not need to perform the time-frequency synchronization after being woken up.

In some embodiments, the first information includes downlink data, such as data with a data volume lower than a first threshold, or data with a transmission delay requirement lower than a first delay. The first threshold and the first delay are preset values or value ranges.

In one possible design of this embodiment, the first information is received through the first receiver. The first receiver receives data with a data volume lower than a first threshold, or data with a transmission delay requirement lower than a first delay, without needing to use the main transceiver for reception, further reducing the power consumption of the electronic apparatus.

In this embodiment, the first receiving module 2510 may be divided into a plurality of receiving sub-modules, such as a first receiving sub-module, a second receiving sub-module, and a third receiving sub-module. The first receiving sub-module is configured to receive the first power-saving signal through the second receiver, the second receiving sub-module is configured to receive the first power-saving signal through the first circuit, and the third receiving sub-module is configured to receive the first power-saving signal through the first receiver; or the first receiving sub-module is configured to receive the first power-saving signal through the first circuit, the second receiving sub-module is configured to receive the first power-saving signal through the first receiver, and the third receiving sub-module is configured to receive the first power-saving signal through the second receiver. This embodiment does not limit the functions of different receiving sub-modules.

In this embodiment, the second receiving module 2520 may be divided into a plurality of receiving sub-modules, such as a first receiving sub-module and a second receiving sub-module. The first receiving sub-module is configured to, after the first receiver is woken up, receive the second power-saving signal through the first receiver, and the second receiving sub-module is configured to receive the second power-saving signal through the main transceiver; or the first receiving sub-module is configured to receive the second power-saving signal through the main transceiver, and the second receiving sub-module is configured to, after the first receiver is woken up, receive the second power-saving signal through the first receiver. This embodiment does not limit the functions of different receiving sub-modules.

In this embodiment, the turn-off module 2530 may be divided into a plurality of turn-off modules, such as a first turn-off module, a second turn-off module, and a third turn-off module. The first turn-off module is configured to, in response to a case where a first condition is met, turn off the main transceiver, the second turn-off module is configured to, in response to a case where a second condition is met, turn off the first receiver, and the third turn-off module is configured to, in response to a case where a third condition is met, turn off the first receiver and the main transceiver; or the first turn-off module is configured to, in response to a case where a second condition is met, turn off the first receiver, the second turn-off module is configured to, in response to a case where a third condition is met, turn off the first receiver and the main transceiver, and in response to a case where the first condition is met, turn off the main transceiver, and the third turn-off module is configured to, in response to a case where the first condition is met, turn off the main transceiver. This embodiment does not limit the functions of the different turn-off modules.

This embodiment is described by way of example with one first receiving module 2510, and the number of first receiving modules 2510 is not limited.

This embodiment is described by way of example with one second receiving module 2520, and the number of second receiving modules 2520 is not limited.

This embodiment is described by way of example with one turn-off module 2530, and the number of turn-off modules 2530 is not limited.

The description for the function of the first receiving module 2510 may be referenced in the context of step 1510 in the embodiment of FIG. 15.

The description for the function of the second receiving module 2520 may be referenced in the context of step 1530 in the embodiment of FIG. 16.

The description for the function of the turn-off module 2530 may be referenced in the content of step 1110 and step 1120 in the embodiment of FIG. 11, and the content of step 1210 in the embodiment of FIG. 12.

The description for the function of the third receiving module 2540 may be referenced in the content of step 1520 in the embodiment of FIG. 15.

The description for the function of the communication module 2550 may be referenced in the content of step 1540 in the embodiment of FIG. 15.

FIG. 26 illustrates a block diagram of a network apparatus provided in an exemplary embodiment of the present application. The apparatus may be implemented as a network device or as part of a network device by software or hardware or a combination of both. The apparatus includes a first transmitting module 2610, a second transmitting module 2620 and a third transmitting module 2630.

The first transmitting module 2610 is configured to transmit a first power-saving signal, where the first power-saving signal is used to indicate whether to wake up a first receiver.

Here, an electronic apparatus has the first receiver.

In an initial state, both the first receiver and a main transceiver are in a non-wake-up state. The non-wake-up state may also be understood as at least one of the following: a turn-off state, a sleep state, or a DRX monitoring state. Here, the sleep state includes at least one of a light sleep state, a deep sleep state, and an ultra-deep sleep state. The power consumption of the light sleep state is higher than that of the deep sleep state, and the power consumption of the deep sleep state is higher than that of the ultra-deep sleep state.

Here, the first power-saving signal is used to indicate whether to wake up the first receiver. As an example, the first receiver is a WUR.

In one possible design of this embodiment, waking up the first receiver may also be equivalently understood as: monitoring transmission of downlink data or data frames through the first receiver; or may also be equivalently understood as: monitoring a control channel used to schedule uplink data or downlink data or data frames through the first receiver. The above three expressions have the same meaning in the embodiments of the present application.

In one possible design of this embodiment, not waking up the first receiver may also be equivalently understood as: maintaining the first receiver in a turn-off state; or may also be equivalently understood as: maintaining the first receiver in a sleep state; or may also be equivalently understood as: maintaining the first receiver in a DRX monitoring state. The above four expressions have the same meaning in the embodiments of the present application.

In one possible design of this embodiment, the first power-saving signal being used to indicate that the first receiver is to be woken up, may also be equivalently understood as: the first power-saving signal being used to indicate monitoring transmission of downlink data or data frames through the first receiver; or may also be equivalently understood as: the first power-saving signal being used to indicate monitoring a control channel used to schedule uplink data or downlink data or data frames through the first receiver. The above three expressions have the same meaning in the embodiments of the present application.

In one possible design of this embodiment, the first power-saving signal being used to indicate that the first receiver is not to be woken up, may also be equivalently understood as: the first power-saving signal being used to indicate that the first receiver is to be maintained in a turn-off state; or may also be equivalently understood as: the first power-saving signal being used to indicate that the first receiver is to be maintained in a sleep state; or may also be equivalently understood as: the first power-saving signal being used to indicate that the first receiver is to be maintained in a DRX monitoring state. The above four expressions have the same meaning in the embodiments of the present application.

In one possible design of this embodiment, the electronic apparatus is an active apparatus, where the active apparatus refers to an apparatus that has its own power supply and is capable of actively generating and transmitting signals, such as a mobile phone, a computer, a smartwatch, or a smart bracelet.

In one possible design of this embodiment, the electronic apparatus is a passive apparatus, where the passive apparatus refers to an apparatus that does not require a power supply or is capable of operating by receiving energy from other apparatuses, which may be referred to as a zero-power apparatus, a low-power apparatus, or the like. The zero-power apparatus may be implemented as at least one of a zero-power device or a zero-power terminal, or as part of at least one of a zero-power device or a zero-power terminal. The low-power apparatus may be implemented as at least one of a low-power device or a low-power terminal, or as part of at least one of a low-power device or a low-power terminal.

In one possible design of this embodiment, the electronic apparatus obtains energy from an environment, which may be referred to as an ambient power-enabled IoT apparatus.

In one possible design of this embodiment, the electronic apparatus is deployed in a fixed location, which may be referred to as a zero-power apparatus, a low-power apparatus, or the like. The zero-power apparatus may be implemented as a zero-power station, or as part of a zero-power station. The low-power apparatus may be implemented as a low-power station, or as part of a low-power station.

In one possible design of this embodiment, the first power-saving signal is a signal received by the electronic apparatus through the first receiver.

In one possible design of this embodiment, the first power-saving signal for indicating wake-up and the first power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In one possible design of this embodiment, the first power-saving signal is a wake-up signal. The network apparatus transmits a dedicated wake-up signal to the electronic apparatus, and the dedicated wake-up signal is different from a power supply signal.

In one possible design of this embodiment, the first power-saving signal is a power supply signal.

In one possible design of this embodiment, the first power-saving signal is transmitted by the network apparatus or a power supply node.

In a case where both the WUR (first receiver) and the main transceiver are in a turn-off state, since the network apparatus cannot wake up the electronic apparatus by transmitting signals to these receivers, the network apparatus may wake up the WUR by transmitting a power supply signal.

In one possible design of this embodiment, the first power-saving signal for indicating non-wake-up has a first waveform, for example, the first power-saving signal is a single-frequency sine wave, on which no information is modulated.

In one possible design of this embodiment, the first power-saving signal for indicating wake-up is a sequence modulated using a first modulation method. For example, a sequence is modulated with OOK, such as 111000 or 101010, where 1 represents a high level of OOK, and 0 represents a low level of OOK.

The modulation method of the first power-saving signal may also be FSK, PSK, etc., and the sequence length and sequence may also be other values, which are not limited in the embodiments of the present application.

In one possible design of this embodiment, it is indicated whether to wake up the WUR by changing a frequency of transmitting the first power-saving signal.

For example, the first power-saving signal is transmitted at a first frequency point or within a first frequency range, and the transmission at the first frequency point or within the first frequency range indicates that the WUR is to be woken up.

As another example, the first power-saving signal is transmitted at a second frequency point or within a second frequency range, and the transmission at the second frequency point or within the second frequency range indicates that the WUR is not to be woken up.

The first frequency point and the second frequency point may be located in the same frequency band or different frequency bands. The first frequency range and the second frequency range may be located in the same frequency band or different frequency bands.

The electronic apparatus uses a peripheral circuit to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In one possible design of this embodiment, the electronic apparatus further includes a second receiver, and the first power-saving signal is a signal received by the electronic apparatus through the second receiver, with operating power consumption of the second receiver lower than operating power consumption of the first receiver.

In one possible design of this embodiment, the second receiver and the first receiver are on the same chip or different chips and are connected by an electronic lead.

In one possible design of this embodiment, the electronic apparatus further includes a first circuit, and the first power-saving signal is a signal received by the electronic apparatus through the first circuit.

In one possible design of this embodiment, the first circuit includes a wireless energy harvesting circuit of the electronic apparatus, or a peripheral circuit of the first receiver.

The wireless energy harvesting circuit is used to harvest wireless energy. In a case where both the first receiver and the main transceiver are turned off, the wireless energy harvesting circuit still maintains an operating state thereof and continues to harvest wireless energy.

The electronic apparatus uses the first circuit to measure signal energy received at two frequency points or within two frequency ranges, thereby determining whether the first power-saving signal is transmitted at the first frequency point or the second frequency point, or determining whether the first power-saving signal is transmitted within the first frequency range or the second frequency range.

In one possible design of this embodiment, the first receiver uses a first receiver parameter, where the first receiver parameter includes a first receiver type and/or a first receiving bandwidth.

The receiver type represents an architecture type of a receiver used by the electronic apparatus, such as an RF-based receiver or an intermediate frequency (zero-IF)-based receiver; and the receiving bandwidth represents a bandwidth used to receive signals.

In one possible design of this embodiment, the first receiver type is an RF-based receiver type. An RF signal is directly detected by using the first receiver of the RF-based receiver type (RF envelope detection receiver type), without requiring frequency conversion on the RF signal, and thus there is no need to convert the RF signal to a baseband signal, which may reduce the power consumption of the first receiver.

Since this receiver type, based on parameters of its implemented RF filter or matched network, can only receive the first power-saving signal within a specified frequency range, the first power-saving signal may be received within a first frequency band or on a first channel within the first frequency band.

In one possible design of this embodiment, the first transmitting module 2410 is configured to transmit the first power-saving signal within a first frequency band.

The receiving bandwidth of the first receiver is equal to a bandwidth of the first frequency band, and the first receiver receives the first power-saving signal within a bandwidth not exceeding the bandwidth range of the first frequency band. For example, the first power-saving signal is received at 920 MHz to 925 MHz.

In one possible design of this embodiment, the first transmitting module 2410 is configured to transmit the first power-saving signal on a first channel within the first frequency band.

In a case where the first frequency band includes a plurality of channels, the first power-saving signal is transmitted on one of the channels (the first channel), and the receiving bandwidth of the first receiver is equal to a bandwidth of the first channel. For example, 20 channels with a bandwidth of 250 kHz are allocated within a range of 920 MHz to 925 MHz, and the first receiver receives the first power-saving signal on the first channel therein.

As another example, in a case where the first receiver operates at 2.4 GHz, a frequency band is 2,400 MHz to 2,485 MHz, within which a plurality of channels may be allocated, such as channels at 2,400 MHz to 2,420 MHz, channels at 2,420 MHz to 2,440 MHz, channels at 2,440 MHz to 2,460 MHz, and so on. Therefore, the first receiver may receive the first power-saving signal on the first channel within the frequency band, for example, on a channel at 2,400 MHz to 2,420 MHz.

In one possible design of this embodiment, the first channel is any channel within the first frequency band; or
the first channel is a designated channel within the first frequency band; or
the first channel is a most central channel within the first frequency band; or
the first channel is one of two most central channels within the first frequency band.

In a case where the number of channels included in the first frequency band is odd, the first channel is the most central channel within the first frequency band; and in a case where the number of channels included in the first frequency band is even, the first channel is one of the two most central channels within the first frequency band.

For example, in a case where the first frequency band includes five channels, the first channel is the most central channel (the third channel); or in a case where the first frequency band includes four channels, the first channel is one of the two most central channels (the second channel or the third channel).

In one possible design of this embodiment, the operating power consumption of the first receiver is lower than a preset threshold. The preset threshold is generally a small value relative to the operating power consumption of the main transceiver, enabling the operating power consumption of the first receiver to be much smaller than the operating power consumption of the main transceiver. For example, the preset threshold is 1 milliwatt, the operating power consumption of the main transceiver is 50 milliwatts, and the operating power consumption of the first receiver is 0.5 milliwatts.

In one possible design of this embodiment, the electronic apparatus has an energy harvesting module used to harvest ambient energy from an environment, where the ambient energy is used to supply power to the first receiver.

In one possible design of this embodiment, the electronic apparatus further includes a main transceiver, with operating power consumption of the first receiver lower than operating power consumption of the main transceiver; and the second transmitting module 2620 is configured to transmit a second power-saving signal, where the second power-saving signal is used to indicate whether to wake up the main transceiver.

In one possible design of this embodiment, waking up the main transceiver, may also be equivalently understood as: waking up a main transmitter-receiver; or may also be equivalently understood as: waking up a main air interface communication unit. The above three expressions have the same meaning in the embodiments of the present application. In one possible design of this embodiment, waking up the main transceiver, may also be equivalently understood as: monitoring transmission of downlink data or data frames through the main transceiver; or may also be equivalently understood as: monitoring a control channel used to schedule uplink data or downlink data or data frames through the main transceiver. The above three expressions have the same meaning in the embodiments of the present application.

In one possible design of this embodiment, not waking up the main transceiver, may also be equivalently understood as: maintaining the main transceiver in a turn-off state; or may also be equivalently understood as: maintaining the main transceiver in a DRX monitoring state. The above three expressions have the same meaning in the embodiments of the present application.

In one possible design of this embodiment, the second power-saving signal for indicating wake-up and the second power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In one possible design of this embodiment, the second transmitting module 2620 is configured to, after the first receiver is woken up, transmit the second power-saving signal to the first receiver.

The first receiver receives the second power-saving signal in a case of being woken up, demodulates the second power-saving signal, and transmits the corresponding content to the main transceiver, indicating whether to wake up the main transceiver.

In one possible design of this embodiment, after the first receiver is woken up, which may also be equivalently understood as that: after the first receiver enters a state of monitoring the transmission of downlink data or data frames; or may also be equivalently understood as that: after the first receiver enters a state of monitoring the control channel used to schedule uplink data or downlink data or data frames. The above three expressions have the same meaning in the embodiments of the present application.

In one possible design of this embodiment, the first receiver monitors the second power-saving signal based on a DRX cycle; and in response to having monitored the second power-saving signal associated with a first DRX cycle, maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The first receiver monitors the second power-saving signals based on a DRX cycle; and in response to having monitored a second power-saving signal associated with a first DRX cycle, maintains the main transceiver in a wake-up state during an active time period in the first DRX cycle, according to a wake-up indication carried by the second power-saving signal, or maintains the main transceiver in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The first receiver monitors the second power-saving signal based on a DRX cycle; in response to having monitored the second power-saving signal associated with a first DRX cycle, maintains the main transceiver in a wake-up state during an active time period in the first DRX cycle, according to an indication of the second power-saving signal associated with the first DRX cycle; and in response to having not monitored the second power-saving signal associated with the first DRX cycle, maintains the main transceiver in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, the second power-saving signal is a signal received by the electronic apparatus through the main transceiver.

In one possible design of this embodiment, the second power-saving signal is a signal monitored by the electronic apparatus based on a DRX cycle; and in response to having monitored the second power-saving signal associated with a first DRX cycle, the electronic apparatus maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The main transceiver monitors the second power-saving signals based on a DRX cycle; and in response to having monitored a second power-saving signal associated with a first DRX cycle, the main transceiver is maintained in a wake-up state during an active time period in the first DRX cycle, according to a wake-up indication carried by the second power-saving signal, or the main transceiver is maintained in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The main transceiver monitors the second power-saving signal based on a DRX cycle; in response to having monitored the second power-saving signal associated with a first DRX cycle, the main transceiver is maintained in a wake-up state during an active time period in the first DRX cycle, according to an indication of the second power-saving signal associated with the first DRX cycle; and in response to having not monitored the second power-saving signal associated with the first DRX cycle, the main transceiver is maintained in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, maintaining the main transceiver in a wake-up state during the active time period in the first DRX cycle, may also be equivalently understood as: monitoring the transmission of downlink data or data frames through the main transceiver at all times during the active time period in the first DRX cycle; or may also be equivalently understood as: monitoring the control channel used to schedule uplink data or downlink data or data frames through the main transceiver at all times during the active time period in the first DRX cycle. The above three expressions have the same meaning in the embodiments of the present application.

Maintaining the main transceiver in a non-wake-up state during the active time period in the first DRX cycle, may also be equivalently understood as: not monitoring, by the main transceiver, the transmission of downlink data or data frames during the active time period in the first DRX cycle; or may also be equivalently understood as: not monitoring, by the main transceiver, the control channel used to schedule uplink data or downlink data or data frames during the active time period in the first DRX cycle. The above three expressions have the same meaning in the embodiments of the present application.

A DRX cycle includes "on duration" and "opportunity for DRX," in which during the on duration (the active time period), the electronic apparatus is in the wake-up state to receive data, and during the DRX opportunity, the electronic apparatus is in the sleep state to receive no data.

For example, the electronic apparatus monitors the second power-saving signal based on the DRX cycle; and in response to having monitored the second power-saving signal before the active time period in the first DRX cycle, where the second power-saving signal indicates that the main transceiver is to be in the wake-up state, maintains the main transceiver in the wake-up state during the active time period in the first DRX cycle.

In one possible design of this embodiment, the first power-saving signal further carries an identifier of a device to be woken up or an identifier of a device group to be woken up.

In one possible design of this embodiment, the second power-saving signal further carries an identifier of a device to be woken up or an identifier of a device group to be woken up.

The identifier of the device group to be woken up is also known as an ID of the device group to be woken up, which is the ID of the group to which a device to be woken up belongs. This group includes at least one device to be woken up.

Based on the ID of the device to be woken up or the ID of the device group to be woken up carried in the first power-saving signal or the second power-saving signal, it is determined whether to wake up the electronic apparatus. In response to that an ID of the electronic apparatus is the same as the ID of the device to be woken up, the electronic apparatus will be woken up; and in response to that the ID of the electronic apparatus is different from the ID of the device to be woken up, the electronic apparatus will not be woken up. In response to that a group ID of the electronic apparatus is the same as the ID of the device group to be woken up, the electronic apparatus will be woken up; and in response to that the group ID of the electronic apparatus is different from the ID of the group device to be woken up, the electronic apparatus will not be woken up.

In one possible design of this embodiment, the second power-saving signal further carries synchronization information used for synchronization of a wireless network and the electronic apparatus. The synchronization includes time-domain synchronization and/or frequency-domain synchronization. The wireless network includes at least one of a WiFi network, a cellular network, or a wireless power supply network.

In one possible design of this embodiment, the main transceiver is turned off by the electronic apparatus in response to a case where a first condition is met.

In one possible design of this embodiment, the first receiver is turned off by the electronic apparatus in response to a case where a second condition is met.

In one possible design of this embodiment, the first receiver and the main transceiver are turned off by the electronic apparatus in response to a case where a third condition is met.

In one possible design of this embodiment, the third transmitting module 2630 is configured to, in response to a case where the first receiver is in a wake-up state, transmit first information to the first receiver.

Here, the first information is used for communication between the electronic apparatus and a wireless network. The wireless network includes at least one of a WiFi network, a cellular network, or a wireless power supply network.

In one possible design of this embodiment, the first information includes: information used for communication between the first receiver and the wireless network.

In one possible design of this embodiment, the electronic apparatus is an active apparatus, where the active apparatus refers to an apparatus that has its own power supply and is capable of actively generating and transmitting signals, such as a mobile phone, a computer, a smartwatch, or a smart bracelet.

In one possible design of this embodiment, the electronic apparatus is a passive apparatus, where the passive apparatus refers to an apparatus that does not require a power supply or is capable of operating by receiving energy from other devices, which may be referred to as a zero-power apparatus, a low-power apparatus, or the like. The zero-power apparatus may be implemented as at least one of a zero-power device or a zero-power terminal, or as part of at least one of a zero-power device or a zero-power terminal. The low-power apparatus may be implemented as at least one of a low-power device or a low-power terminal, or as part of at least one of a low-power device or a low-power terminal.

In one possible design of this embodiment, the electronic apparatus obtains energy from an environment, which may be referred to as an ambient power-enabled IoT apparatus.

In one possible design of this embodiment, the electronic apparatus is deployed in a fixed location, which may be referred to as a zero-power apparatus, a low-power apparatus, or the like. The zero-power apparatus may be implemented as a zero-power station, or as part of a zero-power station. The low-power apparatus may be implemented as a low-power station, or as part of a low-power station.

In one possible design of this embodiment, in response to a case where the first receiver is in the wake-up state, the network apparatus or the power supply node 630 in the embodiment of FIG. 6 transmits first information to the first receiver, where the first information may be referred to as auxiliary information, assisting the electronic apparatus in quickly establishing a connection with the wireless network and completing communication after waking up the main transceiver.

In one possible design of this embodiment, the first information includes: information used for communication between the main transceiver and the wireless network. It may also be equivalently understood as follows: the first information includes: information used for communication between the main transmitter-receiver (or main air interface communication unit) and the wireless network.

In one possible design of this embodiment, the first information includes, but is not limited to, at least one of the following:
- configuration information used for receiving downlink data;
- configuration information used for receiving downlink control signaling;
- configuration information used for receiving a system broadcast;
- configuration information used for transmitting uplink data;
- configuration information used for transmitting uplink control signaling;
- synchronization information used for synchronization;
- configuration information used for receiving a second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The configuration information used for transmitting uplink data includes at least one of the following pieces of information: a time-domain position for transmitting the uplink data, a frequency position for transmitting the uplink data, or a period for transmitting the uplink data.

The configuration information used for transmitting uplink control signaling includes at least one of the following pieces of information: a time-domain position for transmitting the uplink control signaling, or a frequency position for transmitting the uplink control signaling.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network.

The configuration information used for receiving a second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In one possible design of this embodiment, a form of the frequency position includes: a channel form, a bandwidth form, a carrier form, or the like. For example, the downlink data is received on the first channel.

In one possible design of this embodiment, relevant information of the frequency position may enable the electronic apparatus to obtain the frequency position at which the main transceiver communicates with the wireless network through the first receiver, to avoid waking up the main transceiver and then obtaining the frequency position by frequency scanning, thereby reducing power consumption.

In one possible design of this embodiment, the first information is transmitted via a data frame; or the first information is transmitted via a beacon frame.

In one possible design of this embodiment, the network apparatus transmits the first information first, and then transmits the second power-saving signal.

In one possible design of this embodiment, the first information is carried in the second power-saving signal.

After waking up the first receiver, the network apparatus transmits the second power-saving signal. By receiving the second power-saving signal, the electronic apparatus may simultaneously obtain at least one of the following: the first information, the information on whether to wake up the main transceiver, or the synchronization information used for synchronization.

In one possible design of this embodiment, the electronic apparatus obtains configuration of the wireless network based on the content carried in the first information.

For example, in a case where the first information includes configuration information used for receiving downlink data, the main transceiver receives the downlink data based on information such as a time-domain position for receiving the downlink data and a frequency position for receiving the downlink data. Before receiving the downlink data, the main receiver may be maintained in a non-wake-up state as much as possible, thereby saving more power.

In a case where the first information includes configuration information used for receiving downlink control signaling, where the downlink control signaling is used to indicate relevant information for receiving downlink data, the main transceiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network. By receiving the configuration information in advance, the main transceiver may be in a non-wake-up state for a longer period of time, thereby reducing the power consumption of the electronic apparatus.

In a case where the first information includes configuration information used for receiving a system broadcast, the main transceiver receives the system broadcast of the wireless network based on information such as a time-domain position of a broadcast frame and a frequency position of the broadcast frame. By receiving the configuration information of the system broadcast in advance, the main receiver may be maintained in a non-wake-up state during both stages of receiving the system broadcast and obtaining the configuration information in the system broadcast, thereby saving more power.

In a case where the first information includes configuration information used for transmitting uplink data, the main transceiver transmits the uplink data based on information such as a time-domain position for transmitting the uplink data and a frequency position for transmitting the uplink data. Before receiving the uplink data, the main receiver may be maintained in a non-wake-up state as much as possible, thereby saving more power.

In a case where the first information includes configuration information used for transmitting uplink control signaling, where the uplink control signaling is used to provide feedback on whether downlink data has been received, the main transceiver monitors the uplink control signaling based on information such as a time-domain position for transmitting the uplink control signaling and a frequency position for transmitting the uplink control signaling. By receiving the configuration information in advance, the main transceiver may be in a non-wake-up state for a longer period of time, thereby reducing the power consumption of the electronic apparatus.

In a case where the first information includes synchronization information used for synchronization, the electronic apparatus, based on synchronization information for time-domain synchronization and/or synchronization information for frequency-domain synchronization, enables the main transceiver to attain the time-frequency synchronization with the wireless network, so that the main transceiver does not need to perform the time-frequency synchronization after being woken up.

In a case where the first information includes configuration information used for receiving the second power-saving signal, the main transceiver monitors or receives the second power-saving signal based on information such as a time-domain position for receiving the second power-saving signal and a frequency position for receiving the second power-saving signal. By receiving the configuration information in advance, the main transceiver may be in a non-wake-up state for a longer period of time, thereby reducing the power consumption of the electronic apparatus.

In a case where the first information includes capability information of the wireless network, the main transceiver communicates with the wireless network based on information such as a bit rate supported by the wireless network and an MCS supported by the wireless network, for example, communicating with the wireless network at a bit rate of 128 kilobits per second. Thus, the main transceiver does not need to read other content, such as a beacon frame, after being woken up, to obtain the capability information, thereby reducing the power consumption of the electronic apparatus.

After receiving the first information, the electronic apparatus establishes a connection or association with the network using the main transceiver, and then performs communication. The main transceiver uses communication protocols in the related technology, such as 802.11b and 802.11n, thereby enabling the electronic apparatus to communicate with network devices (such as APs) in the related technology.

Since the operating power consumption of the first receiver is lower than the operating power consumption of the main transceiver, receiving, by the first receiver, information communicated between the first receiver and the wireless network may reduce the power consumption of the electronic apparatus, compared to using the main transceiver to receive the above information.

In one possible design of this embodiment, the first information includes at least one of the following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving the second power-saving signal; or
capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network, so that the main transceiver does not need to perform the time-frequency synchronization after being woken up.

The configuration information used for receiving the first power-saving signal includes at least one of the following pieces of information: a time-domain position for receiving the first power-saving signal, or a frequency position for receiving the first power-saving signal.

The configuration information used for receiving the second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame, so the main transceiver does not need to read the beacon frame after being woken up, thus reducing the power consumption of the electronic apparatus.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In this embodiment, the description for the function of the first transmitting module 2610 may be referenced in the context of step 1710 in the embodiment of FIG. 17.

The description for the function of the second transmitting module 2620 may be referenced in the context of step 1730 in the embodiment of FIG. 18.

The description for the function of the third transmitting module 2630 may be referenced in the context of step 1720 in the embodiment of FIG. 18.

FIG. 27 illustrates a block diagram of an information transmission apparatus provided in an exemplary embodiment of the present application. The apparatus may be implemented as an electronic device or as part of an electronic device by software or hardware or a combination of both. The apparatus has a first receiver and a main transceiver, with operating power consumption of the first receiver lower than operating power consumption of the main transceiver. The apparatus includes a first receiving module 2710, a communication module 2720, and a second receiving module 2730.

The first receiving module 2710 is configured to, in response to a case where the first receiver is in a wake-up state, receive first information through the first receiver.

Here, the first information is used for communication between an electronic apparatus and a wireless network. The wireless network includes at least one of a WiFi network, a cellular network, or a wireless power supply network.

In one possible design of this embodiment, being in a wake-up state includes at least one of the following:
- constantly being in a wake-up state;
- periodically being in a wake-up state; or
- being in a wake-up state upon receiving the first power-saving signal.

Here, the first power-saving signal is used to indicate whether to wake up the first receiver. This design is described by way of example where the first receiver is constantly in a wake-up state.

In one possible design of this embodiment, the first information includes: information used for communication between the first receiver and the wireless network.

In one possible design of this embodiment, the electronic apparatus is an active apparatus, where the active apparatus refers to an apparatus that has its own power supply and is capable of actively generating and transmitting signals, such as a mobile phone, a computer, a smartwatch, or a smart bracelet.

In one possible design of this embodiment, the electronic apparatus is a passive apparatus, where the passive apparatus refers to an apparatus that does not require a power supply or is capable of operating by receiving energy from other devices, which may be referred to as a zero-power apparatus, a low-power apparatus, or the like. The zero-power apparatus may be implemented as at least one of a zero-power device or a zero-power terminal, or as part of at least one of a zero-power device or a zero-power terminal. The low-power apparatus may be implemented as at least one of a low-power device or a low-power terminal, or as part of at least one of a low-power device or a low-power terminal.

In one possible design of this embodiment, the electronic apparatus obtains energy from an environment, which may be referred to as an ambient power-enabled IoT apparatus.

In one possible design of this embodiment, the electronic apparatus is deployed in a fixed location, which may be referred to as a zero-power apparatus, a low-power apparatus, or the like. The zero-power apparatus may be implemented as a zero-power station, or as part of a zero-power station. The low-power apparatus may be implemented as a low-power station, or as part of a low-power station.

In one possible design of this embodiment, in response to a case where the first receiver is in the wake-up state, a network apparatus or the power supply node 630 in the embodiment of FIG. 6 transmits first information to the first receiver, where the first information may be referred to as auxiliary information, assisting the electronic apparatus in quickly establishing a connection with the wireless network and completing communication after waking up the main transceiver.

In one possible design of this embodiment, the first information includes: information used for communication between the main transceiver and the wireless network. It may also be equivalently understood as follows: the first information includes: information used for communication between the main transmitter-receiver (or main air interface communication unit) and the wireless network.

In one possible design of this embodiment, the first information includes, but is not limited to, at least one of the following:
- configuration information used for receiving downlink data;
- configuration information used for receiving downlink control signaling;
- configuration information used for receiving a system broadcast;
- configuration information used for transmitting uplink data;
- configuration information used for transmitting uplink control signaling;
- synchronization information used for synchronization;
- configuration information used for receiving a second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The configuration information used for transmitting uplink data includes at least one of the following pieces of information: a time-domain position for transmitting the uplink data, a frequency position for transmitting the uplink data, or a period for transmitting the uplink data.

The configuration information used for transmitting uplink control signaling includes at least one of the following pieces of information: a time-domain position for transmitting the uplink control signaling, or a frequency position for transmitting the uplink control signaling.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network.

The configuration information used for receiving a second power-saving signal includes at least one of the following pieces of information: a time-domain position for receiving the second power-saving signal, or a frequency position for receiving the second power-saving signal. The second power-saving signal is used to indicate whether to wake up the main transceiver.

The capability information of the wireless network includes at least one of the following pieces of information: a bit rate supported by the wireless network, or an MCS supported by the wireless network, and these pieces of information are generally carried in a beacon frame.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In one possible design of this embodiment, a form of the frequency position includes: a channel form, a bandwidth form, a carrier form, or the like. For example, the downlink data is received on the first channel.

In one possible design of this embodiment, relevant information of the frequency position may enable the electronic apparatus to obtain the frequency position at which the main transceiver communicates with the wireless network through the first receiver, to avoid waking up the main transceiver and then obtaining the frequency position by frequency scanning, thereby reducing power consumption.

In one possible design of this embodiment, the first information is transmitted via a data frame; or the first information is transmitted via a beacon frame.

In one possible design of this embodiment, the network apparatus transmits the first information first, and then transmits the second power-saving signal.

In one possible design of this embodiment, the first information is carried in the second power-saving signal.

After waking up the first receiver, the network apparatus transmits the second power-saving signal. By receiving the second power-saving signal, the electronic apparatus may simultaneously obtain at least one of the following: the first information, the information on whether to wake up the main transceiver, or the synchronization information used for synchronization.

In one possible design of this embodiment, the communication module 2720 is configured to, in response to a case where the main transceiver is in a wake-up state, perform communication with the wireless network based on the first information.

In response to the case where the main transceiver is in the wake-up state, the electronic apparatus obtains configuration of the wireless network based on the content carried in the first information.

For example, in a case where the first information includes configuration information used for receiving downlink data, the main transceiver receives the downlink data based on information such as a time-domain position for receiving the downlink data and a frequency position for receiving the downlink data. Before receiving the downlink data, the main receiver may be maintained in a non-wake-up state as much as possible, thereby saving more power.

In a case where the first information includes configuration information used for receiving downlink control signaling, where the downlink control signaling is used to indicate relevant information for receiving downlink data, the main transceiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network. By receiving the configuration information in advance, the main transceiver may be in a non-wake-up state for a longer period of time, thereby reducing the power consumption of the electronic apparatus.

In a case where the first information includes configuration information used for receiving a system broadcast, the main transceiver receives the system broadcast of the wireless network based on information such as a time-domain position of a broadcast frame and a frequency position of the broadcast frame. By receiving the configuration information of the system broadcast in advance, the main receiver may be maintained in a non-wake-up state during both stages of receiving the system broadcast and obtaining the configuration information in the system broadcast, thereby saving more power.

In a case where the first information includes configuration information used for transmitting uplink data, the main transceiver transmits the uplink data based on information such as a time-domain position for transmitting the uplink data and a frequency position for transmitting the uplink data. Before receiving the uplink data, the main receiver may be maintained in a non-wake-up state as much as possible, thereby saving more power.

In a case where the first information includes configuration information used for transmitting uplink control signaling, where the uplink control signaling is used to provide feedback on whether downlink data has been received, the main transceiver monitors the uplink control signaling based on information such as a time-domain position for transmitting the uplink control signaling and a frequency position for transmitting the uplink control signaling. By receiving the configuration information in advance, the main transceiver may be in a non-wake-up state for a longer period of time, thereby reducing the power consumption of the electronic apparatus.

In a case where the first information includes synchronization information used for synchronization, the electronic apparatus, based on synchronization information for time-domain synchronization and/or synchronization information for frequency-domain synchronization, enables the main transceiver to attain the time-frequency synchronization with the wireless network, so that the main transceiver does not need to perform the time-frequency synchronization after being woken up.

In a case where the first information includes configuration information used for receiving the second power-saving signal, the main transceiver monitors or receives the second power-saving signal based on information such as a time-domain position for receiving the second power-saving signal and a frequency position for receiving the second power-saving signal. By receiving the configuration information in advance, the main transceiver may be in a non-wake-up state for a longer period of time, thereby reducing the power consumption of the electronic apparatus.

In a case where the first information includes capability information of the wireless network, the main transceiver communicates with the wireless network based on information such as a bit rate supported by the wireless network and an MCS supported by the wireless network, for example, communicating with the wireless network at a bit rate of 128 kilobits per second. Thus, the main transceiver does not need to read other content, such as a beacon frame, after being woken up, to obtain the capability information, thereby reducing the power consumption of the electronic apparatus.

After receiving the first information, the electronic apparatus establishes a connection or association with the network using the main transceiver, and then performs communication. The main transceiver uses communication protocols in the related technology, such as 802.11b and 802.11n, thereby enabling the electronic apparatus to communicate with network devices (such as APs) in the related technology.

Since the operating power consumption of the first receiver is lower than the operating power consumption of the main transceiver, receiving, by the first receiver, information communicated between the first receiver and the wireless network may reduce the power consumption of the electronic apparatus, compared to using the main transceiver to receive the above information.

In one possible design of this embodiment, the first information includes at least one of the following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving the second power-saving signal; or
capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network, so that the main transceiver does not need to perform the time-frequency synchronization after being woken up.

The configuration information used for receiving the first power-saving signal includes at least one of the following pieces of information: a time-domain position for receiving the first power-saving signal, or a frequency position for receiving the first power-saving signal.

The configuration information used for receiving the second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame, so the main transceiver does not need to read the beacon frame after being woken up, thus reducing the power consumption of the electronic apparatus.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In one possible design of this embodiment, the first receiver communicates with the wireless network based on the content carried in the first information.

For example, in a case where the first information includes configuration information used for receiving downlink data, the first receiver receives the downlink data based on information such as a time-domain position for receiving the downlink data and a frequency position for receiving the downlink data.

In a case where the first information includes configuration information used for receiving downlink control signaling, where the downlink control signaling is used to indicate relevant information for receiving downlink data, the first receiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network.

In a case where the first information includes configuration information used for receiving a system broadcast, the first receiver receives the system broadcast of the wireless network based on information such as a time-domain position of a broadcast frame and a frequency position of the broadcast frame.

In a case where the first information includes synchronization information used for synchronization, the first receiver, based on synchronization information for time-domain synchronization and/or synchronization information for frequency-domain synchronization, enables the first receiver to attain the time-frequency synchronization with the wireless network.

In a case where the first information includes configuration information used for receiving the first power-saving signal, the first receiver monitors or receives the first power-saving signal based on information such as a time-domain position for receiving the first power-saving signal and a frequency position for receiving the first power-saving signal.

In a case where the first information includes configuration information used for receiving the second power-saving signal, the first receiver monitors or receives the second power-saving signal based on information such as a time-domain position for receiving the second power-saving signal and a frequency position for receiving the second power-saving signal.

In a case where the first information includes capability information of the wireless network, the first receiver communicates with the wireless network based on information such as a bit rate supported by the wireless network and an MCS supported by the wireless network, for example, communicating with the wireless network at a bit rate of 8 kilobits per second.

In one possible design of this embodiment, taking the wireless network as a WiFi network as an example, the first information includes at least one of the following pieces of information:
- timestamp information of the network when the network device communicates with the main transceiver;
- frequency position information of a communication channel used by the main transceiver during communication;
- time-domain position information of a beacon frame;
- capability information of the wireless network; or
- synchronization information used for synchronization.

In a case where the first information includes timestamp information of the network when the network apparatus communicates with the main transceiver, the electronic apparatus obtains the timestamp information in advance through the first receiver, so that the main transceiver may obtain the communication time of the network without reading the beacon frame after being woken up. Here, the main transceiver may be equivalently understood as a main transmitter-receiver or a main air interface communication unit.

In a case where the first information includes frequency position information of a communication channel used by the main transceiver during communication, the electronic apparatus adjusts an operating channel to that frequency position, to avoid waking up the main transceiver and then obtaining the frequency position of the operating channel through frequency scanning of the main transceiver.

In a case where the first information includes time-domain position information of a beacon frame, the electronic apparatus receives the beacon frame based on that time-domain position. For example, at a time-domain position of signal transmission of a non-beacon frame, the electronic apparatus turns off the main transceiver; and at a time-domain position of transmission of the beacon frame, the electronic apparatus turns on the main transceiver, thereby reducing power consumption. Moreover, considering the clock deviation of the electronic apparatus, the main transceiver may be turned on at a first time-domain position. The first time-domain position is a time-domain position with a time margin before the time-domain position of the transmission of the beacon frame, where the time margin may be adjusted according to the actual situation.

In a case where the first information includes capability information of the wireless network, since the capability information of the wireless network is generally carried in the beacon frame, it is possible to avoid the main transceiver reading the beacon frame after being woken up, thereby reducing the power consumption of the electronic apparatus.

In a case where the first information includes synchronization information used for synchronization, the first receiver attains the time-frequency synchronization with the wireless network, so that the main transceiver does not need to perform the time-frequency synchronization after being woken up.

In some embodiments, the first information includes downlink data, such as data with a data volume lower than a first threshold, or data with a transmission delay requirement lower than a first delay. The first threshold and the first delay are preset values or value ranges.

In one possible design of this embodiment, the first information is received through the first receiver. The first receiver receives data with a data volume lower than a first threshold, or data with a transmission delay requirement lower than a first delay, without needing to use the main transceiver for reception, further reducing the power consumption of the electronic apparatus.

In one possible design of this embodiment, the second receiving module 2730 is configured to receive a second power-saving signal, where the second power-saving signal is used to indicate whether to wake up the main transceiver.

In one possible design of this embodiment, waking up the main transceiver, may also be equivalently understood as: waking up a main transmitter-receiver; or may also be equivalently understood as: waking up a main air interface communication unit. The above three expressions have the same meaning in the embodiments of the present application. In one possible design of this embodiment, waking up the main transceiver, may also be equivalently understood as: monitoring transmission of downlink data or data frames through the main transceiver; or may also be equivalently understood as: monitoring a control channel used to schedule uplink data or downlink data or data frames through the main transceiver. The above three expressions have the same meaning in the embodiments of the present application.

In one possible design of this embodiment, not waking up the main transceiver, may also be equivalently understood as: maintaining the main transceiver in a turn-off state; or may also be equivalently understood as: maintaining the main transceiver in a DRX monitoring state. The above three expressions have the same meaning in the embodiments of the present application.

In one possible design of this embodiment, the second power-saving signal for indicating wake-up and the second power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In one possible design of this embodiment, the second receiving module 2730 is configured to, after the first receiver is woken up, receive the second power-saving signal through the first receiver.

The first receiver receives the second power-saving signal in a case of being woken up, demodulates the second power-saving signal, and transmits the corresponding content to the main transceiver, indicating whether to wake up the main transceiver.

In one possible design of this embodiment, after the first receiver is woken up, which may also be equivalently understood as that: after the first receiver enters a state of monitoring the transmission of downlink data or data frames; or may also be equivalently understood as that: after the first receiver enters a state of monitoring the control channel used to schedule uplink data or downlink data or data frames. The above three expressions have the same meaning in the embodiments of the present application.

In one possible design of this embodiment, the first receiver monitors the second power-saving signal based on a DRX cycle; and in response to having monitored the second power-saving signal associated with a first DRX cycle, maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The first receiver monitors the second power-saving signals based on a DRX cycle; and in response to having monitored a second power-saving signal associated with a first DRX cycle, maintains the main transceiver in a wake-up state during an active time period in the first DRX cycle, according to a wake-up indication carried by the second power-saving signal, or maintains the main transceiver in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The first receiver monitors the second power-saving signal based on a DRX cycle; in response to having monitored the second power-saving signal associated with a first DRX cycle, maintains the main transceiver in a wake-up state during an active time period in the first DRX cycle, according to an indication of the second power-saving signal associated with the first DRX cycle; and in response to having not monitored the second power-saving signal associated with the first DRX cycle, maintains the main transceiver in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, the second receiving module 2730 is configured to receive the second power-saving signal through the main transceiver.

Here, both the first receiver and the main transceiver are in a non-wake-up state.

In one possible design of this embodiment, the main transceiver monitors the second power-saving signal based on a DRX cycle; and in response to having monitored the second power-saving signal associated with a first DRX cycle, the main transceiver is maintained in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The main transceiver monitors the second power-saving signals based on a DRX cycle; and in response to having monitored a second power-saving signal associated with a first DRX cycle, the main transceiver is maintained in a wake-up state during an active time period in the first DRX cycle, according to a wake-up indication carried by the second power-saving signal, or the main transceiver is maintained in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The main transceiver monitors the second power-saving signal based on a DRX cycle; in response to having monitored the second power-saving signal associated with a first DRX cycle, the main transceiver is maintained in a wake-up state during an active time period in the first DRX cycle, according to an indication of the second power-saving signal associated with the first DRX cycle; and in response to having not monitored the second power-saving signal associated with the first DRX cycle, the main transceiver is maintained in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, maintaining the main transceiver in a wake-up state during the active time period in the first DRX cycle, may also be equivalently understood as: monitoring the transmission of downlink data or data frames through the main transceiver at all times during the active time period in the first DRX cycle; or may also be equivalently understood as: monitoring the control channel used to schedule uplink data or downlink data or data frames through the main transceiver at all times during the active time period in the first DRX cycle. The above three expressions have the same meaning in the embodiments of the present application.

Maintaining the main transceiver in a non-wake-up state during the active time period in the first DRX cycle, may also be equivalently understood as: not monitoring, by the main transceiver, the transmission of downlink data or data frames during the active time period in the first DRX cycle; or may also be equivalently understood as: not monitoring, by the main transceiver, the control channel used to schedule uplink data or downlink data or data frames during the active time period in the first DRX cycle. The above three expressions have the same meaning in the embodiments of the present application.

A DRX cycle includes "on duration" and "opportunity for DRX," in which during the on duration (the active time period), the electronic apparatus is in the wake-up state to receive data, and during the DRX opportunity, the electronic apparatus is in the sleep state to receive no data.

For example, the electronic apparatus monitors the second power-saving signal based on the DRX cycle; and in response to having monitored the second power-saving signal before the active time period in the first DRX cycle, where the second power-saving signal indicates that the main transceiver is to be in the wake-up state, maintains the main transceiver in the wake-up state during the active time period in the first DRX cycle.

In one possible design of this embodiment, the second power-saving signal further carries an identifier of a device to be woken up or an identifier of a device group to be woken up.

The identifier of the device group to be woken up is also known as an ID of the device group to be woken up, which is the ID of the group to which a device to be woken up belongs. This group includes at least one device to be woken up.

Based on the ID of the device to be woken up or the ID of the device group to be woken up carried in the second power-saving signal, it is determined whether to wake up the electronic apparatus. In response to that an ID of the electronic apparatus is the same as the ID of the device to be woken up, the electronic apparatus will be woken up; and in response to that the ID of the electronic apparatus is different from the ID of the device to be woken up, the electronic apparatus will not be woken up. In response to that a group ID of the electronic apparatus is the same as the ID of the device group to be woken up, the electronic apparatus will be woken up; and in response to that the group ID of the electronic apparatus is different from the ID of the group device to be woken up, the electronic apparatus will not be woken up.

In one possible design of this embodiment, the second power-saving signal further carries synchronization information used for synchronization of a wireless network and the electronic apparatus. The synchronization includes time-domain synchronization and/or frequency-domain synchronization. The wireless network includes at least one of a WiFi network, a cellular network, or a wireless power supply network.

In one possible design of this embodiment, the electronic apparatus has an energy harvesting module used to harvest ambient energy from an environment, where the ambient energy is used to supply power to the first receiver.

In this embodiment, the second receiving module 2730 may be divided into a plurality of receiving sub-modules, such as a first receiving sub-module and a second receiving sub-module. The first receiving sub-module is configured to, after the first receiver is woken up, receive the second power-saving signal through the first receiver, and the second receiving sub-module is configured to receive the second power-saving signal through the main transceiver; or the first receiving sub-module is configured to receive the second power-saving signal through the main transceiver, and the second receiving sub-module is configured to, after the first receiver is woken up, receive the second power-saving signal through the first receiver. This embodiment does not limit the functions of different receiving sub-modules.

This embodiment is described by way of example with one second receiving module 2730, and the number of second receiving modules 2730 is not limited.

The description for the function of the first receiving module 2710 may be referenced in the context of step 1910 in the embodiment of FIG. 19.

The description for the function of the communication module 2720 may be referenced in the content of step 1930 in the embodiment of FIG. 20.

The description for the function of the second receiving module 2730 may be referenced in the context of step 1920 in the embodiment of FIG. 20.

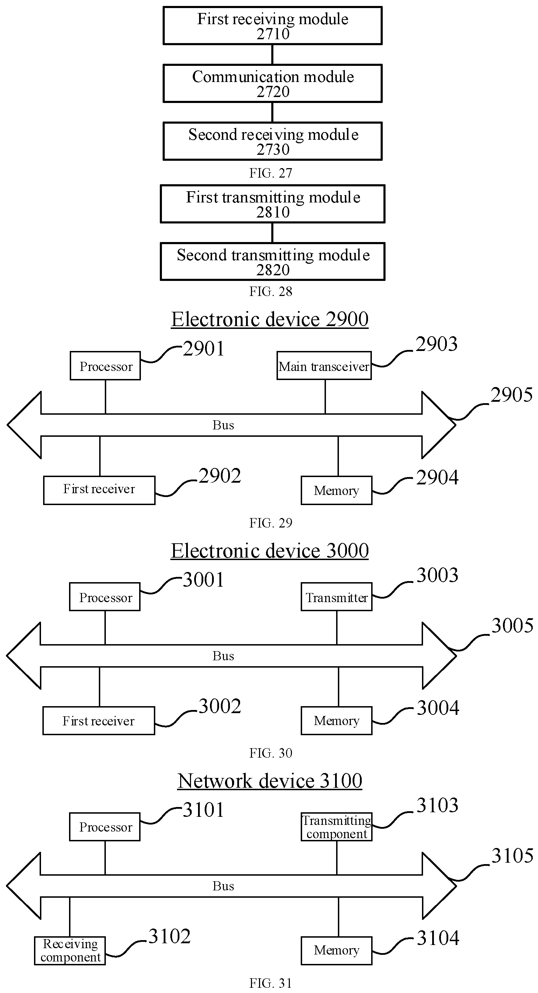

FIG. 28 illustrates a block diagram of an information transmission apparatus provided in an exemplary embodiment of the present application. The apparatus may be implemented as a network device or as part of a network device by software or hardware or a combination of both. The apparatus includes a first transmitting module 2810 and a second transmitting module 2820.

The first transmitting module 2810 is configured to, in response to a case where a first receiver is in a wake-up state, transmit first information to the first receiver.

Here, an electronic apparatus has the first receiver and a main transceiver, with operating power consumption of the first receiver lower than operating power consumption of the main transceiver. The first information is used for communication between the electronic apparatus and a wireless network. The wireless network includes at least one of a WiFi network, a cellular network, or a wireless power supply network.

In one possible design of this embodiment, being in a wake-up state includes at least one of the following:
- constantly being in a wake-up state;
- periodically being in a wake-up state; or
- being in a wake-up state upon receiving the first power-saving signal.

Here, the first power-saving signal is used to indicate whether to wake up the first receiver. This design is described by way of example where the first receiver is constantly in a wake-up state.

In one possible design of this embodiment, the first information includes: information used for communication between the first receiver and the wireless network.

In one possible design of this embodiment, the electronic apparatus is an active apparatus, where the active apparatus refers to an apparatus that has its own power supply and is capable of actively generating and transmitting signals, such as a mobile phone, a computer, a smartwatch, or a smart bracelet.

In one possible design of this embodiment, the electronic apparatus is a passive apparatus, where the passive apparatus refers to an apparatus that does not require a power supply or is capable of operating by receiving energy from other devices, which may be referred to as a zero-power apparatus, a low-power apparatus, or the like. The zero-power apparatus may be implemented as at least one of a zero-power device or a zero-power terminal, or as part of at least one of a zero-power device or a zero-power terminal. The low-power apparatus may be implemented as at least one of a low-power device or a low-power terminal, or as part of at least one of a low-power device or a low-power terminal.

In one possible design of this embodiment, the electronic apparatus obtains energy from an environment, which may be referred to as an ambient power-enabled IoT apparatus.

In one possible design of this embodiment, the electronic apparatus is deployed in a fixed location, which may be referred to as a zero-power apparatus, a low-power apparatus, or the like. The zero-power apparatus may be implemented as a zero-power station, or as part of a zero-power station. The low-power apparatus may be implemented as a low-power station, or as part of a low-power station.

In one possible design of this embodiment, in response to a case where the first receiver is in the wake-up state, a network apparatus or the power supply node 630 in the embodiment of FIG. 6 transmits first information to the first receiver, where the first information may be referred to as auxiliary information, assisting the electronic apparatus in quickly establishing a connection with the wireless network and completing communication after waking up the main transceiver.

In one possible design of this embodiment, the first information includes: information used for communication between the main transceiver and the wireless network. It may also be equivalently understood as follows: the first information includes: information used for communication between the main transmitter-receiver (or main air interface communication unit) and the wireless network.

In one possible design of this embodiment, the first information includes, but is not limited to, at least one of the following:
- configuration information used for receiving downlink data;
- configuration information used for receiving downlink control signaling;
- configuration information used for receiving a system broadcast;
- configuration information used for transmitting uplink data;
- configuration information used for transmitting uplink control signaling;
- synchronization information used for synchronization;
- configuration information used for receiving a second power-saving signal; or
- capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The configuration information used for transmitting uplink data includes at least one of the following pieces of information: a time-domain position for transmitting the uplink data, a frequency position for transmitting the uplink data, or a period for transmitting the uplink data.

The configuration information used for transmitting uplink control signaling includes at least one of the following pieces of information: a time-domain position for transmitting the uplink control signaling, or a frequency position for transmitting the uplink control signaling.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network.

The configuration information used for receiving a second power-saving signal includes at least one of the following pieces of information: a time-domain position for receiving the second power-saving signal, or a frequency position for receiving the second power-saving signal. The second power-saving signal is used to indicate whether to wake up the main transceiver.

The capability information of the wireless network includes at least one of the following pieces of information: a bit rate supported by the wireless network, or an MCS supported by the wireless network, and these pieces of information are generally carried in a beacon frame.

It will be noted that the examples of information provided above are not intended to limit the first information. The above first information has different names or definitions in different wireless networks. For example, cellular networks employ system information broadcast configuration information, and WiFi networks employ beacon frame broadcast configuration information, and so forth, which will not be described in detail one by one.

In one possible design of this embodiment, a form of the frequency position includes: a channel form, a bandwidth form, a carrier form, or the like. For example, the downlink data is received on the first channel.

In one possible design of this embodiment, relevant information of the frequency position may enable the electronic apparatus to obtain the frequency position at which the main transceiver communicates with the wireless network through the first receiver, to avoid waking up the main transceiver and then obtaining the frequency position by frequency scanning, thereby reducing power consumption.

In one possible design of this embodiment, the first information is transmitted via a data frame; or the first information is transmitted via a beacon frame.

In one possible design of this embodiment, the network apparatus transmits the first information first, and then transmits the second power-saving signal.

In one possible design of this embodiment, the first information is carried in the second power-saving signal.

After waking up the first receiver, the network apparatus transmits the second power-saving signal. By receiving the second power-saving signal, the electronic apparatus may simultaneously obtain at least one of the following: the first information, the information on whether to wake up the main transceiver, or the synchronization information used for synchronization.

In one possible design of this embodiment, the electronic apparatus obtains configuration of the wireless network based on the content carried in the first information.

For example, in a case where the first information includes configuration information used for receiving downlink data, the main transceiver receives the downlink data based on information such as a time-domain position for receiving the downlink data and a frequency position for receiving the downlink data. Before receiving the downlink data, the main receiver may be maintained in a non-wake-up state as much as possible, thereby saving more power.

In a case where the first information includes configuration information used for receiving downlink control signaling, where the downlink control signaling is used to indicate relevant information for receiving downlink data, the main transceiver monitors the downlink control signaling based on a time-domain position for receiving the downlink control signaling and a frequency position for receiving the downlink control signaling, and receives the downlink data according to the relevant information for receiving the downlink data indicated by the downlink control signaling, thereby communicating with the wireless network. By receiving the configuration information in advance, the main transceiver may be in a non-wake-up state for a longer period of time, thereby reducing the power consumption of the electronic apparatus.

In a case where the first information includes configuration information used for receiving a system broadcast, the main transceiver receives the system broadcast of the wireless network based on information such as a time-domain position of a broadcast frame and a frequency position of the broadcast frame. By receiving the configuration information of the system broadcast in advance, the main receiver may be maintained in a non-wake-up state during both stages of receiving the system broadcast and obtaining the configuration information in the system broadcast, thereby saving more power.

In a case where the first information includes configuration information used for transmitting uplink data, the main transceiver transmits the uplink data based on information such as a time-domain position for transmitting the uplink data and a frequency position for transmitting the uplink data. Before receiving the uplink data, the main receiver may be maintained in a non-wake-up state as much as possible, thereby saving more power.

In a case where the first information includes configuration information used for transmitting uplink control signaling, where the uplink control signaling is used to provide feedback on whether downlink data has been received, the main transceiver monitors the uplink control signaling based on information such as a time-domain position for transmitting the uplink control signaling and a frequency position for transmitting the uplink control signaling. By receiving the configuration information in advance, the main transceiver may be in a non-wake-up state for a longer period of time, thereby reducing the power consumption of the electronic apparatus.

In a case where the first information includes synchronization information used for synchronization, the electronic apparatus, based on synchronization information for time-domain synchronization and/or synchronization information for frequency-domain synchronization, enables the main transceiver to attain the time-frequency synchronization with the wireless network, so that the main transceiver does not need to perform the time-frequency synchronization after being woken up.

In a case where the first information includes configuration information used for receiving the second power-saving signal, the main transceiver monitors or receives the second power-saving signal based on information such as a time-domain position for receiving the second power-saving signal and a frequency position for receiving the second power-saving signal. By receiving the configuration information in advance, the main transceiver may be in a non-wake-up state for a longer period of time, thereby reducing the power consumption of the electronic apparatus.

In a case where the first information includes capability information of the wireless network, the main transceiver communicates with the wireless network based on information such as a bit rate supported by the wireless network and an MCS supported by the wireless network, for example, communicating with the wireless network at a bit rate of 128 kilobits per second. Thus, the main transceiver does not need to read other content, such as a beacon frame, after being woken up, to obtain the capability information, thereby reducing the power consumption of the electronic apparatus.

After receiving the first information, the electronic apparatus establishes a connection or association with the network using the main transceiver, and then performs communication. The main transceiver uses communication protocols in the related technology, such as 802.11b and 802.11n, thereby enabling the electronic apparatus to communicate with network devices (such as APs) in the related technology.

Since the operating power consumption of the first receiver is lower than the operating power consumption of the main transceiver, receiving, by the first receiver, information communicated between the first receiver and the wireless network may reduce the power consumption of the electronic apparatus, compared to using the main transceiver to receive the above information.

In one possible design of this embodiment, the first information includes at least one of the following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving the second power-saving signal; or
capability information of the wireless network.

Here, the configuration information used for receiving downlink data includes at least one of the following pieces of information: a time-domain position for receiving the downlink data, a frequency position for receiving the downlink data, or a cycle for receiving the downlink data.

The configuration information used for receiving downlink control signaling includes at least one of the following pieces of information: a time-domain position for receiving the downlink control signaling, a frequency position for receiving the downlink control signaling, a control resource set for monitoring the downlink control signaling, a search space set for monitoring the downlink control signaling, or an RNTI for monitoring the downlink control signaling.

The configuration information used for receiving a system broadcast includes at least one of the following pieces of information: a time-domain position of a broadcast frame, a frequency position of the broadcast frame, or a broadcast period of the broadcast frame.

The synchronization information used for synchronization includes at least one of the following pieces of information: synchronization information used for time-domain synchronization, or synchronization information used for frequency-domain synchronization, assisting the first receiver in attaining the time-frequency synchronization with the wireless network, so that the main transceiver does not need to perform the time-frequency synchronization after being woken up.

The configuration information used for receiving the first power-saving signal includes at least one of the following pieces of information: a time-domain position for receiving the first power-saving signal, or a frequency position for receiving the first power-saving signal.

The configuration information used for receiving the second power-saving signal includes at least one of the following pieces of information: a time-domain position for receiving the second power-saving signal, or a frequency position for receiving the second power-saving signal.

The capability information of the wireless network includes at least one of the following pieces of information: a bit rate supported by the wireless network, or an MCS supported by the wireless network, and these pieces of information are generally carried in a beacon frame, so the main transceiver does not need to read the beacon frame after being woken up, thus reducing the power consumption of the electronic apparatus.

In one possible design of this embodiment, in response to a case where the main transceiver is in a wake-up state, the electronic apparatus communicates with the wireless network based on the first information.

In one possible design of this embodiment, the second transmitting module 2820 is configured to transmit the second power-saving signal, where the second power-saving signal is used to indicate whether to wake up the main transceiver.

In one possible design of this embodiment, waking up the main transceiver, may also be equivalently understood as: waking up a main transmitter-receiver; or may also be equivalently understood as: waking up a main air interface communication unit. The above three expressions have the same meaning in the embodiments of the present application. In one possible design of this embodiment, waking up the main transceiver, may also be equivalently understood as: monitoring transmission of downlink data or data frames through the main transceiver; or may also be equivalently understood as: monitoring a control channel used to schedule uplink data or downlink data or data frames through the main transceiver. The above three expressions have the same meaning in the embodiments of the present application.

In one possible design of this embodiment, not waking up the main transceiver, may also be equivalently understood as: maintaining the main transceiver in a turn-off state; or may also be equivalently understood as: maintaining the main transceiver in a DRX monitoring state. The above three expressions have the same meaning in the embodiments of the present application.

In one possible design of this embodiment, the second power-saving signal for indicating wake-up and the second power-saving signal for indicating non-wake-up have at least one of the following:
- different waveforms;
- different modulation methods;
- different sequence lengths;
- different sequences;
- different frequency points used;
- different frequency ranges used; or
- different values of information bits carried.

For example, the first power-saving signal has a first sequence or a second sequence, where the first sequence is used to indicate that the first receiver is to be woken up, and the second sequence is used to indicate that the first receiver is not to be woken up. For example, the first sequence is a ZC sequence (Zadoff-Chu sequence) 1, which is used to indicate that the first receiver is to be woken up, and the second sequence is a ZC sequence 2, which is used to indicate that the first receiver is not to be woken up; and the embodiments of the present application impose no limitation thereon.

As another example, the first power-saving signal has a first sequence length or a second sequence length, where the first sequence length is used to indicate that the first receiver is to be woken up, and the second sequence length is used to indicate that the first receiver is not to be woken up. For example, the first sequence length is 16 bits, which is used to indicate that the first receiver is to be woken up, and the second sequence length is 8 bits, which is used to indicate that the first receiver is not to be woken up; or the first sequence length is 8 bits, which is used to indicate that the first receiver is to be woken up, and the second sequence length is 16 bits, which is used to indicate that the first receiver is not to be woken up; and the embodiments of the present application impose no limitation thereon.

In one possible design of this embodiment, the second transmitting module 2820 is configured to, after the first receiver is woken up, transmit the second power-saving signal to the first receiver.

The first receiver receives the second power-saving signal in a case of being woken up, demodulates the second power-saving signal, and transmits the corresponding content to the main transceiver, indicating whether to wake up the main transceiver.

In one possible design of this embodiment, after the first receiver is woken up, which may also be equivalently understood as that: after the first receiver enters a state of monitoring the transmission of downlink data or data frames; or may also be equivalently understood as that: after the first receiver enters a state of monitoring the control channel used to schedule uplink data or downlink data or data frames. The above three expressions have the same meaning in the embodiments of the present application.

In one possible design of this embodiment, the first receiver monitors the second power-saving signal based on a DRX cycle; and in response to having monitored the second power-saving signal associated with a first DRX cycle, maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The first receiver monitors the second power-saving signals based on a DRX cycle; and in response to having monitored a second power-saving signal associated with a first DRX cycle, maintains the main transceiver in a wake-up state during an active time period in the first DRX cycle, according to a wake-up indication carried by the second power-saving signal, or maintains the main transceiver in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The first receiver monitors the second power-saving signal based on a DRX cycle; in response to having monitored the second power-saving signal associated with a first DRX cycle, maintains the main transceiver in a wake-up state during an active time period in the first DRX cycle, according to an indication of the second power-saving signal associated with the first DRX cycle; and in response to having not monitored the second power-saving signal associated with the first DRX cycle, maintains the main transceiver in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, the second power-saving signal is a signal received by the electronic apparatus through the main transceiver.

In one possible design of this embodiment, the second power-saving signal is a signal monitored by the electronic apparatus based on a DRX cycle; and in response to having monitored the second power-saving signal associated with a first DRX cycle, the electronic apparatus maintains the main transceiver in a wake-up state or a non-wake-up state during an active time period in the first DRX cycle, according to an indication of the second power-saving signal associated with the first DRX cycle.

The second power-saving signal is transmitted using any one of the following two methods:
(1) Second power-saving signals are transmitted constantly, with each second power-saving signal carrying a wake-up indication or a non-wake-up indication.
   The main transceiver monitors the second power-saving signals based on a DRX cycle; and in response to having monitored a second power-saving signal associated with a first DRX cycle, the main transceiver is maintained in a wake-up state during an active time period in the first DRX cycle, according to a wake-up indication carried by the second power-saving signal, or the main transceiver is maintained in a non-wake-up state during the active time period in the first DRX cycle, according to a non-wake-up indication carried by the second power-saving signal.
(2) The second power-saving signal is transmitted on demand, indicating wake-up in a case of being transmitted and indicating no wake-up in a case of not being transmitted.

The main transceiver monitors the second power-saving signal based on a DRX cycle; in response to having monitored the second power-saving signal associated with a first DRX cycle, the main transceiver is maintained in a wake-up state during an active time period in the first DRX cycle, according to an indication of the second power-saving signal associated with the first DRX cycle; and in response to having not monitored the second power-saving signal associated with the first DRX cycle, the main transceiver is maintained in a non-wake-up state during the active time period in the first DRX cycle.

In one possible design of this embodiment, the second power-saving signal associated with the first DRX cycle may be transmitted before the active time period in the first DRX cycle or at an initial position of the active time period in the first DRX cycle.

In one possible design of this embodiment, maintaining the main transceiver in a wake-up state during the active time period in the first DRX cycle, may also be equivalently understood as: monitoring the transmission of downlink data or data frames through the main transceiver at all times during the active time period in the first DRX cycle; or may also be equivalently understood as: monitoring the control channel used to schedule uplink data or downlink data or data frames through the main transceiver at all times during the active time period in the first DRX cycle. The above three expressions have the same meaning in the embodiments of the present application.

Maintaining the main transceiver in a non-wake-up state during the active time period in the first DRX cycle, may also be equivalently understood as: not monitoring, by the main transceiver, the transmission of downlink data or data frames during the active time period in the first DRX cycle; or may also be equivalently understood as: not monitoring, by the main transceiver, the control channel used to schedule uplink data or downlink data or data frames during the active time period in the first DRX cycle. The above three expressions have the same meaning in the embodiments of the present application.

A DRX cycle includes "on duration" and "opportunity for DRX," in which during the on duration (the active time period), the electronic apparatus is in the wake-up state to receive data, and during the DRX opportunity, the electronic apparatus is in the sleep state to receive no data.

For example, the electronic apparatus monitors the second power-saving signal based on the DRX cycle; and in response to having monitored the second power-saving signal before the active time period in the first DRX cycle, where the second power-saving signal indicates that the main transceiver is to be in the wake-up state, maintains the main transceiver in the wake-up state during the active time period in the first DRX cycle.

In one possible design of this embodiment, the second power-saving signal further carries an identifier of a device to be woken up or an identifier of a device group to be woken up.

The identifier of the device group to be woken up is also known as an ID of the device group to be woken up, which is the ID of the group to which a device to be woken up belongs. This group includes at least one device to be woken up.

Based on the ID of the device to be woken up or the ID of the device group to be woken up carried in the second power-saving signal, it is determined whether to wake up the electronic apparatus. In response to that an ID of the electronic apparatus is the same as the ID of the device to be woken up, the electronic apparatus will be woken up; and in response to that the ID of the electronic apparatus is different from the ID of the device to be woken up, the electronic apparatus will not be woken up. In response to that a group ID of the electronic apparatus is the same as the ID of the device group to be woken up, the electronic apparatus will be woken up; and in response to that the group ID of the electronic apparatus is different from the ID of the group device to be woken up, the electronic apparatus will not be woken up.

In one possible design of this embodiment, the second power-saving signal further carries synchronization information used for synchronization of a wireless network and the electronic apparatus. The synchronization includes time-domain synchronization and/or frequency-domain synchronization. The wireless network includes at least one of a WiFi network, a cellular network, or a wireless power supply network.

In one possible design of this embodiment, the electronic apparatus has an energy harvesting module used to harvest ambient energy from an environment, where the ambient energy is used to supply power to the first receiver.

In this embodiment, the description for the function of the first transmitting module 2810 may be referenced in the context of step 2110 in the embodiment of FIG. 21.

The description for the function of the second transmitting module 2820 may be referenced in the context of step 2120 in the embodiment of FIG. 22.

FIG. 29 illustrates a schematic diagram of the structure of an electronic device 2900 provided in an exemplary embodiment of the present application, which includes: a processor 2901, a first receiver 2902, a main transceiver 2903, a memory 2904, and a bus 2905.

The processor 2901 includes one or more than one processing cores, and the processor 2901 executes various functional applications and information processing by running software programs and modules. In some embodiments, the processor 2901 may be configured to implement the function and step of at least one of the turn-off module 2330 or the turn-off module 2530.

The first receiver 2902 and the main transceiver 2903 may be implemented as a single communication component. This communication component may be one piece of communication chip, and may be referred to as a transceiver. In some embodiments, the first receiver 2902 may be configured to implement the function and step of at least one of the first receiving module 2310, the second receiving module 2320, the third receiving module 2340, the communication module 2350, the first receiving module 2510, the second receiving module 2520, the third receiving module 2540, the communication module 2550, the first receiving module 2710, the communication module 2720, or the second receiving module 2730; and the main transceiver 2903 may be configured to implement the function and step of at least one of the second receiving module 2320, the communication module 2350, the second receiving module 2520, the communication module 2550, the communication module 2720, or the second receiving module 2730.

In some embodiments, the electronic device 2900 further includes a second receiver, with operating power consumption of the second receiver lower than operating power consumption of the first receiver 2902. The electronic device 2900 receives the first power-saving signal through the second receiver.

In some embodiments, the second receiver and the first receiver 2902 are on the same chip or different chips and are connected by an electronic lead.

In some embodiments, the electronic device 2900 further includes a first circuit. The electronic device 2900 receives the first power-saving signal through the first circuit.

In some embodiments, the first circuit includes a wireless energy harvesting circuit of the electronic device 2900, or a peripheral circuit of the first receiver 2902.

The wireless energy harvesting circuit is used to harvest wireless energy. In a case where both the first receiver 2902 and the main transceiver 2903 are turned off, the wireless energy harvesting circuit still maintains an operating state thereof and continues to harvest wireless energy.

The memory 2904 is connected to the processor 2901 through the bus 2905.

The memory 2904 may be configured to store at least one instruction, and the processor 2901 is configured to execute the at least one instruction to implement the various steps in the above method embodiments.

Furthermore, the memory 2904 may be implemented as any type of volatile/transitory or non-volatile/transitory storage device or a combination thereof, where the volatile/transitory or non-volatile/transitory storage device includes but not limited to: a magnetic disk or optical disk, an electrically erasable programmable read-only memory (EEPROM), an erasable programmable read-only memory (EPROM), a static random access memory (SRAM), a read-only memory (ROM), a magnetic storage, a flash memory, or a programmable read-only memory (PROM).

In some embodiments, the first receiver 2902 independently performs signal/data reception, or the processor 2901 controls the first receiver 2902 to perform signal/data reception, or the processor 2901 requests the first receiver 2902 to perform signal/data reception, or the processor 2901 cooperates with the first receiver 2902 to perform signal/data reception.

In some embodiments, the main transceiver 2903 independently performs signal/data transmission, or the processor 2901 controls the main transceiver 2903 to perform signal/data transmission, or the processor 2901 requests the main transceiver 2903 to perform signal/data transmission, or the processor 2901 cooperates with the main transceiver 2903 to perform signal/data transmission.

FIG. 30 illustrates a schematic diagram of the structure of an electronic device 3000 provided in an exemplary embodiment of the present application, which includes: a processor 3001, a first receiver 3002, a transmitter 3003, a memory 3004, and a bus 3005.

The processor 3001 includes one or more than one processing cores, and the processor 3001 executes various functional applications and information processing by running software programs and modules. In some embodiments, the processor 3001 may be configured to implement the function and step of at least one of the turn-off module 2330 or the turn-off module 2530.

The first receiver 3002 and the transmitter 3003 may be implemented as a single communication component. This communication component may be one piece of communication chip, and may be referred to as a transceiver. In some embodiments, the first receiver 3002 may be configured to implement the function and step of at least one of the first receiving module 2310, the second receiving module 2320, the third receiving module 2340, the communication module 2350, the first receiving module 2510, the second receiving module 2520, the third receiving module 2540, the communication module 2550, the first receiving module 2710, the communication module 2720, or the second receiving module 2730; and the transmitter 3003 may be configured to implement the functions and steps of the communication module 2350, the communication module 2550, and the communication module 2720.

In some embodiments, the electronic device 3000 further includes a second receiver, with operating power consumption of the second receiver lower than operating power consumption of the first receiver 3002. The electronic device 3000 receives the first power-saving signal through the second receiver.

In some embodiments, the second receiver and the first receiver 3002 are on the same chip or different chips and are connected by an electronic lead.

In some embodiments, the electronic device 3000 further includes a first circuit. The electronic device 3000 receives the first power-saving signal through the first circuit.

In some embodiments, the first circuit includes a wireless energy harvesting circuit of the electronic device 3000, or a peripheral circuit of the first receiver 3002.

The wireless energy harvesting circuit is used to harvest wireless energy. In a case where the first receiver 3002 is turned off, the wireless energy harvesting circuit still maintains an operating state thereof and continues to harvest wireless energy.

The memory 3004 is connected to the processor 3001 through the bus 3005.

The memory 3004 may be configured to store at least one instruction, and the processor 3001 is configured to execute the at least one instruction to implement the various steps in the above method embodiments.

Furthermore, the memory 3004 may be implemented as any type of volatile/transitory or non-volatile/transitory storage device or a combination thereof, where the volatile/transitory or non-volatile/transitory storage device includes but not limited to: a magnetic disk or optical disk, an EEPROM, an EPROM, an SRAM, a ROM, a magnetic storage, a flash memory, or a PROM.

In some embodiments, the first receiver 3002 independently performs signal/data reception, or the processor 3001 controls the first receiver 3002 to perform signal/data reception, or the processor 3001 requests the first receiver 3002 to perform signal/data reception, or the processor 3001 cooperates with the first receiver 3002 to perform signal/data reception.

In some embodiments, the transmitter 3003 independently performs signal/data transmission, or the processor 3001 controls the transmitter 3003 to perform signal/data transmission, or the processor 3001 requests the transmitter 3003 to perform signal/data transmission, or the processor 3001 cooperates with the transmitter 3003 to perform signal/data transmission.

FIG. 31 illustrates a schematic diagram of the structure of a network device 3100 provided in an exemplary embodiment of the present application, which includes: a processor 3101, a receiving component 3102, a transmitting component 3103, a memory 3104, and a bus 3105.

The processor 3101 includes one or more than one processing cores, and the processor 3101 executes various functional applications and information processing by running software programs and modules. In some embodiments, the processor 3101 may be configured to implement the function and step of at least one of the turn-off module 2330 or the turn-off module 2530.

The receiving component 3102 and the transmitting component 3103 may be implemented as a single communication component. This communication component may be one piece of communication chip, and may be referred to as a transceiver. In some embodiments, the transmitting component 3103 may be configured to implement the function and step of at least one of the first transmitting module 2410, the second transmitting module 2420, the third transmitting module 2430, the first transmitting module 2610, the second transmitting module 2620, the third transmitting module 2630, the first transmitting module 2810, or the second transmitting module 2820.

The memory 3104 is connected to the processor 3101 through the bus 3105.

The memory 3104 may be configured to store at least one instruction, and the processor 3101 is configured to execute the at least one instruction to implement the various steps in the above method embodiments.

Furthermore, the memory 3104 may be implemented as any type of volatile/transitory or non-volatile/transitory storage device or a combination thereof, where the volatile/transitory or non-volatile/transitory storage device includes but not limited to: a magnetic disk or optical disk, an EEPROM, an EPROM, an SRAM, a ROM, a magnetic storage, a flash memory, or a PROM.

In some embodiments, the receiving component 3102 independently performs signal/data reception, or the processor 3101 controls the receiving component 3102 to perform signal/data reception, or the processor 3101 requests the receiving component 3102 to perform signal/data reception, or the processor 3101 cooperates with the receiving component 3102 to perform signal/data reception.

In some embodiments, the transmitting component 3103 independently performs signal/data transmission, or the processor 3101 controls the transmitting component 3103 to perform signal/data transmission, or the processor 3101 requests the transmitting component 3103 to perform signal/data transmission, or the processor 3101 cooperates with the transmitting component 3103 to perform signal/data transmission.

In an exemplary embodiment, a computer-readable storage medium is provided. The computer-readable storage medium has stored therein at least one program, where the at least one program is loaded and executed by a processor to implement the wake-up method for the receiver or the information transmission method provided in various method embodiments described above.

In an exemplary embodiment, a computer program product or computer program is provided. The computer program product or computer program, when run on a processor, enables the electronic device 2900, or the electronic device 3000, or the network device 3100 to perform the wake-up method for the receiver or the information transmission method provided in various method embodiments described above.

Those skilled in the art will understand that all or part of the steps of the above embodiments may be implemented by hardware or implemented by a program instructing relevant hardware, where the program may be stored in a computer-readable storage medium, and the aforementioned storage medium may be a read-only memory, a disk, or an optical disk.

The foregoing are merely optional embodiments of the present application and are not intended to limit the present application. Any modifications, equivalent substitutions, improvements, etc., made within the spirit and principles of the present application shall be included within the protection scope of the present application.

## Claims

1. A wake-up method for a receiver, the method being performed by an electronic device, the electronic device having a first receiver and a main transceiver, with operating power consumption of the first receiver lower than operating power consumption of the main transceiver, and the method comprising:
receiving a first power-saving signal, the first power-saving signal being used to indicate whether to wake up the first receiver; and
receiving a second power-saving signal, the second power-saving signal being used to indicate whether to wake up the main transceiver.

2. The method according to claim 1, wherein the first power-saving signal for indicating wake-up and the first power-saving signal for indicating non-wake-up have at least one of following:
different waveforms;
different modulation methods;
different sequence lengths;
different sequences;
different frequency points used;
different frequency ranges used; or
different values of information bits carried.

3. The method according to claim 1 or 2, wherein the first power-saving signal is a wake-up signal.

4. The method according to claim 1 or 2, wherein the first power-saving signal is a power supply signal.

5. The method according to any one of claims 1 to 4, wherein the first power-saving signal is transmitted by a network device or a power supply node.

6. The method according to any one of claims 1 to 5, wherein the electronic device further comprises a second receiver; and
receiving the first power-saving signal, comprises:
receiving, through the second receiver, the first power-saving signal;
wherein operating power consumption of the second receiver is lower than the operating power consumption of the first receiver.

7. The method according to any one of claims 1 to 5, wherein the electronic device further comprises a first circuit; and
receiving the first power-saving signal, comprises:
receiving, through the first circuit, the first power-saving signal.

8. The method according to claim 7, wherein the first circuit comprises a wireless energy harvesting circuit of the electronic device or a peripheral circuit of the first receiver.

9. The method according to any one of claims 1 to 5, wherein receiving the first power-saving signal, comprises:
receiving, through the first receiver, the first power-saving signal.

10. The method according to any one of claims 1 to 9, wherein receiving the second power-saving signal, comprises:
after the first receiver is woken up, receiving, through the first receiver, the second power-saving signal.

11. The method according to any one of claims 1 to 4, wherein receiving the second power-saving signal, comprises:
receiving, through the main transceiver, the second power-saving signal.

12. The method according to claim 11, wherein receiving the second power-saving signal, comprises:
monitoring the second power-saving signal based on a discontinuous reception (DRX) cycle; and in response to having monitored the second power-saving signal associated with a first DRX cycle, maintaining the main transceiver in a wake-up state or a non-wake-up state during an active time period in the first DRX cycle, according to an indication of the second power-saving signal associated with the first DRX cycle.

13. The method according to any one of claims 1 to 12, wherein the method further comprises:
in response to a case where a first condition is met, turning off the main transceiver.

14. The method according to claim 13, wherein the method further comprises:
in response to a case where a second condition is met, turning off the first receiver.

15. The method according to any one of claims 1 to 12, wherein the method further comprises:
in response to a case where a third condition is met, turning off the first receiver and the main transceiver.

16. The method according to any one of claims 1 to 15, wherein the method further comprises:
in response to a case where the first receiver is in a wake-up state, receiving, through the first receiver, first information;
wherein the first information is used for communication between the electronic device and a wireless network.

17. The method according to claim 16, wherein the first information comprises: information used for communication between the first receiver and the wireless network.

18. The method according to claim 17, wherein the first information comprises at least one of following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving the second power-saving signal; or
capability information of the wireless network.

19. The method according to claim 16, wherein the first information comprises: information used for communication between the main transceiver and the wireless network.

20. The method according to claim 19, wherein the first information comprises at least one of following:
configuration information used for receiving downlink data;
configuration information used for receiving downlink control signaling;
configuration information used for receiving a system broadcast;
configuration information used for transmitting uplink data;
configuration information used for transmitting uplink control signaling;
synchronization information used for synchronization;
configuration information used for receiving the second power-saving signal; or
capability information of the wireless network.

21. The method according to any one of claims 16 to 20, wherein
the first information is transmitted via a data frame; or
the first information is transmitted via a beacon frame.

22. The method according to any one of claims 16 to 20, wherein the method further comprises:
in response to a case where the main transceiver is in the wake-up state, performing communication with the wireless network based on the first information.

23. The method according to any one of claims 16 to 20, wherein the first information is carried in the second power-saving signal.

24. The method according to any one of claims 1 to 23, wherein the second power-saving signal further carries an identifier of a device to be woken up or an identifier of a device group to be woken up.

25. The method according to any one of claims 1 to 24, wherein the second power-saving signal further carries synchronization information, the synchronization information being used for synchronization between a wireless network and the electronic device.

26. The method according to any one of claims 1 to 5, wherein the first receiver uses a first receiver parameter, the first receiver parameter comprising a first receiver type and/or a first receiving bandwidth.

27. The method according to claim 26, wherein the first receiver type is a radio frequency (RF)-based receiver type.

28. The method according to claim 26 or 27, wherein receiving the first power-saving signal, comprises:
receiving the first power-saving signal within a first frequency band.

29. The method according to claim 28, wherein receiving the first power-saving signal within the first frequency band, comprises:
receiving the first power-saving signal on a first channel within the first frequency band.

30. The method according to claim 29, wherein
the first channel is any channel within the first frequency band; or
the first channel is a designated channel within the first frequency band; or
the first channel is a most central channel within the first frequency band; or
the first channel is one of two most central channels within the first frequency band.

31. A wake-up method for a receiver, the method being performed by an electronic device, the electronic device having a first receiver, and the method comprising:
receiving a first power-saving signal, the first power-saving signal being used to indicate whether to wake up the first receiver.

32. The method according to claim 31, wherein the first power-saving signal for indicating wake-up and the first power-saving signal for indicating non-wake-up have at least one of following:
different waveforms;
different modulation methods;
different sequence lengths;
different sequences;
different frequency points used;
different frequency ranges used; or
different values of information bits carried.

33. The method according to claim 31 or 32, wherein the first power-saving signal is a wake-up signal.

34. The method according to claim 31 or 32, wherein the first power-saving signal is a power supply signal.

35. The method according to any one of claims 31 to 34, wherein the first power-saving signal is transmitted by a network device or a power supply node.

36. The method according to any one of claims 31 to 35, wherein the electronic device further comprises a second receiver; and
receiving the first power-saving signal, comprises:
receiving, through the second receiver, the first power-saving signal;
wherein operating power consumption of the second receiver is lower than operating power consumption of the first receiver.

37. The method according to any one of claims 31 to 35, wherein the electronic device further comprises a first circuit; and
receiving the first power-saving signal, comprises:
receiving, through the first circuit, the first power-saving signal.

38. The method according to claim 37, wherein the first circuit comprises a wireless energy harvesting circuit of the electronic device or a peripheral circuit of the first receiver.

39. The method according to any one of claims 31 to 38, wherein the operating power consumption of the first receiver is lower than a preset threshold.

40. The method according to any one of claims 31 to 39, wherein receiving the first power-saving signal, comprises:
receiving, through the first receiver, the first power-saving signal.

41. The method according to any one of claims 31 to 40, wherein the electronic device is a passive device.

42. The method according to any one of claims 31 to 40, wherein the electronic device is an active device.

43. The method according to claim 41 or 42, wherein the electronic device has an energy harvesting module used to harvest ambient energy from an environment, the ambient energy being used to supply power to the first receiver.

44. The method according to claim 43, wherein the electronic device further comprises a main transceiver, operating power consumption of the first receiver is lower than operating power consumption of the main transceiver; and the method further comprises:
receiving a second power-saving signal, the second power-saving signal being used to indicate whether to wake up the main transceiver.

45. The method according to claim 44, wherein receiving the second power-saving signal, comprises:
after the first receiver is woken up, receiving, through the first receiver, the second power-saving signal.

46. The method according to claim 44, wherein receiving the second power-saving signal, comprises:
receiving, through the main transceiver, the second power-saving signal.

47. The method according to claim 46, wherein receiving the second power-saving signal comprises:
monitoring the second power-saving signal based on a discontinuous reception (DRX) cycle; and in response to having monitored the second power-saving signal associated with a first DRX cycle, maintaining the main transceiver in a wake-up state or a non-wake-up state during an active time period in the first DRX cycle, according to an indication of the second power-saving signal associated with the first DRX cycle.

48. The method according to any one of claims 44 to 47, wherein the method further comprises:
in response to a case where a first condition is met, turning off the main transceiver.

49. The method according to claim 48, wherein the method further comprises:
in response to a case where a second condition is met, turning off the first receiver.

50. The method according to any one of claims 44 to 47, wherein the method further comprises:
in response to a case where a third condition is met, turning off the first receiver and the main transceiver.

51. The method according to any one of claims 31 to 50, wherein the method further comprises:
in response to a case where the first receiver is in a wake-up state, receiving, through the first receiver, first information;
wherein the first information is used for communication between the electronic device and a wireless network.

52. The method according to claim 51, wherein the first information comprises: information used for communication between the first receiver and the wireless network.

53. The method according to claim 52, wherein the first information comprises at least one of following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving a second power-saving signal; or
capability information of the wireless network.

54. The method according to claim 51, wherein the first information comprises: information used for communication between a main transceiver and the wireless network.

55. The method according to claim 54, wherein the first information comprises at least one of following:
configuration information used for receiving downlink data;
configuration information used for receiving downlink control signaling;
configuration information used for receiving a system broadcast;
configuration information used for transmitting uplink data;
configuration information used for transmitting uplink control signaling;
synchronization information used for synchronization;
configuration information used for receiving a second power-saving signal; or
capability information of the wireless network.

56. The method according to any one of claims 51 to 55, wherein
the first information is transmitted via a data frame; or
the first information is transmitted via a beacon frame.

57. The method according to any one of claims 51 to 55, wherein the method further comprises:
in response to a case where a main transceiver is in the wake-up state, performing communication with the wireless network based on the first information.

58. The method according to any one of claims 51 to 55, wherein the first information is carried in a second power-saving signal.

59. The method according to any one of claims 44 to 58, wherein the second power-saving signal further carries an identifier of a device to be woken up or an identifier of a device group to be woken up.

60. The method according to any one of claims 44 to 59, wherein the second power-saving signal further carries synchronization information, the synchronization information being used for synchronization between a wireless network and the electronic device.

61. The method according to any one of claims 31 to 35, wherein the first receiver uses a first receiver parameter, the first receiver parameter comprising a first receiver type and/or a first receiving bandwidth.

62. The method according to claim 61, wherein the first receiver type is a radio frequency (RF)-based receiver type.

63. The method according to claim 61 or 62, wherein receiving the first power-saving signal, comprises:
receiving the first power-saving signal within a first frequency band.

64. The method according to claim 63, wherein receiving the first power-saving signal within the first frequency band, comprises:
receiving the first power-saving signal on a first channel within the first frequency band.

65. The method according to claim 64, wherein
the first channel is any channel within the first frequency band; or
the first channel is a designated channel within the first frequency band; or
the first channel is a most central channel within the first frequency band; or
the first channel is one of two most central channels within the first frequency band.

66. An information transmission method, the method being performed by an electronic device, the electronic device having a first receiver and a main transceiver, with operating power consumption of the first receiver lower than operating power consumption of the main transceiver, and the method comprising:
in response to a case where the first receiver is in a wake-up state, receiving, through the first receiver, first information;
wherein the first information is used for communication between the electronic device and a wireless network.

67. The method according to claim 66, wherein the first information comprises: information used for communication between the first receiver and the wireless network.

68. The method according to claim 67, wherein the first information comprises at least one of following:
configuration information used for receiving downlink data;
configuration information used for receiving downlink control signaling;
configuration information used for receiving a system broadcast;
synchronization information used for synchronization;
configuration information used for receiving a first power-saving signal;
configuration information used for receiving a second power-saving signal; or
capability information of the wireless network.

69. The method according to claim 66, wherein the first information comprises: information used for communication between the main transceiver and the wireless network.

70. The method according to claim 69, wherein the first information comprises at least one of following:
configuration information used for receiving downlink data;
configuration information used for receiving downlink control signaling;
configuration information used for receiving a system broadcast;
configuration information used for transmitting uplink data;
configuration information used for transmitting uplink control signaling;
synchronization information used for synchronization;
configuration information used for receiving a second power-saving signal;
capability information of the wireless network.

71. The method according to any one of claims 66 to 70, wherein
the first information is transmitted via a data frame; or
the first information is transmitted via a beacon frame.

72. The method according to any one of claims 66 to 71, wherein the method further comprises:
in response to a case where the main transceiver is in the wake-up state, performing communication with the wireless network based on the first information.

73. The method according to claim 72, wherein the method further comprises:
receiving a second power-saving signal, the second power-saving signal being used to indicate whether to wake up the main transceiver.

74. The method according to claim 73, wherein receiving the second power-saving signal, comprises:
after the first receiver is woken up, receiving, through the first receiver, the second power-saving signal.

75. The method according to claim 73, wherein receiving the second power-saving signal, comprises:
receiving, through the main transceiver, the second power-saving signal.

76. The method according to claim 75, wherein receiving the second power-saving signal, comprises:
monitoring the second power-saving signal based on a discontinuous reception (DRX) cycle; and in response to having monitored the second power-saving signal associated with a first DRX cycle, maintaining the main transceiver in a wake-up state or a non-wake-up state during an active time period in the first DRX cycle, according to an indication of the second power-saving signal associated with the first DRX cycle.

77. The method according to any one of claims 66 to 76, wherein the electronic device is a passive device.

78. The method according to any one of claims 66 to 76, wherein the electronic device is an active device.

79. The method according to claim 77 or 78, wherein the electronic device has an energy harvesting module used to harvest ambient energy from an environment, the ambient energy being used to supply power to the first receiver.

80. A wake-up method for a receiver, the method being performed by a network device, and the method comprising:
transmitting a first power-saving signal, the first power-saving signal being used to indicate whether to wake up a first receiver; and
transmitting a second power-saving signal, the second power-saving signal being used to indicate whether to wake up a main transceiver;
wherein an electronic device has the first receiver and the main transceiver, with operating power consumption of the first receiver lower than operating power consumption of the main transceiver.

81. The method according to claim 80, wherein the first power-saving signal for indicating wake-up and the first power-saving signal for indicating non-wake-up have at least one of following:
different waveforms;
different modulation methods;
different sequence lengths;
different sequences;
different frequency points used;
different frequency ranges used; or
different values of information bits carried.

82. The method according to claim 80 or 81, wherein the first power-saving signal is a wake-up signal.

83. The method according to claim 80 or 81, wherein the first power-saving signal is a power supply signal.

84. The method according to any one of claims 80 to 83, wherein the first power-saving signal is transmitted by the network device or a power supply node.

85. The method according to any one of claims 80 to 84, wherein the electronic device further comprises a second receiver, and the first power-saving signal is a signal received by the electronic device through the second receiver, with operating power consumption of the second receiver lower than the operating power consumption of the first receiver.

86. The method according to any one of claims 80 to 84, wherein the electronic device further comprises a first circuit, and the first power-saving signal is a signal received by the electronic device through the first circuit.

87. The method according to claim 86, wherein the first circuit comprises a wireless energy harvesting circuit of the electronic device or a peripheral circuit of the first receiver.

88. The method according to any one of claims 80 to 84, wherein the first power-saving signal is a signal received by the electronic device through the first receiver.

89. The method according to any one of claims 80 to 88, wherein transmitting the second power-saving signal, comprises:
after the first receiver is woken up, transmitting the second power-saving signal to the first receiver.

90. The method according to any one of claims 80 to 83, wherein the second power-saving signal is a signal received by the electronic device through the main transceiver.

91. The method according to claim 90, wherein the second power-saving signal is a signal monitored by the electronic device based on a discontinuous reception (DRX) cycle; and in response to having monitored the second power-saving signal associated with a first DRX cycle, the electronic device maintains the main transceiver in a wake-up state or a non-wake-up state during an active time period in the first DRX cycle, according to an indication of the second power-saving signal associated with the first DRX cycle.

92. The method according to any one of claims 80 to 91, wherein the main transceiver is turned off by the electronic device in response to a case where a first condition is met.

93. The method according to claim 92, wherein the first receiver is turned off by the electronic device in response to a case where a second condition is met.

94. The method according to any one of claims 80 to 91, wherein the first receiver and the main transceiver are turned off by the electronic device in response to a case where a third condition is met.

95. The method according to any one of claims 80 to 94, wherein the method further comprises:
in response to a case where the first receiver is in a wake-up state, transmitting first information to the first receiver;
wherein the first information is used for communication between the electronic device and a wireless network.

96. The method according to claim 95, wherein the first information comprises: information used for communication between the first receiver and the wireless network.

97. The method according to claim 96, wherein the first information comprises at least one of following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving the second power-saving signal; or
capability information of the wireless network.

98. The method according to claim 95, wherein the first information comprises: information used for communication between the main transceiver and the wireless network.

99. The method according to claim 98, wherein the first information comprises at least one of following:
configuration information used for receiving downlink data;
configuration information used for receiving downlink control signaling;
configuration information used for receiving a system broadcast;
configuration information used for transmitting uplink data;
configuration information used for transmitting uplink control signaling;
synchronization information used for synchronization;
configuration information used for receiving the second power-saving signal; or
capability information of the wireless network.

100. The method according to any one of claims 95 to 99, wherein
the first information is transmitted via a data frame; or
the first information is transmitted via a beacon frame.

101. The method according to any one of claims 95 to 99, wherein in response to a case where the main transceiver is in the wake-up state, the electronic device communicates with the wireless network based on the first information.

102. The method according to any one of claims 95 to 99, wherein the first information is carried in the second power-saving signal.

103. The method according to any one of claims 80 to 102, wherein the second power-saving signal further carries an identifier of a device to be woken up or an identifier of a device group to be woken up.

104. The method according to any one of claims 80 to 103, wherein the second power-saving signal further carries synchronization information, the synchronization information being used for synchronization between a wireless network and the electronic device.

105. The method according to any one of claims 80 to 84, wherein the first receiver uses a first receiver parameter, the first receiver parameter comprising a first receiver type and/or a first receiving bandwidth.

106. The method according to claim 105, wherein the first receiver type is a radio frequency (RF)-based receiver type.

107. The method according to claim 105 or 106, wherein transmitting the first power-saving signal, comprises:
transmitting the first power-saving signal within a first frequency band.

108. The method according to claim 107, wherein transmitting the first power-saving signal within the first frequency band, comprises:
transmitting the first power-saving signal on a first channel within the first frequency band.

109. The method according to claim 108, wherein
the first channel is any channel within the first frequency band; or
the first channel is a designated channel within the first frequency band; or
the first channel is a most central channel within the first frequency band; or
the first channel is one of two most central channels within the first frequency band.

110. A wake-up method for a receiver, the method being performed by a network device, and the method comprising:
transmitting a first power-saving signal, the first power-saving signal being used to indicate whether to wake up a first receiver;
wherein an electronic device has the first receiver.

111. The method according to claim 110, wherein the first power-saving signal for indicating wake-up and the first power-saving signal for indicating non-wake-up have at least one of following:
different waveforms;
different modulation methods;
different sequence lengths;
different sequences;
different frequency points used;
different frequency ranges used; or
different values of information bits carried.

112. The method according to claim 110 or 111, wherein the first power-saving signal is a wake-up signal.

113. The method according to claim 110 or 111, wherein the first power-saving signal is a power supply signal.

114. The method according to any one of claims 110 to 113, wherein the first power-saving signal is transmitted by the network device or a power supply node.

115. The method according to any one of claims 110 to 114, wherein the electronic device further comprises a second receiver, and the first power-saving signal is a signal received by the electronic device through the second receiver, with operating power consumption of the second receiver lower than operating power consumption of the first receiver.

116. The method according to any one of claims 110 to 114, wherein the electronic device further comprises a first circuit, and the first power-saving signal is a signal received by the electronic device through the first circuit.

117. The method according to claim 116, wherein the first circuit comprises a wireless energy harvesting circuit of the electronic device or a peripheral circuit of the first receiver.

118. The method according to any one of claims 110 to 117, wherein operating power consumption of the first receiver is lower than a preset threshold.

119. The method according to any one of claims 110 to 118, wherein the first power-saving signal is a signal received by the electronic device through the first receiver.

120. The method according to any one of claims 110 to 119, wherein the electronic device is a passive device.

121. The method according to any one of claims 110 to 119, wherein the electronic device is an active device.

122. The method according to claim 120 or 121, wherein the electronic device has an energy harvesting module used to harvest ambient energy from an environment, the ambient energy being used to supply power to the first receiver.

123. The method according to claim 122, wherein the electronic device further comprises a main transceiver, with operating power consumption of the first receiver lower than operating power consumption of the main transceiver; and the method further comprises:
transmitting a second power-saving signal, the second power-saving signal being used to indicate whether to wake up the main transceiver.

124. The method according to claim 123, wherein transmitting the second power-saving signal, comprises:
after the first receiver is woken up, transmitting the second power-saving signal to the first receiver.

125. The method according to claim 123, wherein the second power-saving signal is a signal received by the electronic device through the main transceiver.

126. The method according to claim 125, wherein the second power-saving signal is a signal monitored by the electronic device based on a discontinuous reception (DRX) cycle; and in response to having monitored the second power-saving signal associated with a first DRX cycle, the electronic device maintains the main transceiver in a wake-up state or a non-wake-up state during an active time period in the first DRX cycle, according to an indication of the second power-saving signal associated with the first DRX cycle.

127. The method according to any one of claims 123 to 126, wherein the main transceiver is turned off by the electronic device in response to a case where a first condition is met.

128. The method according to claim 127, wherein the first receiver is turned off by the electronic device in response to a case where a second condition is met.

129. The method according to any one of claims 123 to 126, wherein the first receiver and the main transceiver are turned off by the electronic device in response to a case where a third condition is met.

130. The method according to any one of claims 110 to 129, wherein the method further comprises:
in response to a case where the first receiver is in a wake-up state, transmitting first information to the first receiver;
wherein the first information is used for communication between the electronic device and a wireless network.

131. The method according to claim 130, wherein the first information comprises: information used for communication between the first receiver and the wireless network.

132. The method according to claim 131, wherein the first information comprises at least one of following:
configuration information used for receiving downlink data;
configuration information used for receiving downlink control signaling;
configuration information used for receiving a system broadcast;
synchronization information used for synchronization;
configuration information used for receiving the first power-saving signal;
configuration information used for receiving a second power-saving signal; or
capability information of the wireless network.

133. The method according to claim 130, wherein the first information comprises: information used for communication between a main transceiver and the wireless network.

134. The method according to claim 133, wherein the first information comprises at least one of following:
configuration information used for receiving downlink data;
configuration information used for receiving downlink control signaling;
configuration information used for receiving a system broadcast;
configuration information used for transmitting uplink data;
configuration information used for transmitting uplink control signaling;
synchronization information used for synchronization;
configuration information used for receiving a second power-saving signal; or
capability information of the wireless network.

135. The method according to any one of claims 130 to 134, wherein
the first information is transmitted via a data frame; or
the first information is transmitted via a beacon frame.

136. The method according to any one of claims 130 to 134, wherein in response to a case where a main transceiver is in the wake-up state, the electronic device communicates with the wireless network based on the first information.

137. The method according to any one of claims 130 to 134, wherein the first information is carried in a second power-saving signal.

138. The method according to any one of claims 123 to 137, wherein the second power-saving signal further carries an identifier of a device to be woken up or an identifier of a device group to be woken up.

139. The method according to any one of claims 123 to 137, wherein the second power-saving signal further carries synchronization information, the synchronization information being used for synchronization between a wireless network and the electronic device.

140. The method according to any one of claims 110 to 114, wherein the first receiver uses a first receiver parameter, the first receiver parameter comprising a first receiver type and/or a first receiving bandwidth.

141. The method according to claim 140, wherein the first receiver type is a radio frequency (RF)-based receiver type.

142. The method according to claim 140 or 141, wherein transmitting the first power-saving signal, comprises:
transmitting the first power-saving signal within a first frequency band.

143. The method according to claim 142, wherein transmitting the first power-saving signal within the first frequency band, comprises:
transmitting the first power-saving signal on a first channel within the first frequency band.

144. The method according to claim 143, wherein
the first channel is any channel within the first frequency band; or
the first channel is a designated channel within the first frequency band; or
the first channel is a most central channel within the first frequency band; or
the first channel is one of two most central channels within the first frequency band.

145. An information transmission method, the method being performed by a network device, and the method comprising:
in response to a case where a first receiver is in a wake-up state, transmitting first information to the first receiver;
wherein an electronic device has the first receiver and a main transceiver, with operating power consumption of the first receiver lower than operating power consumption of the main transceiver, and the first information is used for communication between the electronic device and a wireless network.

146. The method according to claim 145, wherein the first information comprises: information used for communication between the first receiver and the wireless network.

147. The method according to claim 146, wherein the first information comprises at least one of following:
configuration information used for receiving downlink data;
configuration information used for receiving downlink control signaling;
configuration information used for receiving a system broadcast;
synchronization information used for synchronization;
configuration information used for receiving a first power-saving signal;
configuration information used for receiving a second power-saving signal; or
capability information of the wireless network.

148. The method according to claim 145, wherein the first information comprises: information used for communication between the main transceiver and the wireless network.

149. The method according to claim 148, wherein the first information comprises at least one of following:
configuration information used for receiving downlink data;
configuration information used for receiving downlink control signaling;
configuration information used for receiving a system broadcast;
configuration information used for transmitting uplink data;
configuration information used for transmitting uplink control signaling;
synchronization information used for synchronization;
configuration information used for receiving a second power-saving signal;
capability information of the wireless network.

150. The method according to any one of claims 145 to 149, wherein
the first information is transmitted via a data frame; or
the first information is transmitted via a beacon frame.

151. The method according to any one of claims 145 to 150, wherein in response to a case where the main transceiver is in the wake-up state, the electronic device communicates with the wireless network based on the first information.

152. The method according to claim 151, wherein the method further comprises:
transmitting a second power-saving signal, the second power-saving signal being used to indicate whether to wake up the main transceiver.

153. The method according to claim 152, wherein transmitting the second power-saving signal, comprises:
after the first receiver is woken up, transmitting the second power-saving signal to the first receiver.

154. The method according to claim 152, wherein the second power-saving signal is a signal received by the electronic device through the main transceiver.

155. The method according to claim 154, wherein the second power-saving signal is a signal monitored by the electronic device based on a discontinuous reception (DRX) cycle; and in response to having monitored the second power-saving signal associated with a first DRX cycle, the electronic device maintains the main transceiver in a wake-up state or a non-wake-up state during an active time period in the first DRX cycle, according to an indication of the second power-saving signal associated with the first DRX cycle.

156. The method according to any one of claims 145 to 155, wherein the electronic device is a passive device.

157. The method according to any one of claims 145 to 155, wherein the electronic device is an active device.

158. The method according to claim 156 or 157, wherein the electronic device has an energy harvesting module used to harvest ambient energy from an environment, the ambient energy being used to supply power to the first receiver.

159. An electronic apparatus, the apparatus having a first receiver and a main transceiver, with operating power consumption of the first receiver lower than operating power consumption of the main transceiver, and the apparatus comprising:
a first receiving module, configured to receive a first power-saving signal, the first power-saving signal being used to indicate whether to wake up the first receiver; and
a second receiving module, configured to receive a second power-saving signal, the second power-saving signal being used to indicate whether to wake up the main transceiver.

160. An electronic apparatus, the apparatus having a first receiver, and the apparatus comprising:
a first receiving module, configured to receive a first power-saving signal, the first power-saving signal being used to indicate whether to wake up the first receiver.

161. An electronic apparatus, the apparatus having a first receiver and a main transceiver, with operating power consumption of the first receiver lower than operating power consumption of the main transceiver, and the apparatus comprising:
a first receiving module, configured to, in response to a case where the first receiver is in a wake-up state, receive first information through the first receiver;
wherein the first information is used for communication between the electronic apparatus and a wireless network.

162. A network apparatus, the apparatus comprising:
a first transmitting module, configured to transmit a first power-saving signal, the first power-saving signal being used to indicate whether to wake up a first receiver; and
a second transmitting module, configured to transmit a second power-saving signal, the second power-saving signal being used to indicate whether to wake up a main transceiver;
wherein an electronic apparatus has the first receiver and the main transceiver, with operating power consumption of the first receiver lower than operating power consumption of the main transceiver.

163. A network apparatus, the apparatus comprising:
a first transmitting module, configured to transmit a first power-saving signal, the first power-saving signal being used to indicate whether to wake up a first receiver;
wherein an electronic apparatus has the first receiver.

164. A network apparatus, the apparatus comprising:
a first transmitting module, configured to, in response to a case where a first receiver is in a wake-up state, transmit first information to the first receiver;
wherein an electronic apparatus has the first receiver and a main transceiver, with operating power consumption of the first receiver lower than operating power consumption of the main transceiver, and the first information is used for communication between the electronic apparatus and a wireless network.

165. An electronic device, comprising:
a processor;
a transceiver connected to the processor; and
a memory for storing executable instructions for the processor;
wherein the processor is configured to load and execute the executable instructions to implement the wake-up method for the receiver according to any one of claims 1 to 30, or the wake-up method for the receiver according to any one of claims 31 to 65, or the information transmission method according to any one of claims 66 to 79.

166. A network device, comprising:
a processor;
a transceiver connected to the processor; and
a memory for storing executable instructions for the processor;
wherein the processor is configured to load and execute the executable instructions to implement the wake-up method for the receiver according to any one of claims 80 to 109, or the wake-up method for the receiver according to any one of claims 110 to 144, or the information transmission method according to any one of claims 145 to 158.

167. A computer-readable storage medium, wherein the computer-readable storage medium has stored therein at least one program, the at least one program being loaded and executed by a processor to implement the wake-up method for the receiver according to any one of claims 1 to 30, or the wake-up method for the receiver according to any one of claims 31 to 65, or the information transmission method according to any one of claims 66 to 79, or the wake-up method for the receiver according to any one of claims 80 to 109, or the wake-up method for the receiver according to any one of claims 110 to 144, or the information transmission method according to any one of claims 145 to 158.

168. A computer program product, wherein the computer program product comprises computer instructions stored in a computer-readable storage medium, a processor retrieves the computer instructions from the computer-readable storage medium, and the processor executes the computer instructions to implement the wake-up method for the receiver according to any one of claims 1 to 30, or the wake-up method for the receiver according to any one of claims 31 to 65, or the information transmission method according to any one of claims 66 to 79, or the wake-up method for the receiver according to any one of claims 80 to 109, or the wake-up method for the receiver according to any one of claims 110 to 144, or the information transmission method according to any one of claims 145 to 158.
